# EUROPEAN PATENT APPLICATION

(11) **EP 4 322 657 A1**
(43) Date of publication of application: **14.02.2024**
(21) Application number: 21938571.3
(22) Date of filing: 30.04.2021
(51) Int. Cl.: H04W 72/04

(54) **INFORMATION TRANSMISSION METHOD, SYSTEM, AND APPARATUS**

(71) Applicant: Huawei Technologies Co., Ltd., Longgang Shenzhen, Guangdong 518129 (CN)
(72) Inventor: XU, Yishan, Shenzhen, Guangdong 518129 (CN); ZHU, Hualin, Shenzhen, Guangdong 518129 (CN); ZHU, Haoren, Shenzhen, Guangdong 518129 (CN); ZHOU, Yu, Shenzhen, Guangdong 518129 (CN)
(74) Representative: Maiwald GmbH
(86) International application number: PCT/CN2021/091786
(87) International publication number: WO 2022/227098

(57) **Abstract**

Embodiments of this application disclose an information transmission method and system, and an apparatus. The method includes: A network device receives a first passive internet of things instruction, and sends the first passive internet of things instruction to a terminal. The first passive internet of things instruction is an instruction to be sent to a tag, and the terminal is a helper of the tag. The passive internet of things instruction to be sent to the tag is sent to the terminal that serves as the helper of the tag, so that the terminal can send the passive internet of things instruction to the tag. In this manner, a dedicated spectrum channel between a reader/writer and the helper is not needed, thereby helping ensure reliable transmission of the passive internet of things instruction.

## Description

### TECHNICAL FIELD

This application relates to the field of communication technologies, and in particular, to an information transmission method and system, and an apparatus.

### BACKGROUND

A passive internet of things (passive internet of things, passive IoT) system includes: a passive tag (tag), a reader/writer, and a helper (helper). The passive tag needs to receive and send information by receiving an excitation signal sent by the helper.

Currently, in the passive IoT system, passive IoT information to be sent to the passive tag is sent by the reader/writer to the helper through a passive IoT dedicated spectrum, and then the helper sends the passive IoT information to the passive tag while sending the excitation signal to the passive tag.

However, as passive IoT dedicated spectrum resources are scarce, this may result in low reliability of transmitting the passive IoT information.

### SUMMARY

Embodiments of this application provide an information transmission method and system, and an apparatus, to send, to a terminal that serves as a helper of a tag, a passive internet of things instruction to be sent to the tag, so that the terminal can send the passive internet of things instruction to the tag. In this manner, a dedicated spectrum channel between a reader/writer and the helper is not needed, thereby helping ensure reliable transmission of the passive internet of things instruction.

According to a first aspect, an embodiment of this application provides an information transmission method. The method may be performed by a network device, or may be performed by a chip used in the network device. The method includes: The network device receives a first passive internet of things instruction, and sends the first passive internet of things instruction to a terminal. The first passive internet of things instruction is an instruction to be sent to a tag, and the terminal is a helper of the tag.

In this technical solution, the passive internet of things instruction to be sent to the tag is sent to the terminal that serves as the helper of the tag, so that the terminal can send the passive internet of things instruction to the tag. In this manner, a dedicated spectrum channel between a reader/writer and the helper is not needed, thereby helping ensure reliable transmission of the passive internet of things instruction. In addition, as the helper, the terminal may use a spectrum of a cellular network, and may further integrate a function of the helper, so that the helper or the terminal has more abundant functions.

In an implementation, the method further includes: The network device learns that the terminal is a helper.

In this technical solution, it is determined that the terminal is the helper, so that the terminal that serves as the helper of the tag can be determined. Before sending information (for example, the first passive internet of things instruction) to the tag, the helper first sends an excitation signal to the tag, and then sends the first passive internet of things instruction to the tag, so that the tag can receive the first passive internet of things instruction based on the excitation signal. This manner helps ensure that the tag can successfully receive the first passive internet of things instruction.

In an implementation, the network device is an access network device that serves the terminal. That the network device learns that the terminal is a helper includes: The network device receives first indication information from the terminal or a mobility management network element that serves the terminal, where the first indication information indicates that the terminal is the helper.

In an implementation, the network device is a mobility management network element that serves the terminal. That the network device learns that the terminal is a helper includes: The network device receives, from a unified data management network element, information indicating that the terminal is the helper. Alternatively, the network device receives second indication information from the terminal, where the second indication information indicates that the terminal is the helper.

In an implementation, the second indication information is included in a registration message or an N2 message.

In an implementation, the method further includes: The network device determines that the helper of the tag is the terminal.

In an implementation, the first passive internet of things instruction received by the network device is included in a first message, and the first message further includes identification information or address information of the tag; and that the network device determines that the helper of the tag is the terminal includes: The network device determines, based on the identification information or the address information of the tag, that the helper of the tag is the terminal.

In an implementation, the method further includes: The network device receives, via control plane signaling of the tag, first information from an access network device that serves the terminal, where the first information indicates that there is a correspondence between the terminal and the tag, the correspondence is for determining that the terminal is the helper of the tag, and the network device is a mobility management network element that serves the terminal. Alternatively, the network device receives first information from a mobility management network element or a session management function network element that serves the terminal, where the network device is a user plane function network element or a passive internet of things network element.

In an implementation, the first information includes identification information of the terminal and identification information of the tag; and/or the first information includes address information of the terminal and address information of the tag.

In an implementation, the network device is a mobility management network element that serves the terminal, a user plane function network element, or a passive internet of things network element. The first passive internet of things instruction received by the network device is included in a first message, and the first message further includes identification information of an access network device. The terminal is one or more of terminals served by the access network device.

In an implementation, the network device is the user plane function network element or the passive internet of things network element. The method further includes: The network device receives second information from the mobility management network element that serves the terminal, where the second information indicates that the access network device serves the terminal.

In an implementation, the network device is the access network device that serves the terminal. The method further includes: The network device receives a response to the first passive internet of things instruction from the tag, where the response includes identification information of the tag. The network device sends, via control plane signaling of the tag, the response to the mobility management network element that serves the terminal.

In this technical solution, the access network device sends, via the control plane signaling of the tag, the response to the AMF network element that serves the terminal, so that the AMF network element can learn that the response is from the tag. Further, the AMF network element may continue to send the response to an RFID-H network element, the RFID-H network element may send the response to a NEF network element, and the NEF network element may send the response to a passive internet of things server. When the first passive internet of things instruction is an inventory instruction, in this manner, the passive internet of things server may learn that the tag is successfully inventoried.

In an implementation, the control plane signaling of the tag includes non-access stratum signaling of the tag. The method further includes: If the tag is inventoried or scanned for the first time, the network device sends a registration request message to the mobility management network element, where the registration request message requests to establish a non-access stratum connection for the tag. The network device receives a registration accept message from the mobility management network element, where the registration accept message indicates that the non-access stratum connection is successfully established for the tag.

In an implementation, the network device is the access network device that serves the terminal or the mobility management network element that serves the terminal. That the network device sends the first passive internet of things instruction to a terminal includes: The network device sends the first passive internet of things instruction to the terminal via control plane signaling of the terminal.

In an implementation, the control plane signaling of the terminal indicates the terminal to send the first passive internet of things instruction to the tag.

In this technical solution, the terminal receives the first passive internet of things instruction via the control plane signaling of the terminal, and may learn that the first passive internet of things instruction is the instruction to be sent to the tag, so that the excitation signal and the first passive internet of things instruction may be sent to the tag. This manner helps ensure that the tag can successfully receive the first passive internet of things instruction.

In an implementation, the control plane signaling includes radio resource control signaling or non-access stratum signaling.

In an implementation, the network device is the user plane function network element or the passive internet of things network element. The first passive internet of things instruction received by the network device is included in a first packet, and a destination address of the first packet is an address of the tag. The first passive internet of things instruction sent by the network device to the terminal is included in a second packet, and a destination address of the second packet is an address of the terminal.

In an implementation, that the network device sends the first passive internet of things instruction to a terminal includes: The network device sends the first passive internet of things instruction to the terminal through a user plane channel of the terminal.

In an implementation, the first passive internet of things instruction is carried in a passive internet of things message.

According to a second aspect, an embodiment of this application provides another information transmission method. The method is performed by a communication apparatus. The communication apparatus may be a terminal, or may be a chip used in the terminal. The method includes: The communication apparatus receives a first passive internet of things instruction from a network device, where the first passive internet of things instruction is an instruction to be sent to a tag. The communication apparatus sends an excitation signal and the first passive internet of things instruction to the tag.

In this technical solution, the communication apparatus is a helper of the tag. Before sending information (for example, the first passive internet of things instruction) to the tag, the helper first sends the excitation signal to the tag, and then sends the first passive internet of things instruction to the tag, so that the tag can receive the first passive internet of things instruction based on the excitation signal. This manner helps ensure that the tag can successfully receive the first passive internet of things instruction.

In an implementation, the method further includes: The communication apparatus sends indication information to an access network device that serves the communication apparatus or a mobility management network element that serves the communication apparatus, where the indication information indicates that the communication apparatus is a helper.

In an implementation, the network device is the access network device that serves the communication apparatus or the mobility management network element that serves the communication apparatus. That the communication apparatus receives a first passive internet of things instruction from a network device includes: The communication apparatus receives the first passive internet of things instruction from the network device via control plane signaling of the communication apparatus.

In an implementation, the control plane signaling of the communication apparatus indicates the communication apparatus to send the first passive internet of things instruction to the tag.

In this technical solution, the communication apparatus receives the first passive internet of things instruction via the control plane signaling of the communication apparatus, and may learn that the first passive internet of things instruction is the instruction to be sent to the tag, so that the excitation signal and the first passive internet of things instruction may be sent to the tag. This manner helps ensure that the tag can successfully receive the first passive internet of things instruction.

In an implementation, the control plane signaling includes radio resource control signaling or non-access stratum signaling.

In an implementation, the network device is a user plane function network element or a passive internet of things network element. That the communication apparatus receives a first passive internet of things instruction from a network device includes: The communication apparatus receives the first passive internet of things instruction from the network device through a user plane channel of the communication apparatus.

In an implementation, the first passive internet of things instruction is carried in a passive internet of things message.

According to a third aspect, an embodiment of this application provides still another information transmission method. The method may be performed by a first unit, a second unit, and a third unit included in an access network (or an access network device), or may be performed by chips used in the first unit, the second unit, and the third unit. The method includes:

The second unit receives a first passive internet of things instruction, where the first passive internet of things instruction is an instruction to be sent to a tag.

The second unit sends the first passive internet of things instruction to the first unit.

The first unit sends a trigger instruction to the third unit, where the trigger instruction includes the first passive internet of things instruction and identification information of a terminal, and the terminal is a helper of the tag.

The third unit sends the first passive internet of things instruction to the terminal.

In an implementation, the method further includes: The first unit learns that the terminal is a helper.

In an implementation, that the first unit learns that the terminal is a helper includes: The first unit receives first indication information from the terminal, where the first indication information indicates that the terminal is the helper. Alternatively, the second unit receives first indication information from a mobility management network element that serves the terminal, and sends the first indication information to the first unit, where the first indication information indicates that the terminal is the helper. The first unit receives the first indication information from the second unit.

In an implementation, the method further includes: The first unit determines that the helper of the tag is the terminal.

In an implementation, the first passive internet of things instruction received by the second unit is included in a first message, and the first message further includes identification information of the tag. The method further includes: The second unit sends the identification information of the tag to the first unit. The first unit receives the identification information of the tag. The first unit determines, based on the identification information of the tag, that the helper of the tag is the terminal.

In an implementation, the method further includes: The first unit receives a response to the first passive internet of things instruction from the tag, where the response includes identification information of the tag. The first unit sends the response to the second unit. The second unit sends, via control plane signaling of the tag, the response to the mobility management network element that serves the terminal.

In an implementation, the control plane signaling of the tag includes non-access stratum signaling of the tag. The method further includes: If the tag is inventoried or scanned for the first time, the second unit sends a registration request message to the mobility management network element, where the registration request message requests to establish a non-access stratum connection for the tag. The second unit receives a registration accept message from the mobility management network element, where the registration accept message indicates that the non-access stratum connection is successfully established for the tag.

In an implementation, that the third unit sends the first passive internet of things instruction to a terminal includes: The third unit sends the first passive internet of things instruction to the terminal via control plane signaling of the terminal.

In an implementation, the control plane signaling of the terminal indicates the terminal to send the first passive internet of things instruction to the tag.

The first unit may be a DU or integrated into the DU, and the second unit may be a CU or integrated into the CU. Alternatively, both the first unit and the second unit are integrated into a CU.

According to a fourth aspect, an embodiment of this application provides a network device. The network device has some or all of functions of implementing the network device in the method examples in the first aspect. For example, the functions of the network device may have functions in some or all of embodiments of this application, or may have a function of independently implementing any embodiment of this application. The function may be implemented by hardware, or may be implemented by hardware by executing corresponding software. The hardware or the software includes one or more units or modules that correspond to the foregoing functions.

In an implementation, a structure of the network device may include a processing unit and a communication unit. The processing unit is configured to support the network device in performing a corresponding function in the foregoing method. The communication unit is configured to support communication between the network device and another device. The network device may further include a storage unit. The storage unit is configured to couple to the processing unit and a sending unit, and stores a computer program and data that are necessary for the network device.

In an implementation, the network device includes: the processing unit, configured to invoke the communication unit to receive a first passive internet of things instruction and send the first passive internet of things instruction to a terminal. The first passive internet of things instruction is an instruction to be sent to a tag, and the terminal is a helper of the tag.

In an example, the processing unit may be a processor, the communication unit may be a transceiver or a communication interface, and the storage unit may be a memory.

In an implementation, the network device includes: the processor, configured to invoke the transceiver to receive the first passive internet of things instruction and send the first passive internet of things instruction to the terminal. The first passive internet of things instruction is the instruction to be sent to the tag, and the terminal is the helper of the tag.

According to a fifth aspect, an embodiment of this application provides a communication apparatus. The communication apparatus has some or all of functions of implementing the terminal in the method examples in the second aspect. For example, the functions of the communication apparatus may have functions in some or all of embodiments of this application, or may have a function of independently implementing any embodiment of this application. The function may be implemented by hardware, or may be implemented by hardware by executing corresponding software. The hardware or the software includes one or more units or modules that correspond to the foregoing functions.

In an implementation, a structure of the communication apparatus may include a processing unit and a communication unit. The processing unit is configured to support the communication apparatus in performing a corresponding function in the foregoing method. The communication unit is configured to support communication between the communication apparatus and another device. The communication apparatus may further include a storage unit. The storage unit is configured to couple to the processing unit and a sending unit, and stores a computer program and data that are necessary for the communication apparatus.

In an implementation, the communication apparatus includes: the processing unit, configured to invoke the communication unit to receive a first passive internet of things instruction from a network device, where the first passive internet of things instruction is an instruction to be sent to a tag. The processing unit is further configured to invoke the communication unit to send an excitation signal and the first passive internet of things instruction to the tag.

In an example, the processing unit may be a processor, the communication unit may be a transceiver or a communication interface, and the storage unit may be a memory.

In an implementation, the communication apparatus includes: the processor, configured to invoke the transceiver to receive the first passive internet of things instruction from the network device, where the first passive internet of things instruction is the instruction to be sent to the tag. The processor is further configured to invoke the transceiver to send the excitation signal and the first passive internet of things instruction to the tag.

According to a sixth aspect, an embodiment of this application provides another communication apparatus. The communication apparatus has some or all of functions of implementing the first unit (or the second unit or the third unit) in the method examples in the third aspect. For example, the functions of the communication apparatus may have functions in some or all of embodiments of this application, or may have a function of independently implementing any embodiment of this application. The function may be implemented by hardware, or may be implemented by hardware by executing corresponding software. The hardware or the software includes one or more units or modules that correspond to the foregoing functions.

In an implementation, a structure of the communication apparatus may include a processing unit and a communication unit. The processing unit is configured to support the communication apparatus in performing a corresponding function in the foregoing method. The communication unit is configured to support communication between the communication apparatus and another device. The communication apparatus may further include a storage unit. The storage unit is configured to couple to the processing unit and a sending unit, and stores a computer program and data that are necessary for the communication apparatus.

In an implementation, the communication apparatus is a first unit in an access network, and the communication apparatus includes: the processing unit, configured to invoke the communication unit to receive a first passive internet of things instruction, where the first passive internet of things instruction is an instruction to be sent to a tag. The processing unit is further configured to invoke the communication unit to send a trigger instruction to a third unit in the access network, where the trigger instruction includes the first passive internet of things instruction and identification information of a terminal, and the terminal is a helper of the tag.

In an example, the processing unit may be a processor, the communication unit may be a transceiver or a communication interface, and the storage unit may be a memory.

In an implementation, the communication apparatus includes: the processor, configured to invoke the transceiver to receive the first passive internet of things instruction, where the first passive internet of things instruction is the instruction to be sent to the tag. The processor is further configured to invoke the transceiver to send the trigger instruction to the third unit in the access network, where the trigger instruction includes the first passive internet of things instruction and the identification information of the terminal, and the terminal is the helper of the tag.

In another implementation, the communication apparatus is a third unit in an access network, and the communication apparatus includes: the processing unit, configured to invoke the communication unit to receive a trigger instruction, where the trigger instruction includes a first passive internet of things instruction and identification information of a terminal, and the terminal is a helper of a tag. The processing unit is further configured to invoke the communication unit to send the first passive internet of things instruction to the terminal.

In an example, the processing unit may be a processor, the communication unit may be a transceiver or a communication interface, and the storage unit may be a memory.

In an implementation, the communication apparatus includes: the processor, configured to invoke the transceiver to receive the trigger instruction, where the trigger instruction includes the first passive internet of things instruction and the identification information of the terminal, and the terminal is the helper of the tag. The processor is further configured to invoke the transceiver to send the first passive internet of things instruction to the terminal.

According to a seventh aspect, an embodiment of this application provides an information transmission system. The system includes one or more of the access network device, the mobility management network element, the user plane function network element, the passive internet of things network element, the first unit, the second unit, and the third unit according to any one of the first aspect to the third aspect.

In an implementation, the system includes the passive internet of things network element and the mobility management network element that serves a terminal. The passive internet of things network element is configured to determine that the terminal is a helper of a tag, and send identification information of the terminal to the mobility management network element. The mobility management network element is configured to receive the identification information of the terminal from the passive internet of things network element.

In an implementation, the mobility management network element is further configured to send third information to the passive internet of things network element, where the third information indicates that there is a correspondence between the terminal and the tag. The passive internet of things network element is specifically configured to determine, based on the correspondence, that the terminal is the helper of the tag.

In an implementation, the mobility management network element is further configured to send fourth information to the passive internet of things network element, where the fourth information indicates an access network device that serves the terminal. The passive internet of things network element is further configured to: receive the fourth information; and
receive identification information of the access network device, and determine, based on the identification information of the access network device and the fourth information, that the terminal is the helper of the tag, where the terminal is one or more of terminals served by the access network device.

In an implementation, the system includes a session management function network element and the user plane function network element. The session management function network element is configured to request, from a mobility management network element that serves a terminal, identification information of the terminal and identification information of a tag corresponding to the terminal, and send the identification information of the terminal and the identification information of the tag corresponding to the terminal to the user plane function network element. The user plane function network element is configured to receive, from the session management function network element, the identification information of the terminal and the identification information of the tag corresponding to the terminal, and determine, based on the identification information of the terminal and the identification information of the tag corresponding to the terminal, that the terminal is a helper of the tag.

Alternatively, the system includes a session management function network element and the passive internet of things network element. The session management function network element is configured to request, from a mobility management network element that serves a terminal, identification information of the terminal and identification information of a tag corresponding to the terminal, and send the identification information of the terminal and the identification information of the tag corresponding to the terminal to the passive internet of things network element. The passive internet of things network element is configured to receive, from the session management function network element, the identification information of the terminal and the identification information of the tag corresponding to the terminal, and determine, based on the identification information of the terminal and the identification information of the tag corresponding to the terminal, that the terminal is a helper of the tag.

According to an eighth aspect, an embodiment of the present invention provides a computer-readable storage medium, where the computer-readable storage medium stores a computer program, and the computer program includes program instructions; and when the program instructions are executed, the method in the first aspect is performed.

According to a ninth aspect, an embodiment of the present invention provides a computer-readable storage medium, where the computer-readable storage medium stores a computer program, and the computer program includes program instructions; and when the program instructions are executed, the method in the second aspect is performed.

According to a tenth aspect, an embodiment of the present invention provides a computer-readable storage medium, where the computer-readable storage medium stores a computer program, and the computer program includes program instructions; and when the program instructions are executed, the method in the third aspect is performed.

According to an eleventh aspect, this application further provides a computer program product including a computer program. When the computer program product runs on a computer, the computer is enabled to perform the method in the first aspect.

According to a twelfth aspect, this application further provides a computer program product including a computer program. When the computer program product runs on a computer, the computer is enabled to perform the method in the second aspect.

According to a thirteenth aspect, this application further provides a computer program product including a computer program. When the computer program product runs on a computer, the computer is enabled to perform the method in the third aspect.

According to a fourteenth aspect, an embodiment of this application provides a chip system. The chip system includes at least one processor and an interface, and is configured to support a network device in implementing a function in the first aspect, for example, determining or processing at least one piece of data and information in the foregoing method. In a possible design, the chip system further includes a memory. The memory is configured to store a computer program and data that are necessary for the network device. The chip system may include a chip, or may include a chip and another discrete component.

According to a fifteenth aspect, an embodiment of this application provides another chip system. The chip system includes at least one processor and an interface, and is configured to support a terminal in implementing a function in the second aspect, for example, determining or processing at least one piece of data and information in the foregoing method. In a possible design, the chip system further includes a memory. The memory is configured to store a computer program and data that are necessary for the terminal device. The chip system may include a chip, or may include a chip and another discrete component.

According to a sixteenth aspect, an embodiment of this application provides still another chip system. The chip system includes at least one processor and an interface, and is configured to support a first unit, a second unit, or a third unit in an access network in implementing a function in the third aspect, for example, determining or processing at least one piece of data and information in the foregoing method. In a possible design, the chip system further includes a memory. The memory is configured to store a computer program and data that are necessary for the terminal device. The chip system may include a chip, or may include a chip and another discrete component.

### BRIEF DESCRIPTION OF DRAWINGS

FIG. 1a is a schematic diagram of an architecture of a passive internet of things system;
FIG. 1b is a schematic diagram of a tag inventory procedure;
FIG. 1c is a schematic diagram of an architecture of a 5G system;
FIG. 1d is a schematic diagram of a system architecture integrating a passive internet of things technology into a 5G network according to this application;
FIG. 1e is a schematic diagram of an architecture of a communication system to which an embodiment of this application is applied;
FIG. 2 is a schematic flowchart of an information transmission method according to an embodiment of this application;
FIG. 3a is a schematic flowchart of another information transmission method according to an embodiment of this application;
FIG. 3b is a schematic flowchart of a registration process of a terminal;
FIG. 3c is a schematic flowchart of another registration process of a terminal;
FIG. 3d is a schematic flowchart of establishing a NAS connection for a tag by an access network device;
FIG. 4 is a schematic flowchart of still another information transmission method according to an embodiment of this application;
FIG. 5a is a schematic flowchart of still another information transmission method according to an embodiment of this application;
FIG. 5b is a schematic flowchart of a registration process of a terminal;
FIG. 5c is a schematic flowchart of another registration process of a terminal;
FIG. 5d is a schematic flowchart of establishing a NAS connection for a tag by an access network device;
FIG. 6 is a schematic flowchart of still another information transmission method according to an embodiment of this application;
FIG. 7a is a schematic flowchart of still another information transmission method according to an embodiment of this application;
FIG. 7b is a schematic flowchart of learning of a correspondence between a tag and a helper by an RFID-H network element;
FIG. 8 is a schematic flowchart of still another information transmission method according to an embodiment of this application;
FIG. 9a is a schematic flowchart of still another information transmission method according to an embodiment of this application;
FIG. 9b is a schematic flowchart of learning of a correspondence 3 by a UPF network element;
FIG. 9c is a schematic flowchart of establishing a PDU session for a tag by an access network device;
FIG. 9d is a schematic diagram of a PDU session establishment procedure of a terminal;
FIG. 10a is a schematic flowchart of still another information transmission method according to an embodiment of this application;
FIG. 10b is a schematic flowchart of learning of a correspondence 3 by an RFID-H network element;
FIG. 10c is another schematic flowchart of learning of a correspondence 3 by an RFID-H network element;
FIG. 11 is a schematic diagram of a structure of a communication apparatus according to an embodiment of this application;
FIG. 12 is a schematic diagram of a structure of another communication apparatus according to an embodiment of this application; and
FIG. 13 is a schematic diagram of a structure of a chip according to an embodiment of this application.

### DESCRIPTION OF EMBODIMENTS

To better understand technical solutions provided in embodiments of this application, technical terms in embodiments of this application are first described.

### 1. Passive internet of things system

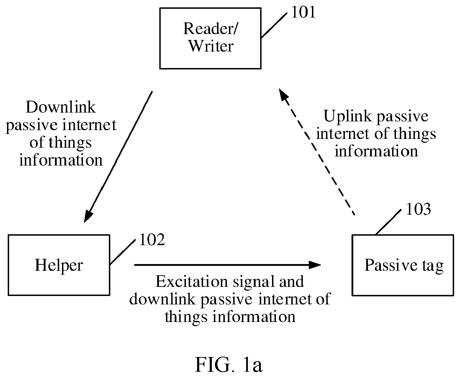

FIG. 1a is a diagram of an architecture of the passive internet of things system. As shown in FIG. 1a, downlink passive internet of things information to be sent to a passive tag 103 is sent by a reader/writer 101 to a helper (helper) 102 through a passive IoT dedicated spectrum, and then sent by the helper 102 to the passive tag 103 after the helper 102 sends an excitation signal to the passive tag 103, as shown by solid lines in FIG. 1a. Uplink passive internet of things information fed back by the passive tag 103 may be sent to the reader/writer 101 through a passive internet of things air interface, as shown by a dash line in FIG. 1a. The helper is configured to provide a data transmission channel and the excitation signal (or energy) for the passive tag. After receiving the excitation signal, the passive tag may generate an induced current, and then receive and send information by using energy obtained through the induced current. The reader/writer may also be referred to as a receiver.

It should be noted that the passive internet of things system may further include one or more of the following devices: a passive internet of things server (server) and middleware. The middleware is common services between passive internet of things hardware, an operating system, and an application. These services have standard program interfaces and protocols. For different operating systems and hardware platforms, there are multiple implementations that comply with interface and protocol specifications.

It should be further noted that, the passive internet of things system may include but is not limited to: a system using a radio frequency identification (Radio Frequency Identification, RFID) technology, a system using a passive internet of things technology, a system using a semi-active internet of things technology, and the like. In embodiments of this application, an example in which the passive internet of things system is an RFID system is used for description, but this does not constitute a limitation on embodiments of this application.

### 2. Tag inventory procedure and tag reading/writing procedure

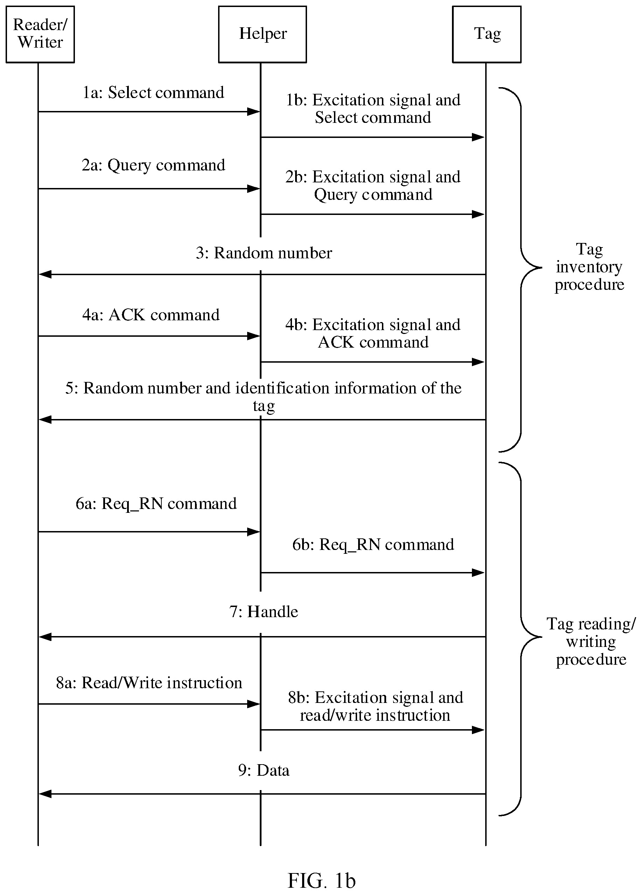

The tag inventory procedure may be inventorying which tags are within coverage of a reader/writer. As shown in FIG. 1b, the tag inventory procedure may include but is not limited to the following steps:
Step 1a: The reader/writer receives an inventory command from a passive internet of things server, generates a Select command, and sends the Select command to a helper, where the Select command carries identification information of a tag to be inventoried. It should be noted that the inventory command may be delivered to middleware by the passive internet of things server, and then delivered to the reader/writer by the middleware.
Step 1b: After receiving the Select command, the helper sends an excitation signal to a tag, and sends the Select command to the tag. It should be noted that in embodiments of this application, unless otherwise specified, before sending information to the tag, the helper needs to first send the excitation signal to the tag, so that the tag receives and sends information based on the received excitation signal.
Step 2a: The reader/writer sends a Query command to the helper.
Step 2b: After receiving the Query command, the helper sends an excitation signal to the tag, and sends the Query command to the tag.
Step 3: After obtaining the Select command through monitoring, the tag determines whether the tag is the tag to be inventoried (for example, determines whether identification information of the tag is included in the identification information that is of the tag to be inventoried and that is carried in the Select command). If the identification information of the tag is included in the identification information carried in the Select command, the tag feeds back a random number (for example, RN16) to the reader/writer after subsequently obtaining the Query command through monitoring, for example, feeds back the random number RN16 to the reader/writer in a contention manner. If the identification information of the tag is not included in the identification information carried in the Select command, the tag may subsequently perform no action.
Step 4a: After receiving the random number, the reader/writer sends an ACK command to the helper, where the ACK command carries the random number.
Step 4b: The helper sends an excitation signal to the tag, and forwards the ACK command to the tag.
Step 5: After receiving the ACK command, the tag verifies whether a random number in the ACK command is the same as the random number fed back by the tag; and if the random numbers are the same, the tag sends tag information of the tag and the random number to the reader/writer.

After receiving the random number and the identification information of the tag, the reader/writer learns that the tag is within the coverage of the reader/writer. In this way, the inventory procedure is completed.

The following describes the tag reading/writing procedure. The tag reading/writing procedure may be performing a write or read operation on a tag. If the write operation is performed, data is written into a storage area of the tag. If the read operation is performed, data in the storage area of the tag is read. It should be noted that the tag needs to be first inventoried, and the write or read operation is performed on the tag after a handle is obtained. As shown in FIG. 1b, the tag reading/writing procedure may include but is not limited to the following steps:
Step 6a: The reader/writer sends a Req_RN command to the helper, where the Req_RN command carries the random number RN16 previously received by the reader/writer. That the Req_RN command carries the random number RN16 indicates that the read or write operation needs to be performed on the tag that sends the random number RN16.
Step 6b: After receiving the Req_RN command, the helper sends an excitation signal to the tag, and sends the Req_RN command to the tag.
Step 7: After receiving the Req_RN command, the tag verifies whether the random number in the Req_RN command is the same as the random number fed back by the tag, where if the random numbers are the same, it indicates that the reader/writer needs to perform the read or write operation on the tag; and the tag sends the handle to the reader/writer. The handle may be for establishing a relationship between the tag and the helper, and a specific form of the handle may be a random number, an object, or a pointer.
Step 8a: The reader/writer sends a read or write command to the helper, where the read or write command carries the handle fed back by the tag. If the read or write command is a write instruction, data to be written into the storage area of the tag is further carried.
Step 8b: After receiving the read or write command, the helper sends an excitation signal to the tag, and sends the read or write command to the tag.
Step 9: If the read or write command is a read instruction in step 8a and step 8b, the tag sends the data in the storage area of the tag to the reader/writer, and includes the handle.

It should be noted that the inventorying and reading/writing on the tag in FIG. 1b are merely used as an example. In another implementation, only the inventorying may be performed on the tag, and the reading/writing is not performed.

### 3. Architecture of a 5th generation (5th generation, 5G) communication system

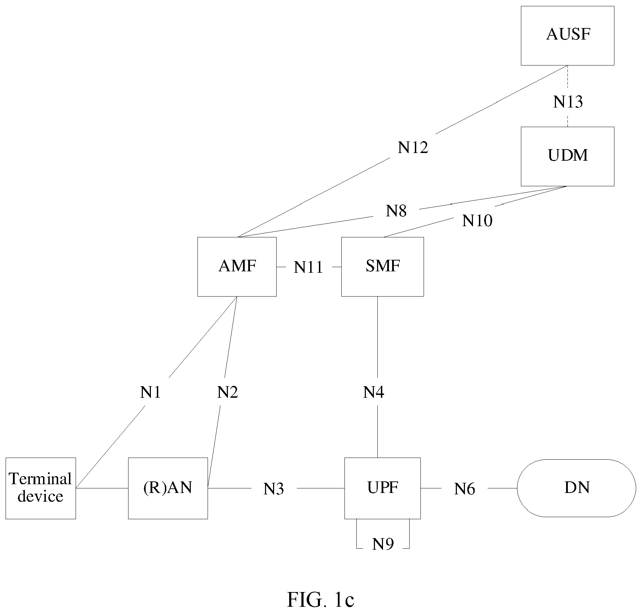

FIG. 1c is a schematic diagram of the architecture of the 5G system. The network architecture includes a terminal device, an access network (access network, AN) device, a core network element, and a data network (data network, DN).

The terminal device may be referred to as a user equipment (user equipment, UE), an access terminal, a subscriber unit, a subscriber station, a mobile station (mobile station, MS), a mobile terminal (mobile terminal, MT), a remote station, a remote terminal, a mobile device, a user terminal, a terminal, a wireless communication device, a user agent, or a user apparatus. The terminal device may be a device that provides a user with voice/data connectivity, for example, a handheld device, a vehicle-mounted device, or the like that has a wireless connection function. Currently, some examples of the terminal may be: a mobile phone (mobile phone), a tablet computer (pad), a computer (for example, a notebook computer, a palmtop computer, or the like) with a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a vehicle-mounted device, a wearable device, a terminal device in a 5G network, a terminal device in a future evolved public land mobile network (public land mobile network, PLMN), or the like.

In addition, the terminal device may alternatively be a terminal device in an internet of things (Internet of things, IoT) system. IoT is an important part of future information technology development. A main technical feature of the IoT is to connect a thing to a network by using a communication technology, to implement an intelligent network of man-machine interconnection and thing-thing interconnection. An IoT technology can implement massive connections, deep coverage, and terminal power saving by using, for example, a narrowband (narrowband, NB) technology.

In addition, the terminal device may include sensors such as an intelligent printer, a train detector, a gas station, and the like, and main functions include: collecting data (a function of some terminal devices), receiving control information and downlink data of a network device, sending an electromagnetic wave, and transmitting uplink data to the network device.

It should be understood that the terminal device may be any device that can access a network. The terminal device and the access network device may communicate with each other by using a specific air interface technology.

Optionally, the UE may serve as a base station. For example, the UE may serve as a scheduling entity that provides a sidelink signal between LTEs in V2X, D2D, or the like. For example, a cellular phone and an automobile communicate with each other via a sidelink signal. The cellular phone communicates with a smart home device without relaying a communication signal by a base station.

A core network is responsible for maintaining subscription data of a mobile network, and provides session management, mobility management, policy management, security authentication, and other functions for the LTE. The core network may include but is not limited to the following network elements: an access and mobility management function (access and mobility management function, AMF), an authentication server function (authentication server function, AUSF), a unified data management (unified data management, UDM), a session management function (session management function, SMF), and a user plane function (user plane function, UPF).

The AMF network element is a termination of non-access stratum (non-access stratum, NAS) signaling, and is mainly responsible for access authentication and mobility management of a user. The terminal device may communicate with the AMF via an N1 NAS message, and a communication message between the terminal device and the AMF may alternatively be forwarded via an N2 message of a RAN. The RAN communicates with the AMF via the N2 message.

The AUSF network element has an authentication service function, and is configured to process authentication requests for 3rd generation partnership project (3rd generation partnership project, 3GPP) access and non-3GPP access.

The UDM network element is configured to manage subscription information of the user and complete user authentication and authorization.

The SMF network element is responsible for session management, for example, user session establishment and deletion, and maintenance of a protocol data unit (protocol data unit, PDU) session context and user plane forwarding pipeline information, and the like.

The UPF network element is configured for user packet handling, such as forwarding, charging, and the like.

The DN is configured to provide a service for the terminal device, and may be a private network, for example, a local area network; may be an external network that is not controlled by an operator, for example, the Internet (Internet); or may be a dedicated network jointly deployed by operators, for example, a network that provides an IP multimedia subsystem (IP multimedia subsystem, IMS). The terminal device may access the DN through an established protocol data unit (protocol data unit, PDU) session.

The schematic diagram of the network architecture, namely, FIG. 1c, further includes interfaces between the network elements. For example, N2 represents an interface between the AMF network element and the RAN device.

In a future communication system, for example, a 6G communication system, the foregoing network element or device may still use a name of the network element or device in a 4G or 5G communication system, or have another name. A function of the network element or the device may be completed by one independent network element, or may be jointly completed by several network elements. This is not limited in embodiments of this application.

In actual deployment, network elements in the core network may be co-located. For example, the mobility management network element may be co-located with the session management network element. The session management network element may be co-located with the user plane network element. A network slice selection function network element, a policy control network element, and the unified data management network element may be co-located. When two network elements are co-located, interaction between the two network elements in embodiments of this application becomes an internal operation of a co-located network element or may be omitted.

### 4. System architecture integrating a passive internet of things technology with a 5G network

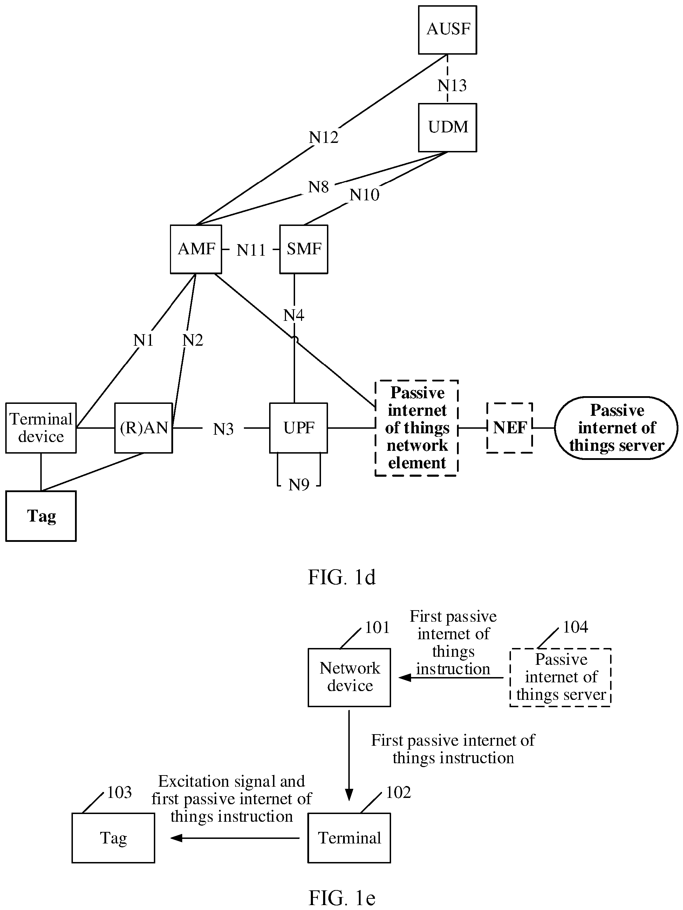

FIG. 1d is a schematic diagram of the system architecture integrating the passive internet of things technology with the 5G network according to this application. The architecture includes a tag, a terminal device, an access network device, core network elements, and a passive Internet of things server (server). The core network elements may further include a network exposure function (network exposure function, NEF) network element in addition to the core network elements shown in FIG. 1c, and optionally, may further include a passive internet of things network element.

The NEF network element may be configured to perform protocol conversion for interaction between an external network element and an internal network element, for example, perform protocol conversion for interaction between a 3GPP external network element (for example, the passive Internet of things server) and a 3GPP internal network element (for example, the SMF). A 3GPP network may be a network defined in a 3GPP protocol, for example, a mobile communication network, a public land mobile network (public land mobile network, PLMN), a non-public network (non-public network, NPN), or the like that include an access network, a core network, and a terminal device, and may be a 5th generation (5^{th} generation, 5G) communication network or a future evolved mobile communication network.

The passive internet of things network element may be configured to provide a function of middleware in a passive internet of things system. For example, the passive internet of things network element is configured to communicate with the passive internet of things server, and generate, according to an application layer instruction, an operation instruction that can be identified by a reader/writer or a helper.

It can be learned from FIG. 1d that there is an interface between the passive internet of things network element and each of the AMF network element and the UPF network element. This indicates that the AMF network element may communicate with the passive internet of things network element, and the UPF network element may communicate with the passive internet of things network element. The UPF network element may communicate with the passive internet of things network element through an N6 interface. Optionally, when the passive internet of things system is an RFID system, the passive internet of things network element may be referred to as an RFID-H (RFID-High) network element.

It can be learned from FIG. 1d that there is an interface between every two of the terminal device, a (R)AN, and the tag. To be specific, in the system architecture integrating the passive internet of things technology with the 5G network, the tag may no longer receive downlink passive internet of things information through a dedicated spectrum, but receive the downlink passive internet of things information from the terminal device through a cellular air interface. Uplink passive internet of things information sent by the tag may be sent to the (R)AN through a passive internet of things air interface. In a process in which the tag sends uplink information to the (R)AN, the uplink information may not pass through the terminal device.

It should be noted that in FIG. 1d, that the passive internet of things network element is an independent network element is merely used as an example. In another feasible implementation, the passive internet of things network element may be co-located with another core network element. For example, the passive internet of things network element and the NEF network element are co-located, or the passive internet of things network element and the UPF network element are co-located. If the passive internet of things network element and the UPF network element are co-located, the system architecture shown in FIG. 1d may not include the NEF network element. When two network elements are co-located, interaction between the two network elements in embodiments of this application becomes an internal operation of a co-located network element or may be omitted.

FIG. 1e is a schematic diagram of an architecture of a communication system to which an embodiment of this application is applied. The communication system may include but is not limited to one network device, one terminal, and one tag. A quantity of devices shown in FIG. 1e and forms of the devices are used as examples and do not constitute a limitation on embodiments of this application. In actual application, two or more network devices, two or more terminals, and two or more tags may be included. The device in the communication system is included in the system architecture shown in FIG. 1d. For example, the communication system shown in FIG. 1e includes one network device 101, one terminal 102, and one tag 103.

The network device 101 may be configured to receive a first passive internet of things instruction, and send the first passive internet of things instruction to the terminal 102. The first passive internet of things instruction is an instruction to be sent to the tag 103, and the terminal 102 is a helper of the tag 103. Correspondingly, after receiving the first passive internet of things instruction, the terminal 102 may send an excitation signal to the tag 103, and send the first passive internet of things instruction to the tag 103.

This manner may produce at least the following beneficial effects: 1. The passive internet of things instruction to be sent to the tag is sent through a communication network to the terminal that serves as the helper of the tag, so that the terminal can send the passive internet of things instruction to the tag. In this manner, a dedicated spectrum channel between a reader/writer and the helper is not needed, thereby helping ensure reliable transmission of the passive internet of things instruction. 2. As the helper, the terminal may use a spectrum of a cellular network, and may further integrate a function of the helper, so that the helper or the terminal has more abundant functions. 3. As the helper, the terminal may reuse a mechanism for performing authentication and mobility management on the terminal by a core network, to perform authentication and mobility management on the helper. In this way, network deployment costs do not need to be increased, and a passive internet of things may evolve from private network deployment into integration with a network, for example, a 5G network or the like, into one network for deployment and maintenance. This reduces both construction costs and operation and maintenance costs.

That the terminal 102 is a helper of the tag 103 indicates that the tag 103 is within coverage of the terminal 102, in other words, the tag 103 may receive an excitation signal from the terminal 102 (or described as: the tag 103 may be excited by the terminal 102). The helper may also be referred to as an access device or a tag access device. It should be noted that names of the helper, the device, the network element, and the instruction are not limited in embodiments of this application.

It should be noted that the first passive internet of things instruction sent by the network device 101 to the terminal 102 may arrive at the terminal 102 by passing through zero, one, or more devices. In other words, the network device 101 may directly communicate with the terminal 102, or may indirectly communicate with the terminal 102 through another device.

It should be further noted that, that the passive internet of things instruction (namely, the first passive internet of things instruction) sent by the network device 101 to the terminal 102 and the passive internet of things instruction received by the network device 101 are the same and are both the first passive internet of things instruction is used as an example, and does not constitute a limitation on embodiments of this application. In a possible implementation, after receiving the first passive internet of things instruction, the network device 101 may generate a second passive internet of things instruction based on the first passive internet of things instruction, and send the second passive internet of things instruction to the terminal 102. Correspondingly, after receiving the second passive internet of things instruction, the terminal 102 may send an excitation signal to the tag 103, and send the second passive internet of things instruction to the tag 103. For example, after receiving the first passive internet of things instruction, the network device 101 generates, according to the first passive internet of things instruction, an operation instruction that can be identified by the reader/writer or the helper, namely, the second passive internet of things instruction.

Optionally, the communication system shown in FIG. 1e may further include a passive internet of things server 104, and the first passive internet of things instruction may be received by the network device 101 from the passive internet of things server 104. It should be noted that the first passive internet of things instruction sent by the passive internet of things server 104 may arrive at the network device 101 by passing through zero, one, or more core network devices. In other words, the passive internet of things server 104 may directly communicate with the network device 101, or may indirectly communicate with the network device 101 through another device.

It should be further noted that, a passive internet of things instruction sent by the passive internet of things server 104 may change in a transmission process, so that the first passive internet of things instruction is received by the network device 101. For example, the communication system shown in FIG. 1e further includes a NEF network element (not shown in FIG. 1e). The passive internet of things server 104 sends a third passive internet of things instruction. After receiving the third passive internet of things instruction, the NEF network element generates the first passive internet of things instruction according to the third passive internet of things instruction, and sends the first passive internet of things instruction to the network device 101.

It should be noted that that the terminal serves as the helper of the tag is merely an example. In another feasible implementation, the helper of the tag may alternatively be a pole site, a small cell, a micro base station, a base station, or the like. The pole site may be understood as the small cell.

It should be further noted that, the technical solutions in embodiments of this application may be applied to communication systems integrating the passive internet of things technology with various communication systems, for example, a communication system integrating the passive internet of things technology with a long term evolution (long term evolution, LTE) system, a communication system integrating the passive internet of things technology with a 5G mobile communication system, and a communication system integrating the passive internet of things technology with a 5G new radio (new radio, NR) system. Optionally, a method in embodiments of this application is further applicable to communication systems integrating the passive internet of things technology with various future communication systems, for example, a communication system integrating the passive internet of things technology with a 6G system, a communication system integrating the passive internet of things technology with another communication network, or the like.

The network device 101 in this embodiment of this application may be a network-side entity configured to transmit or receive a signal. The network device 101 may be an access network device or a core network device. When the network device 101 is the core network device, the network device 101 may be specifically a mobility management network element, a passive internet of things network element, or a user plane function network element. For example, when the technical solutions in embodiments of this application are applied to the communication system integrating the passive internet of things technology with the LTE system, the mobility management network element may be a mobility management entity function (mobility management entity function, MME), and the user plane function network element may be an SGW (serving gateway) or a packet data network gateway (packet data network gateway, PGW). When the technical solutions in embodiments of this application are applied to the communication system integrating the passive internet of things technology with the 5G mobile communication system, the mobility management network element may be an AMF network element, and the user plane function network element may be a UPF network element. In the foregoing two examples, if the passive internet of things technology is an RFID technology, the passive internet of things network element may be middleware. It should be noted that when the technical solutions in embodiments of this application are applied to different communication systems, the mobility management network element, the passive internet of things network element, or the user plane function network element may have different names. This is not limited in embodiments of this application.

It may be understood that the communication system described in embodiments of this application is intended to describe the technical solutions in embodiments of this application more clearly, and does not constitute a limitation on the technical solutions provided in embodiments of this application. A person skilled in the art may learn that, with evolution of the system architecture and emergence of new service scenarios, the technical solutions provided in embodiments of this application are also applicable to similar technical problems.

With reference to the accompanying drawings, the following describes in detail an information transmission method and an apparatus thereof that are provided in this application. It should be noted that in descriptions of the information transmission method, an example in which a passive internet of things technology is an RFID technology, a mobility management network element is an AMF network element, a passive internet of things network element is an RFID-H network element, a user plane function network element is a UPF network element, and a session management function network element is an SMF network element is used for description. For ease of description, two words "network element" are not shown in figures corresponding to embodiments, and are not presented in specific descriptions of embodiments. However, this does not affect understanding of embodiments of this application. It should be further noted that, names of messages between the network elements, names of parameters in the messages, or the like in the following embodiments of this application are merely examples. In a specific implementation, other names may be used. This is not specifically limited in embodiments of this application.

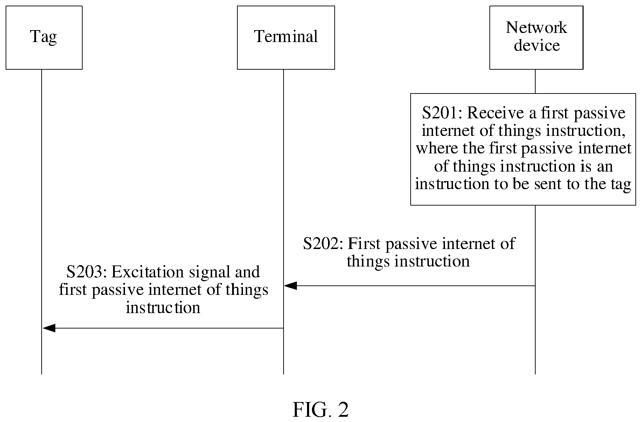

FIG. 2 is a schematic flowchart of an information transmission method according to an embodiment of this application. Step S201 and step S202 may be performed by a network device or a chip in the network device. Step S203 may be performed by a communication apparatus. The communication apparatus may be a terminal, a pole site, a small cell, a micro base station, or a base station, or may be a chip in the terminal, the pole site, the small cell, the micro base station, or the base station. In each embodiment of this application, an example in which the communication apparatus is the terminal is used for description. The network device may be an access network device, a mobility management network element, a passive internet of things network element, or a user plane function network element. As shown in FIG. 2, the method may include but is not limited to the following steps.

Step S201: The network device receives a first passive internet of things instruction, where the first passive internet of things instruction is an instruction to be sent to a tag.

The first passive internet of things instruction may be an inventory instruction, a read instruction, a write instruction, or another instruction in a passive internet of things system. This is not limited in embodiments of this application.

In an implementation, the first passive internet of things instruction may be an instruction to be sent to one or more tags. The first passive internet of things instruction may include tag indication information, the tag indication information may indicate the one or more tags, and the first passive internet of things instruction is an instruction to be sent to the tag indicated by the tag indication information. When the first passive internet of things instruction is an instruction to be sent to one tag, the tag indication information may include identification information of the tag. The identification information of the tag identifies the tag.

When the first passive internet of things instruction is an instruction to be sent to multiple tags, the tag indication information may include identification information of each of the multiple tags, or include tag range information indicating the multiple tags. In other words, the first passive internet of things instruction may include the tag identification information directly indicating the tag, or include the tag range information indirectly indicating the tags. Identification information of the tags indicated by the tag range information may be determined based on the tag range information. The tag range information may precisely indicate the multiple tags. In this case, the tag range information at least includes complete content of identification information of one of the indicated tags. For example, it is assumed that the identification information of the tag includes four characters, and the tag range information included in the first passive internet of things instruction is two tags starting from 1234. In this case, the tag range information indicates two tags whose identification information is 1234 and 1235, where 1234 and 1235 respectively indicate one tag. Optionally, the tag range information may include a part of content of the identification information of the tag. For example, it is assumed that the identification information of the tag includes four characters, and the tag range information included in the first passive internet of things instruction is 12. In this case, the tag range information may indicate a tag, where first two characters of identification information of the tag are " 12", last two characters of identification information of the tag are " 12", or identification information of the tag includes the characters "12". It should be noted that that the identification information of the tag includes four characters is used as an example and does not constitute a limitation. A quantity of characters included in the identification information of the tag may be another value. A value of each character in the identification information of the tag is not limited to a digit, but may be another value, for example, a letter or the like. This is not limited in embodiments of this application. It should be further noted that, that the tag indication information is included in the first passive internet of things instruction is used as an example. The tag indication information may alternatively not be included in the first passive internet of things instruction, but is transmitted together with the first passive internet of things instruction.

In embodiments of this application, the identification information of the tag may include one or more of a permanent identifier, a temporary identifier, an internal identifier, an external identifier, or an electronic product code (electronic product code, EPC) of the tag. The permanent identifier of the tag permanently identifies the tag, and does not change. For example, the permanent identifier may be a subscription concealed identifier (subscription concealed identifier, SUCI) or a subscription permanent identifier (subscription permanent identifier, SUPI). The temporary identifier of the tag identifies the tag temporarily or within a specific period of time, and may change. For example, in a period of time 1, a temporary identifier 1 may identify a tag a. In a period of time 2, a temporary identifier 2 may identify the tag a. The temporary identifier of the tag may be temporarily generated for the tag. For example, the temporary identifier of the tag may be a cell radio network temporary identifier (cell radio network temporary identifier, C-RNTI), namely, a dynamic identifier allocated by a base station to the tag; or may be a globally unique temporary identity (globally unique temporary identity, GUTI), and is temporarily allocated by the mobility management network element. The internal identifier of the tag may identify the tag in a 3GPP network. The external identifier of the tag may identify the tag in a network other than the 3GPP network. For example, the external identifier may be a generic public subscription identifier (generic public subscription identifier, GPSI). It should be noted that the tag in embodiments of this application may be a passive tag.

In an implementation, a passive internet of things instruction (for example, the first passive internet of things instruction, a second passive internet of things instruction, or a third passive internet of things instruction) may be carried in a passive internet of things message, or may be carried in another message (for example, an existing message). The passive internet of things message may be of a message type or a container type newly defined for transmitting the passive internet of things instruction. It should be noted that in a process of transmitting the passive internet of things instruction to the tag, the passive internet of things instruction may pass through a plurality of network elements or devices. Different passive internet of things messages may be for transmitting passive internet of things instructions between different network elements or devices. For example, a passive internet of things message 1 and a passive internet of things message 2 may be defined. A passive internet of things instruction sent by the network device to the terminal may be carried in the passive internet of things message 1, and a passive internet of things instruction sent by the terminal to the tag may be carried in the passive internet of things message 2.

Step S202: The network device sends the first passive internet of things instruction to the terminal, where the terminal is a helper of the tag.

The first passive internet of things instruction is sent to the tag through the helper of the tag. After receiving the first passive internet of things instruction, the network device may send the first passive internet of things instruction to the helper of the tag. Before sending information (for example, the first passive internet of things instruction) to the tag, the helper may first send an excitation signal to the tag, and then send the first passive internet of things instruction to the tag, so that the tag can receive the first passive internet of things instruction based on the excitation signal. This manner helps ensure that the tag can successfully receive the first passive internet of things instruction. It should be noted that in this embodiment of this application, after receiving the first passive internet of things instruction (where the first passive internet of things instruction is the instruction to be sent to the tag), the network device determines the terminal that serves as the helper of the tag, and then sends the first passive internet of things instruction to the terminal.

In this embodiment of this application, the terminal serves as the helper of the tag. To send the first passive internet of things instruction to the helper of the tag, the network device needs to learn which terminals are helpers, to further determine the terminal that serves as the helper of the tag, and send the first passive internet of things instruction to the terminal that serves as the helper of the tag. For example, if the first passive internet of things instruction is an instruction to be sent to a tag 1, and the network device learns that a terminal 1 is a helper, and determines that a helper of the tag 1 is the terminal 1, the network device may send the first passive internet of things instruction to the terminal 1. In an implementation, the network device may learn, through a registration process of the terminal, that the terminal is a helper. For example, the network device may learn, based on indication information sent by the terminal to a network in the registration process, that the terminal is the helper. The network device may be the access network device, the mobility management network element, the passive internet of things network element, or the user plane function network element. When the network device is different devices, methods for learning that the terminal is the helper may be different. For details, refer to the following descriptions.

In an implementation, the network device may send the first passive internet of things instruction to the terminal in the following manner: The network device sends the first passive internet of things instruction to the terminal through a control plane channel (or control plane signaling) or a user plane channel of the terminal.

A manner in which the network device sends the first passive internet of things instruction to the terminal through the control plane channel of the terminal may be: The network device sends the first passive internet of things instruction to the terminal via the control plane signaling of the terminal. The control plane signaling is radio resource control (radio resource control, RRC) signaling or non-access stratum (non-access stratum, NAS) signaling. In an implementation, the control plane signaling may indicate the terminal to send the first passive internet of things instruction to the tag. The terminal receives the first passive internet of things instruction via the control plane signaling of the terminal, and may learn that the first passive internet of things instruction is the instruction to be sent to the tag, so that the excitation signal and the first passive internet of things instruction may be sent to the tag. This manner helps ensure that the tag can successfully receive the first passive internet of things instruction. In an implementation, a type of the control plane signaling may be added to indicate the terminal to send the first passive internet of things instruction to the tag after the terminal receives the first passive internet of things instruction.

In this embodiment of this application, the added type of the control plane signaling may indicate that the received control plane signaling is related to a passive internet of things (passive internet of things, Passive IoT or PIoT), so that the terminal sends the first passive internet of things instruction to the tag. For example, when the control plane signaling is the RRC signaling, and a passive internet of things technology is a PIoT technology, the added type of the RRC signaling may include one or more of the following: rrcPiotSelectCommand, rrcPiotQueryCommand, rrcPiotAckCommand, rrcPiotReq_RNCommand, or the like. When a passive internet of things technology is an RFID technology, the added type of the control plane signaling may indicate that the received control plane signaling is related to RFID, so that the terminal sends the first passive internet of things instruction to the tag. For example, when the control plane signaling is the RRC signaling, and the passive internet of things technology is the RFID technology, the added type of the RRC signaling may include one or more of the following: rrcRfidSelectCommand, rrcRfidQueryCommand, rrcRfidAckCommand, rrcRfidReq_RNCommand, or the like. When receiving RRC signaling of rrcRfidSelectCommand or rrcPiotSelectCommand, the terminal learns that a Select command needs to be sent to the tag. Optionally, RRC signaling of the foregoing added type may be referred to as enhanced RRC signaling.

In an implementation, a manner in which the network device sends the first passive internet of things instruction to the terminal through the user plane channel of the terminal may be: The network device sends the first passive internet of things instruction to the terminal via a quality of service (quality of service, QoS) flow or a data radio bearer (data radio bearer, DRB) of the terminal. Both the QoS flow and the DRB may carry user plane data. In an implementation, the QoS flow (or the DRB) that carries the first passive internet of things instruction may indicate the terminal to send the first passive internet of things instruction to the tag. For example, a specific QoS flow (or DRB) may indicate the terminal to send the first passive internet of things instruction to the tag.

In an implementation, a destination address corresponding to the first passive internet of things instruction received by the network device is an address of the tag. A destination address corresponding to the first passive internet of things instruction sent by the network device to the terminal is an address of the terminal. For example, the first passive internet of things instruction received by the network device is included in a first packet, and the network device sends a second packet including the first passive internet of things instruction to the terminal, where a destination address of the first packet is the address of the tag, and a destination address of the second packet is the address of the terminal. In this manner, the network device may first send, to the helper (the terminal) of the tag, the first passive internet of things instruction originally to be sent to the tag. The helper first sends the excitation signal to the tag before sending the first passive internet of things instruction to the tag. In this way, the tag can successfully receive the first passive internet of things instruction from the helper based on the received excitation signal.

It should be noted that to first send, to the helper (the terminal) of the tag, the first passive internet of things instruction originally to be sent to the tag, in addition to the foregoing manner of replacing the destination address, a manner of replacing control plane signaling or replacing an identifier of a receive end of the first passive internet of things instruction may be used. For example, when the network device is the AMF network element, after receiving the first passive internet of things instruction and determining the terminal corresponding to the tag, the AMF network element sends the first passive internet of things instruction to the terminal via the NAS signaling of the terminal. In this manner, the first passive internet of things instruction is transmitted via the NAS signaling of the terminal instead of NAS signaling of the tag. For another example, when the network device is the passive internet of things network element, the passive internet of things network element receives the first passive internet of things instruction, and the identifier of the receive end corresponding to the first passive internet of things instruction is originally the SUCI (or the SUPI) of the tag. The passive internet of things network element replaces the SUCI (or the SUPI) of the tag with a SUCI (or a SUPI) of the terminal, and the network sends the first passive internet of things instruction to the terminal after the replacement.

In this embodiment of this application, the replacement may occur in an access network or a core network. When the replacement occurs in the access network, the access network device may perform replacement. When the replacement occurs in the core network, the mobility management network element, the passive internet of things network element, or the user plane function network element may perform replacement. For ease of description, in embodiments of this application, a device that performs replacement is referred to as a replacement device. The replacement device may be the same as or different from the network device.

In this embodiment of this application, the replacement device may perform replacement in the following three manners:

First replacement manner: The replacement device determines, based on a correspondence (for example, referred to as a correspondence 1) between a tag and a terminal, the terminal corresponding to the tag associated with the first passive internet of things instruction, and sends the first passive internet of things instruction to the terminal, to complete the replacement. If the first passive internet of things instruction is the instruction to be sent to the tag 1, the tag associated with the first passive internet of things instruction is the tag 1. It should be noted that the terminal in the correspondence 1 is a terminal that can serve as a helper. For example, the correspondence 1 may be enumerated in Table 1. In the first row of content in Table 1, that the tag 1 corresponds to the terminal 1 means: The helper of the tag 1 is the terminal 1. Other rows are understood in the same way, and details are not described again.

**Table 1: Correspondence 1**

| Identification information of tags | Identification information of terminals |
|---|---|
| Identification information of the tag 1 | Identification information of the terminal 1 |
| Identification information of a tag 2 | Identification information of a terminal 2 |
| Identification information of a tag 3 | Identification information of a terminal 3 |

In embodiments of this application, the identification information of the terminal identifies the terminal, and may include one or more of a permanent identifier, a temporary identifier, an internal identifier, or an external identifier of the terminal. The permanent identifier of the terminal permanently identifies the terminal, and does not change. The temporary identifier of the terminal identifies the terminal temporarily or within a specific period of time, and may change. The temporary identifier of the terminal may be temporarily generated for the terminal. The internal identifier of the terminal may identify the terminal in the 3 GPP network. The external identifier of the terminal may identify the terminal in the network other than the 3GPP network.

In an implementation, the first passive internet of things instruction received by the replacement device may be included in a first message, the first message further includes the tag indication information, and the tag indicated by the tag indication information is the tag associated with the first passive internet of things instruction. If the tag indication information includes the identification information of the tag, the replacement device may determine, based on the identification information of the tag, which terminal is the helper of the tag. To be specific, the replacement device determines, based on the correspondence 1 and the received identification information of the tag, which terminal is the helper of the tag. If the tag indication information includes the tag range information, the replacement device may determine, based on the identification information of each tag indicated by the tag range information, which terminal is the helper of the tag. For example, if the identification information of the tag includes four digits, and the tag range information includes " 123 ", the identification information of the tag indicated by the tag range information is "123x", where x is an integer from 1 to 9, and includes 1 and 9. It should be noted that that the replacement device obtains the first passive internet of things instruction and the tag indication information from the first message is used as an example. Optionally, the replacement device may alternatively separately obtain the first passive internet of things instruction and the tag indication information from different messages.

Second replacement manner: The replacement device determines, based on a correspondence (for example, referred to as a correspondence 2) between an access network device and a terminal, the terminal corresponding to the tag associated with the first passive internet of things instruction, and sends the first passive internet of things instruction to the terminal, to complete the replacement. There may be one or more terminals corresponding to the tag associated with the first passive internet of things instruction. The terminal corresponding to the tag is the helper of the tag.

In an implementation, the first passive internet of things instruction received by the replacement device may be included in a first message, and the first message further includes identification information of the access network device. In this case, the tag associated with the first passive internet of things instruction may include: a tag that can be excited by a terminal (as a helper) served by the access network device, in other words, the tag associated with the first passive internet of things instruction can be excited by the terminal that is served by the access network device and that serves as the helper. The replacement device may determine, based on the identification information of the access network device, one or more terminals that serve as the helper of the tag associated with the first passive internet of things instruction. To be specific, the replacement device determines, based on the correspondence 2 and the received identification information of the access network device, the terminal that serves as the helper of the tag associated with the first passive internet of things instruction. Specifically, the helper of the tag associated with the first passive internet of things instruction is one or more of terminals served by the access network device. The terminal served by the access network device includes a terminal that can serve as a helper, and may further include a terminal that does not serve as a helper. For example, the replacement device receives the first message, where the first message includes identification information of an access network device 1 and the first passive internet of things instruction. This may indicate that the first passive internet of things instruction is an instruction to be sent to the following tags: all tags within coverage of a terminal (where the terminal is a helper) served by the access network device 1. In this case, the tag associated with the first passive internet of things instruction includes all the tags. It should be noted that the terminal in the correspondence 2 is a terminal that can serve as a helper. For example, the correspondence 2 may be enumerated in Table 2.

**Table 2: Correspondence 2**

| Identification information of access network devices | Identification information of terminals |
|---|---|
| Identification information of the access network device 1 | Identification information of a terminal 11, a terminal 12, and a terminal 13 |
| Identification information of an access network device 2 | Identification information of a terminal 21 and a terminal 22 |
| Identification information of an access network device 3 | Identification information of a terminal 31 |

In the first row of content in Table 2, that the access network device 1 corresponds to the terminal 11, the terminal 12, and the terminal 13 means: Terminals served by the access network device 1 include the terminal 11, the terminal 12, and the terminal 13, and all the terminal 11, the terminal 12, and the terminal 13 can serve as helpers. In this case, terminals corresponding to the tag associated with the first passive internet of things instruction include the terminal 11, the terminal 12, and the terminal 13. Other rows are understood in the same way, and details are not described again.

In embodiments of this application, the identification information of the access network device identifies the access network device. Optionally, the identification information of the access network device may include one or more of a permanent identifier, a temporary identifier, an internal identifier, or an external identifier of the access network device. The permanent identifier of the access network device permanently identifies the access network device, and does not change. The temporary identifier of the access network device identifies the access network device temporarily or within a specific period of time, and may change. The temporary identifier of the access network device may be temporarily generated for the access network device. The internal identifier of the access network device may identify the access network device in the 3GPP network. Specifically, the internal identifier of the access network device may identify the access network device in the core network. For example, a SUPI is created for a RAN as identification information of the RAN, or a device identifier of a RAN is used as identification information of the RAN. The external identifier of the access network device may identify the access network device in the network other than the 3GPP network.

Third replacement manner: The replacement device determines, based on a correspondence 3, address information of the terminal corresponding to the tag associated with the first passive internet of things instruction, and sends the first passive internet of things instruction to the terminal, to complete the replacement. The correspondence 3 may include two forms. For example, a first type of correspondence 3 may be enumerated in Table 3, and a second type of correspondence 3 may be enumerated in Table 4. In the first rows of content in Table 3 and Table 4, that the tag 1 corresponds to the terminal 1 means: The helper of the tag 1 is the terminal 1. Other rows are understood in the same way, and details are not described again.

**Table 3: First type of correspondence 3**

| Identification information of tags | Identification information of terminals | Address information of the terminals |
|---|---|---|
| Identification information of the tag 1 | Identification information of the terminal 1 | Address information of the terminal 1 |
| Identification information of a tag 2 | Identification information of a terminal 2 | Address information of the terminal 2 |
| Identification information of a tag 3 | Identification information of a terminal 3 | Address information of the terminal 3 |

**Table 4: Second type of correspondence 3**

| Address information of tags | Address information of terminals |
|---|---|
| Address information of the tag 1 | Address information of the terminal 1 |
| Address information of a tag 2 | Address information of a terminal 2 |
| Address information of a tag 3 | Address information of a terminal 3 |

In an implementation, the first passive internet of things instruction received by the replacement device may be included in a first message, the first message may further include the tag indication information (for example, the identification information of the tag or the tag range information) or address information of the tag, and the tag associated with the first passive internet of things instruction is the tag or the tag indicated by the tag range information. The replacement device may determine, based on the tag indication information or the address information of the tag, which terminal is the helper of the tag associated with the first passive internet of things instruction. Specifically, the replacement device may determine, based on the first type of correspondence 3 and the received tag indication information, which terminal is the helper of the tag associated with the first passive internet of things instruction. Alternatively, the replacement device determines, based on the second type of correspondence 3 and the received address information of the tag, which terminal is the helper of the tag. It should be noted that that the replacement device obtains the first passive internet of things instruction and the tag indication information from the first message, or obtains the first passive internet of things instruction and the address information of the tag from the first message is used as an example. Optionally, the replacement device may alternatively separately obtain the first passive internet of things instruction and either the tag indication information or the address information of the tag from different messages.

It should be noted that a specific form of the identification information (the identification information of the tag, the identification information of the access network device, or the identification information of the terminal) in the correspondence 1, the correspondence 2, or the correspondence 3 is not limited in embodiments of this application. For example, the identification information of the tag in the correspondence 1 and the correspondence 3 may be first identification information, second identification information, third identification information, and/or fourth identification information of the tag below. The address information (the address information of the tag or the address information of the terminal) in the first type of correspondence 3 and the second type of correspondence 3 may be an IP address, a tunnel endpoint identifier, or the like.

Step S203: The terminal sends the excitation signal and the first passive internet of things instruction to the tag.

After receiving the first passive internet of things instruction from the network device, the terminal may first send the excitation signal to the tag, and then send the first passive internet of things instruction to the tag, so that the tag can receive the first passive internet of things instruction based on the excitation signal.

In this embodiment of this application, the passive internet of things instruction to be sent to the tag is sent through a communication network to the terminal that serves as the helper of the tag, so that the terminal can send the passive internet of things instruction to the tag. In this way, a dedicated spectrum channel between a reader/writer and the helper is not needed, thereby helping ensure reliable transmission of the passive internet of things instruction.

The following describes a case in which the replacement occurs in the access network, to be specific, in the access network, information to be sent to a tag is replaced with information to be sent to a terminal, where the terminal is a helper of the tag.

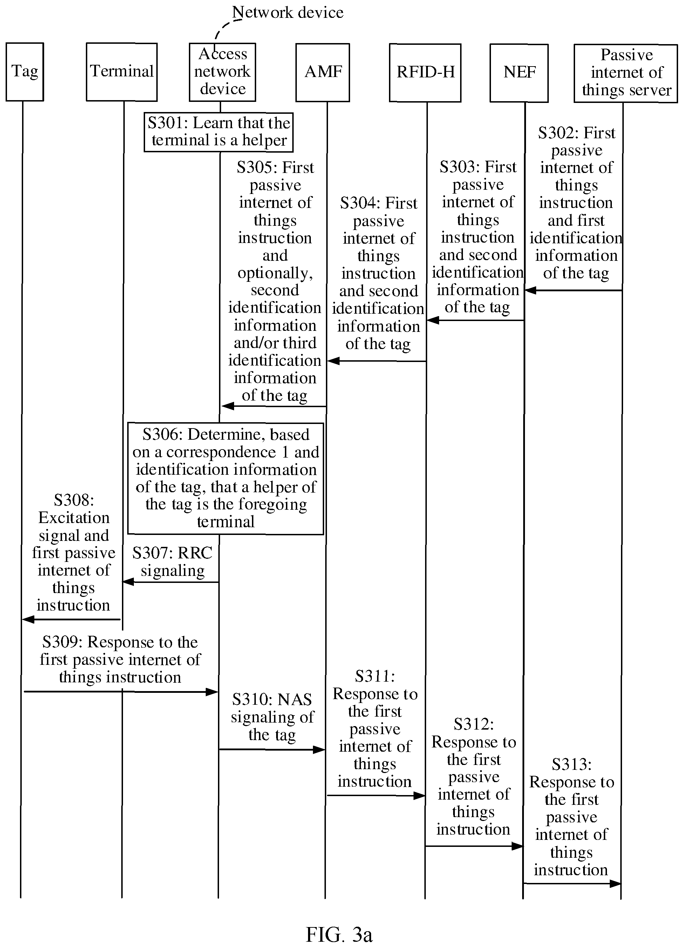

FIG. 3a is a schematic flowchart of another information transmission method according to an embodiment of this application. The method describes in detail how an access network device that serves a terminal performs replacement when a network device and a replacement device are the same and are the access network device. It should be noted that in FIG. 3a, an example in which a passive internet of things technology is an RFID technology is used for description, and a system architecture to which the method is applicable includes an RFID-H network element. In another feasible implementation, the RFID-H network element may alternatively not be included. As shown in FIG. 3a, the method may include but is not limited to the following steps.

Step S301: The access network device (namely, the network device) learns that the terminal is a helper.

In this embodiment of this application, when the network device is the access network device, the network device may learn, in the following manner, that the terminal is the helper: The access network device receives first indication information from the terminal or a mobility management network element that serves the terminal, where the first indication information indicates that the terminal is the helper. Optionally, the access network device may receive the first indication information in a registration process of the terminal. In the registration process of the terminal, the access network device may learn, in two manners, that the terminal is the helper.

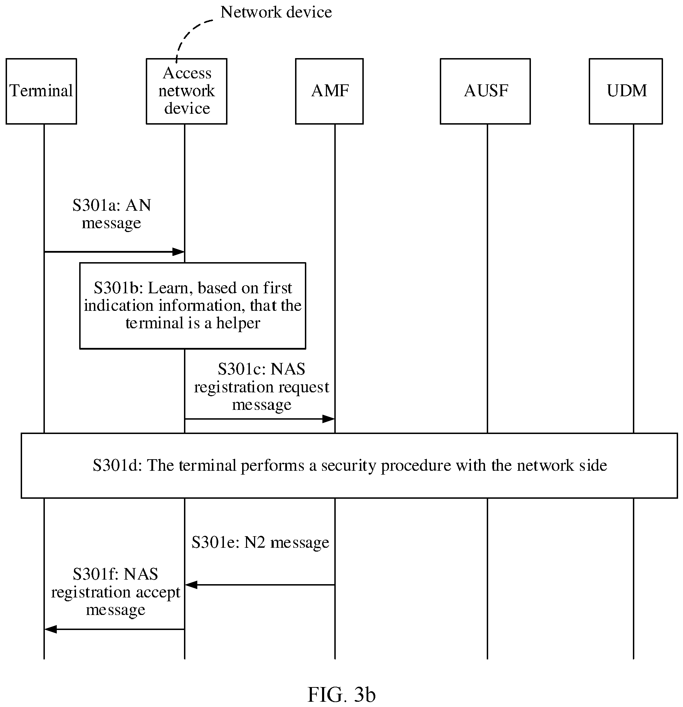

First manner in which the access network device learns that the terminal is the helper: For example, FIG. 3b is a schematic flowchart of the registration process of the terminal. The registration process includes but is not limited to steps S301a to S301f.

Step S301a: The terminal sends an AN message to the access network device, where the AN message includes a NAS registration request message and the first indication information, where the NAS registration request message is used by the terminal to request to access a core network, and the first indication information indicates that the terminal is the helper.

The access network device is the access network device that serves the terminal. The NAS registration request message carries a SUCI of the terminal, and the SUCI identifies the terminal that requests to access the core network.

Step S301b: The access network device learns, based on the first indication information, that the terminal is the helper.

The access network device receives the AN message. Because the first indication information is carried in the AN message instead of NAS signaling, the access network device may obtain the first indication information, and learn, based on the first indication information, that the terminal is the helper. Optionally, the first indication information may also be referred to as a helper indication.

Step S301c: The access network device sends the NAS registration request message to an AMF network element.

After receiving the AN message, the access network device may select the AMF network element based on a parameter in the AN message, and forward the NAS registration request message to the selected AMF network element. There may be only one AMF network element in a current communication network. In this case, an AMF selection process may not be performed.

Step S301d: The terminal performs a security procedure with a network side. The security procedure includes at least one of the following: mutual authentication, authentication, or authorization.

In the mutual authentication procedure, the authentication procedure, the authorization procedure, or the like performed between the terminal and the network side, participation of the terminal and the network side is required. The network side may include the following network elements: the access network device, the AMF network element, an AUSF network element, and a UDM network element.

Step S301e: The AMF network element sends an N2 message to the access network device. The N2 message includes a NAS registration accept message, and the NAS registration accept message indicates that the terminal successfully accesses the core network.

Optionally, after the security procedure between the terminal and the network side is completed, the AMF network element sends the N2 message to the access network device.

Step S301f: The access network device sends the NAS registration accept message to the terminal.

After receiving the N2 message, the access network device forwards the NAS registration accept message to the terminal.

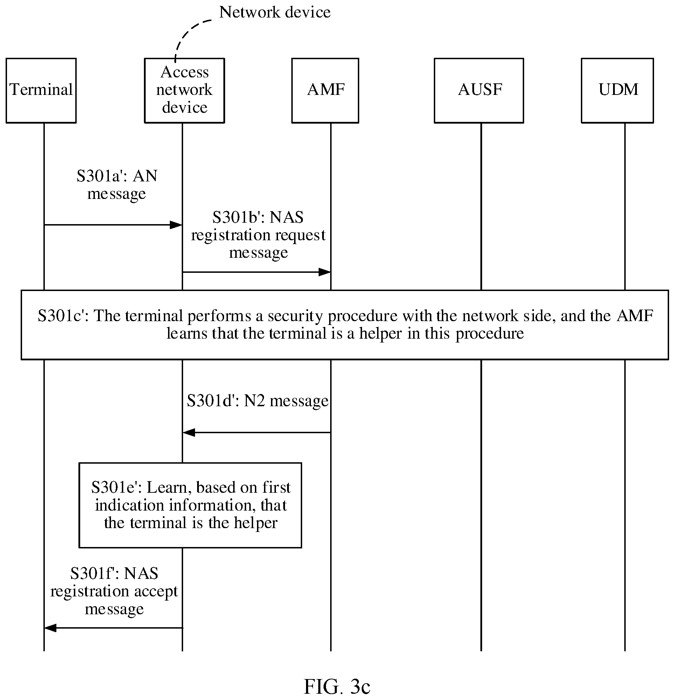

Second manner in which the access network device learns that the terminal is the helper: For example, FIG. 3c is a schematic flowchart of another registration process of the terminal. The registration process may include but is not limited to steps S301a' to S301f.

Step S301a': The terminal sends an AN message to the access network device, where the AN message includes a NAS registration request message, and the NAS registration request message is used by the terminal to request to access a core network.

The access network device is the access network device that serves the terminal. The NAS registration request message carries a SUCI of the terminal, and the SUCI identifies the terminal that requests to access the core network.

Step S301b': The access network device sends the NAS registration request message to the AMF.

Step S301c': The terminal performs a security procedure with a network side. The security procedure includes at least one of the following: mutual authentication, authentication, authorization, or the like. In this procedure, the AMF network element learns that the terminal is the helper.

In the mutual authentication procedure, the authentication procedure, the authorization procedure, or the like performed between the terminal and the network side, the AMF network element may obtain, from a UDM network element, information indicating that the terminal is the helper, so that the AMF network element may learn, based on the information, that the terminal is the helper. It should be noted that for a remaining execution process of step S301c', refer to specific descriptions in step S301d in FIG. 3b. Details are not described herein again.

Step S301d': The AMF network element sends an N2 message to the access network device, where the N2 message includes a NAS registration accept message and the first indication information, the NAS registration accept message indicates that the terminal successfully accesses the core network, and the first indication information indicates that the terminal is the helper.

Step S301e': The access network device learns, based on the first indication information, that the terminal is the helper.

The access network device receives the N2 message. Because the first indication information is carried in the N2 message instead of NAS signaling, the access network device may obtain the first indication information, and learn, based on the first indication information, that the terminal is the helper.

Step S301f: The access network device sends the NAS registration accept message to the terminal.

Step S302: A passive internet of things server sends a first passive internet of things instruction and first identification information of a tag to a NEF network element, where the first passive internet of things instruction is an instruction to be sent to the tag.

The first identification information of the tag may identify the tag in a non-3GPP network (for example, a passive internet of things system). For example, the first identification information is an EPC, and identifies the tag in an RFID system. Alternatively, the first identification information is a GPSI. Optionally, the first passive internet of things instruction and the first identification information of the tag may be included in an application layer message, for example, included in an application layer inventory message or an application layer read/write message. It should be noted that the passive internet of things server may send first identification information of one or more tags to the NEF network element.

It should be further noted that, the first identification information of the tag precisely indicates the tag. That the passive internet of things server sends the first identification information of the tag to the NEF network element is used as an example. In another feasible implementation, the passive internet of things server may send the first passive internet of things instruction and tag range information to the NEF network element. In this case, tags associated with the first passive internet of things instruction are all tags indicated by the tag range information. Alternatively, the passive internet of things server may send the first passive internet of things instruction and first identification information of the access network device (for example, a GPSI or a RAN ID of the access network device) to the NEF network element. In this case, tags associated with the first passive internet of things instruction are all tags within coverage of a terminal (where the terminal is a helper) served by the access network device. Optionally, the first identification information of the access network device may also be referred to as device-level first identification information. The device-level first identification information is first identification information allocated by the network to an access network or the access network device or first identification information allocated by the network to a passive or semi-active internet of things (for example, RFID) access technology of the access network or the access network device. For example, a device-level GPSI is a GPSI created for the RAN or a GPSI created for the RFID access technology of the RAN. The access network device (or the access network) is an access network device (or an access network) in a 3GPP network. The 3GPP network may allocate an identifier to the access network device (or the access network), to identify the access network device (or the access network). In the non-3GPP network, the identifier of the access network device may not be identified, and therefore, the access network device identified by the identifier cannot be learned of. The first identification information is created for the access network device, so that the first identification information can be identified in the 3GPP network, and the access network device identified by the first identification information can be learned of in the non-3GPP network. In other words, different access network devices may be distinguished based on the first identification information. It should be noted that in embodiments of this application, allocating the identification information to the access network, the access network device, or the tag means that, the network allocates the identification information to the access network, the access network device, or the tag, to identify the access network, the access network device, or the tag. It should be further noted that, that the tag range information and the first passive internet of things instruction are included in the first message above is used as an example. Alternatively, the tag range information may be included in the first passive internet of things instruction. This is not limited in embodiments of this application.

Step S303: The NEF network element sends the first passive internet of things instruction and second identification information of the tag to the RFID-H network element.

In an implementation, the second identification information of the tag may identify the tag in the 3GPP network, for example, identify the tag in the core network, and the second identification information may be a SUPI. After receiving the first passive internet of things instruction and the first identification information of the tag, the NEF network element may obtain the second identification information of the tag based on the first identification information of the tag. Specifically, the NEF network element may determine the second identification information of the tag based on a correspondence between the first identification information and the second identification information of the tag. For example, the SUPI of the tag is determined based on a correspondence between the EPC or the GPSI and the SUPI of the tag. Optionally, the first passive internet of things instruction and the second identification information of the tag may be included in an application layer message, for example, included in an application layer inventory message or an application layer read/write message.

In another implementation, if the passive internet of things server sends the first passive internet of things instruction and the tag indication information to the NEF network element, the NEF network element may determine, based on a correspondence between the first identification information and the second identification information of the tag indicated by the tag indication information, the second identification information of the tag indicated by the tag indication information, and send the first passive internet of things instruction and the second identification information of the tag to the RFID-H network element.

In still another implementation, if the passive internet of things server sends the first passive internet of things instruction and the first identification information of the access network device to the NEF network element, the NEF network element may determine second identification information of the access network device based on a correspondence between the first identification information and the second identification information of the tag access network device, and send the first passive internet of things instruction and the second identification information of the access network device to the RFID-H network element. The second identification information of the access network device may identify the access network device in the 3GPP network (for example, the core network).

Step S304: The RFID-H network element sends the first passive internet of things instruction and the second identification information of the tag to an AMF network element.

After receiving the first passive internet of things instruction and the second identification information of the tag, the RFID-H network element sends the first passive internet of things instruction and the second identification information of the tag to the AMF network element. In an implementation, if the NEF network element sends, to the RFID-H network element, the first passive internet of things instruction and the second identification information of the tag indicated by the tag indication information, the RFID-H network element may send, to the AMF network element, the first passive internet of things instruction and the second identification information of the tag indicated by the tag indication information. If the NEF network element sends the first passive internet of things instruction and the second identification information of the access network device to the RFID-H network element, the RFID-H network element may send the first passive internet of things instruction and the second identification information of the access network device to the AMF network element.

Optionally, the RFID-H network element may first determine the AMF network element, and send the first passive internet of things instruction and the second identification information of the tag to the AMF network element. The RFID-H network element may determine the AMF network element in the following manner: If the tag has been inventoried before, in a process of inventorying the tag, the RFID-H network element receives identification information of the tag (for example, the EPC of the tag) from a specific AMF network element. In this case, the RFID-H network element may determine to send the first passive internet of things instruction and the second identification information of the tag to the AMF network element. If the tag has not been inventoried before, the tag needs to be inventoried. When inventorying the tag, the passive internet of things server may send, to the NEF network element, an inventory instruction for inventorying the tag. Then, the NEF network element sends the inventory instruction to the RFID-H network element. The RFID-H network element receives the inventory instruction, where the inventory instruction may indicate a specific access network device to which the inventory instruction is to be sent. Further, the RFID-H network element determines to send the first passive internet of things instruction and the second identification information of the tag to an AMF corresponding to the access network device. In a possible implementation, the RFID-H network element may determine, in the following manner, the AMF corresponding to the access network device: The RFID-H network element obtains, from the UDM or the network repository function (network repository function, NRF) network element, identification information or address information of the AMF network element that serves the access network device, to send the first passive internet of things instruction and the second identification information of the tag to the AMF network element. The NRF network element mainly provides service registration, discovery, and authorization, and maintains available network function (network function, NF) instance information, to implement on-demand configuration of a network function and a service and interconnection between NFs.

Step S305: The AMF network element sends the first passive internet of things instruction to the access network device (namely, the network device). Optionally, the second identification information of the tag and/or third identification information of the tag may be further sent.

After receiving the first passive internet of things instruction and the second identification information of the tag, the AMF network element may send the first passive internet of things instruction to the access network device that serves the tag. Optionally, the second identification information and/or the third identification information of the tag may be further sent, so that the access network device learns of a specific tag to which the first passive internet of things instruction is to be sent. When the AMF network element sends the first passive internet of things instruction and identification information of the tag (for example, the second identification information and/or the third identification information of the tag) to the access network device, the first passive internet of things instruction and the identification information of the tag (for example, the second identification information and/or the third identification information of the tag) may be carried in a same message (for example, the first message).

The third identification information may be tag identification information that is used between the access network device and the AMF network element and that identifies the tag. The third identification information of the tag may include an identifier of the tag on an access network side and/or an identifier of the tag on an AMF side. For example, the AMF network element sends an N2 message including the first passive internet of things instruction to the access network device, where the N2 message includes the identifier of the tag on the access network side and the identifier of the tag on the AMF side. After receiving the N2 message, the access network device learns, based on the identifier on the access network side and the identifier on the AMF side that are in the N2 message, that the first passive internet of things instruction in the N2 message is the instruction to be sent to the tag. The identifier that is of the tag on the access network side and that is included in the N2 message is a RAN UE NGAP ID, and the identifier of the tag on the AMF side is an AMF UE NGAP ID. NGAP is a protocol used over an N2 interface. The AMF network element may learn of the third identification information of the tag based on the second identification information of the tag. Optionally, the first passive internet of things instruction may include identification information of the tag. If the AMF network element does not send the second identification information and/or the third identification information of the tag to the access network device, the access network device may learn of, based on the identification information of the tag included in the first passive internet of things instruction, the tag to which the first passive internet of things instruction is to be sent.

It should be noted that the access network device that serves the tag and the access network device that serves a helper of the tag are the same. Specifically, the AMF network element may determine, based on the second identification information of the tag, the access network device that serves the tag. For example, the AMF network element may determine, based on the SUPI of the tag, the access network device that serves the tag. In this embodiment of this application, the AMF network element may learn of, through a process of establishing a NAS connection for the tag, the SUPI of the tag and the access network device that serves the tag.

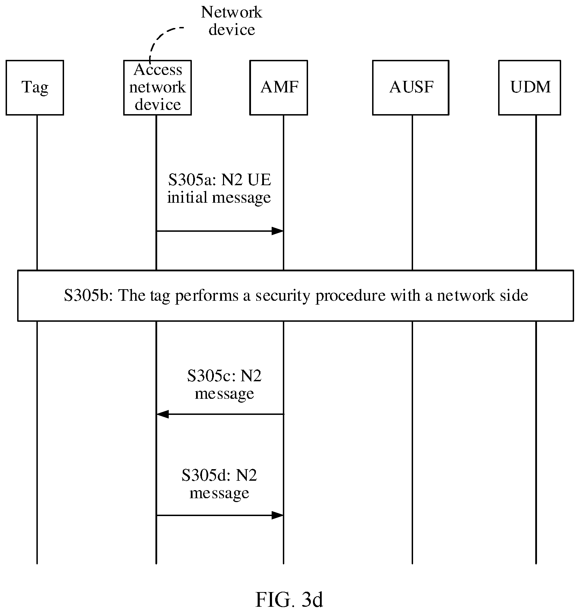

The AMF network element may send, via NAS signaling of the tag, the first passive internet of things instruction to the access network device that serves the tag. Optionally, the second identification information and/or the third identification information of the tag may be further sent. It should be noted that there is no interface between the tag and the AMF network element originally (in other words, the tag has no NAS), and the NAS connection of the tag may be established by the access network device for the tag. For a process in which the access network device establishes the NAS connection for the tag, refer to FIG. 3d. The process may include but is not limited to steps S305a to S305d.

Step S305a: The access network device sends an N2 UE initial message to the AMF network element, where the N2 UE initial message includes a NAS registration request message, the NAS registration request message includes a SUCI of the tag, and the NAS registration request message requests to establish the NAS connection for the tag.

The SUCI of the tag is a SUCI constructed for the tag. Optionally, the access network device may construct the SUCI for the tag based on a part or all of the identification information of the tag. For example, the SUCI is constructed for the tag based on fourth identification information (for example, the EPC) of the tag. Optionally, the NAS registration request message may further include third indication information, and the third indication information indicates that the NAS connection is requested to be established for the tag.

Step S305b: The tag performs a security procedure with the network side. The security procedure includes at least one of the following: mutual authentication, authentication, or authorization.

In the mutual authentication procedure, the authentication procedure, the authorization procedure, or the like performed between the tag and the network side, participation of the tag and the network side is required. The network side may include the following network elements: the access network device, the AMF network element, the AUSF network element, and the UDM network element. The mutual authentication procedure, the authentication procedure, the authorization procedure, or the like performed between the tag and the network side includes but is not limited to the following steps: (1) The AMF network element selects the AUSF network element. It should be noted that there may be only one AUSF network element in the current communication network. In this case, an AUSF network element selection process may not be performed. (2) The UDM network element obtains the corresponding SUPI (namely, the SUPI of the tag) based on the SUCI of the tag, and sends the SUPI to the AMF network element through the AUSF network element. In other words, the AMF network element obtains the SUPI corresponding to the SUCI of the tag. It should be noted that the SUCI, the SUPI, and the GPSI of the tag may all be identification information that is allocated by the network side to the tag and that identifies the tag.

Step S305c: The AMF network element sends an N2 message to the access network device, where the N2 message includes a NAS registration accept message, and the NAS registration accept message indicates that the NAS connection is successfully established for the tag.

After the mutual authentication procedure, the authentication procedure, the authorization procedure, or the like performed between the terminal and the network side is completed, the AMF network element sends the N2 message to the access network device.

Step S305d: The access network device sends an N2 message to the AMF network element, where the N2 message includes a NAS registration complete message.

After receiving the NAS registration accept message, the access network device may send the NAS registration complete message to the AMF network element. In this case, the process of establishing the NAS connection for the tag is completed. The NAS connection may be for data or signaling of the tag.

It should be noted that for the process in which the access network device establishes the NAS connection for the tag, refer to section 7.2.1.3 in 3GPP TS 23.316. The process shown in FIG. 3d is similar to a process set forth in this section, and a difference lies in: This section describes a process in which a wireline access gateway function (wireline access gateway function, W-AGF) establishes a NAS connection for a fixed network residential gateway (fixed network residential gateway, FN-RG).

In an implementation, if the AMF network element receives the first passive internet of things instruction and the second identification information of the tag indicated by the tag indication information, the AMF network element may send the first passive internet of things instruction to the access network device indicated by the second identification information, and optionally, may further send the second identification information of the tag indicated by the tag indication information and/or the third identification information of the tag. If the AMF network element receives the first passive internet of things instruction and the second identification information of the access network device, the AMF network element may send the first passive internet of things instruction to the access network device indicated by the second identification information, and optionally, further send the second identification information of the access network device. Specifically, the AMF network element may send the first passive internet of things instruction to the access network device via NAS signaling of the access network device indicated by the second identification information (and optionally, further send the tag range information). It should be noted that a NAS connection of the access network device may be established by the access network device. A process of establishing the NAS connection for the access network device is similar to the process in which the access network device establishes the NAS connection for the tag, and reference may be made to FIG. 3d. A difference is as follows: A NAS registration request message includes a SUCI of the access network device instead of the SUCI of the tag, and requests to establish the NAS connection of the access network device. Participation of the tag is not needed in a mutual authentication procedure, an authentication procedure, an authorization procedure, or the like procedure. A NAS registration accept message indicates that the NAS connection is successfully established for the access network device. It should be noted that the SUCI, a SUPI, and a GPSI of the access network device may all be allocated by the network side to the access network device, or may all be preconfigured in the access network device. The NAS connection established for the access network device may be understood as being for transmitting data or signaling of all tags within coverage of the access network device. This may also be understood as: The access network device represents all the tags within the coverage of the access network device. When needing to contact with the tags within the coverage of the access network device, the network may contact with the tags through the NAS connection established for the access network device.

Step S306: The access network device (namely, the network device) determines, based on a correspondence 1 and the identification information of the tag, that the helper of the tag is the foregoing terminal.

After receiving the first passive internet of things instruction and the identification information of the tag (where the tag may be the tag identified by the identification information of the tag or the tag indicated by the tag range information), the access network device may perform replacement in a first replacement manner. It may be understood that the access network device needs to learn of the correspondence 1 to perform replacement based on the correspondence 1 and the identification information of the tag. The identification information of the tag may be at least one of the following: the second identification information or the third identification information of the tag, or the identification information of the tag included in the first passive internet of things instruction.

In a possible implementation, after obtaining the first passive internet of things instruction, the access network device may determine the helper of the tag based on the correspondence 1 and the identification information of the tag included in the first passive internet of things instruction.

In another possible implementation, after obtaining the first passive internet of things instruction and the second identification information of the tag, the access network device may determine, based on the correspondence 1 and the second identification information of the tag, that the helper of the tag is the foregoing terminal.

In another possible implementation, after obtaining the first passive internet of things instruction and the third identification information of the tag, the access network device may determine the helper of the tag based on the correspondence 1 and the third identification information of the tag.

In an implementation, the access network device learns of the correspondence 1 in the following manner: The access network device learns of a specific helper based on the scheduling information for a time-frequency resource, where the tag is within coverage of the helper (in other words, the tag is excited by the helper), and the helper is the terminal, so that the access network device learns of the correspondence 1. The following is a process in which the access network device learns of the specific helper based on the scheduling information for the time-frequency resource, where the tag is within the coverage of the helper. The access network device schedules the time-frequency resource for the helper. A time-frequency resource scheduled for a specific helper may be for transmitting data of the helper or data of a tag within coverage of the helper. If the access network device detects data of a specific tag on a time-frequency resource scheduled for a specific helper, it indicates that the tag is within coverage of the helper. For example, the access network device notifies a helper 1 that a tag within coverage of the helper 1 may send uplink data on a time-frequency resource 1. If the access network device detects, on the time-frequency resource 1, uplink data sent by a tag 1, it indicates that the tag 1 is within the coverage of the helper 1.

In an implementation, the access network device may alternatively determine, based on a historical inventory record, that a helper connected to the tag last time is the helper of the tag.

Step S307: The access network device (namely, the network device) sends the first passive internet of things instruction to the terminal via RRC signaling.

After determining that the helper of the tag is the foregoing terminal, the access network device may send the first passive internet of things instruction to the terminal via control plane signaling (for example, the RRC signaling or enhanced RRC signaling) of the terminal, so that the terminal learns that the first passive internet of things instruction needs to be sent to the tag. The access network device sends the first passive internet of things instruction to the terminal via the control plane signaling of the terminal, to complete the replacement.

In an implementation, if the access network device receives the first passive internet of things instruction, the access network device may send, based on a correspondence 2, the first passive internet of things instruction to all terminals that are served by the access network device and that serve as helpers. If the access network device receives the first passive internet of things instruction and identification information of the access network device (for example, the second identification information of the access network device), the access network device may send, based on a correspondence 2, the first passive internet of things instruction to all terminals that are served by the access network device and that serve as helpers.

Step S308: The terminal sends an excitation signal and the first passive internet of things instruction to the tag.

It should be noted that for an execution process of step S308, refer to specific descriptions in step S203 in FIG. 2. Details are not described herein again.

Step S309: The tag sends a response to the first passive internet of things instruction to the access network device (namely, the network device), where the response includes the fourth identification information of the tag and/or data stored in the tag.

After the tag receives the first passive internet of things instruction, if the first passive internet of things instruction is an inventory instruction, the tag may send, in response to the inventory instruction, the fourth identification information (for example, the EPC) of the tag to the access network device that serves the tag (or the terminal). If the first passive internet of things instruction is for reading the data stored in the tag (in other words, is a read instruction), the tag may send the data to the access network device in response to the read instruction. If the first passive internet of things instruction is for writing data into the tag (in other words, is a write instruction), the tag may not need to perform step S309. It should be noted that information sent by the tag to the access network device may be transmitted over a passive internet of things air interface, a cellular air interface, or a dedicated cellular air interface (namely, a specific frequency band).

Step S310: The access network device (namely, the network device) sends the response to the first passive internet of things instruction to the AMF network element via NAS signaling of the tag, where the response includes the fourth identification information of the tag and/or the data stored in the tag.

After receiving the response to the first passive internet of things instruction from the tag, the access network device may send, via control plane signaling (for example, the NAS signaling) of the tag, the response to the AMF network element that serves the terminal (or the tag). In this manner, the AMF network element may learn that the response is from the tag. Further, the AMF network element may continue to send the response to the RFID-H network element, the RFID-H network element may send the response to the NEF network element, and the NEF network element may send the response to the passive internet of things server. When the first passive internet of things instruction is the inventory instruction, in this manner, the passive internet of things server may learn that the tag is successfully inventoried.

If the tag is inventoried or scanned for the first time, the access network device may establish the NAS connection for the tag. Specifically, the following process is included: The access network device (namely, the network device) sends a registration request message to the AMF network element that serves the terminal (or the tag), where the registration request message requests to establish the NAS connection for the tag. The access network device (namely, the network device) receives a registration accept message from the AMF network element, where the registration accept message indicates that the NAS connection is successfully established for the tag. It should be noted that for a specific process in which the access network device establishes the NAS connection for the tag, refer to the process shown in FIG. 3d. In this embodiment of this application, if the access network device has not received the fourth identification information of the tag before, in other words, the fourth identification information of the tag is new fourth identification information, it may indicate that the tag is inventoried or scanned for the first time.

If the first passive internet of things instruction is the inventory instruction, and the tag is inventoried or scanned for the first time, the access network device may send the response to the first passive internet of things instruction to the AMF network element in the following manner. Manner 1: After the access network device successfully establishes the NAS connection for the tag, the access network device sends the response to the AMF network element via the NAS signaling of the tag. Manner 2: The response includes the fourth identification information of the tag. In the process in which the access network device establishes the NAS connection for the tag, in step S305d shown in FIG. 3d, the N2 message sent by the access network device to the AMF may further include the fourth identification information of the tag. Alternatively, in step S305a shown in FIG. 3d, the N2 UE initial message sent by the access network device to the AMF may further include the fourth identification information of the tag. In this manner, the access network device may not need to additionally send a message including the response to the AMF network element. This helps save resources.

If the tag is inventoried or scanned not for the first time, in other words, the NAS connection of the tag exists, the access network device may send the response to the AMF network element via the created NAS signaling of the tag.

It should be noted that in the RFID system, if the fourth identification information sent by the tag to the access network device is the EPC of the tag, a random number RN16 is further sent when the EPC is sent. Refer to step 3 and step 5 in FIG. 1b. Before the tag sends the first identification information and the random number RN16 to the access network device, if the tag determines, after obtaining the Select command from the access network device through monitoring, that the tag is a tag to be inventoried, the tag further feeds back the random number RN16 to the access network device after subsequently obtaining the Query command through monitoring, so that the access network device can learn of random numbers RN16 fed back by different tags. Therefore, if the access network device receives EPCs and random numbers RN16 that are fed back by multiple tags, a specific tag that performs feedback may be distinguished by using the random number RN16.

Step S311: The AMF network element sends the response to the RFID-H network element, where the response includes the fourth identification information of the tag and/or the data stored in the tag.

After the AMF network element receives the response, in a 5G service-based architecture, the AMF network element may send the response to the RFID-H network element through a service-based interface.

Step S312: The RFID-H network element sends the response to the NEF network element, where the response includes the fourth identification information of the tag and/or the data stored in the tag.

After receiving the response, the RFID-H network element may send the response to the NEF network element.

When the first passive internet of things instruction is the inventory instruction, information received by the RFID-H network element from the AMF network element includes inventory information, and the RFID-H network element may generate an inventory result based on the received inventory information, and send the inventory result to the NEF network element.

Step S313: The NEF network element sends the response to the passive internet of things server, where the response includes the fourth identification information of the tag and/or the data stored in the tag.

After receiving the response, the NEF network element may send the response to the passive internet of things server.

When sending the fourth identification information of the tag and/or the data stored in the tag to the RFID-H network element, the AMF network element may further send the second identification information (for example, the SUPI) of the tag to the RFID-H network element, so that the RFID-H network element may send the fourth identification information of the tag and/or the data stored in the tag and the second identification information of the tag to the NEF network element. Correspondingly, the NEF network element may determine the first identification information (for example, the GPSI) of the tag based on the second identification information of the tag. In this way, when sending the fourth identification information of the tag and/or the data stored in the tag to the passive internet of things server, the NEF network element may include the first identification information of the tag. In this manner, the passive internet of things server may learn of, based on the first identification information of the tag, the specific tag that feeds back the received information (namely, the fourth identification information of the tag and/or the data stored in the tag).

In this embodiment of this application, the network device is the access network device, and the access network device may send, to the terminal via the RRC signaling (in other words, through the cellular air interface), the first passive internet of things instruction to be sent to the tag. Implementation of this embodiment of this application can produce at least the following beneficial effects:
1. A dedicated spectrum channel between a reader/writer and the helper is not needed, thereby helping ensure reliable transmission of the first passive internet of things instruction.
2. Downlink information (for example, the first passive internet of things instruction) of the tag is transmitted through the cellular air interface, and uplink information of the tag is transmitted through the passive internet of things air interface, the cellular air interface, the dedicated cellular air interface (namely, the specific frequency band), so that data in uplink and downlink transmission of the tag can be separated, thereby reducing interference between the uplink and downlink transmission.
3. As the helper, the terminal may use a spectrum of a cellular network, and may further integrate a function of the helper, so that the helper or the terminal has more abundant functions.
4. As the helper, the terminal may reuse a mechanism for performing authentication and mobility management on the terminal by the core network, to perform authentication and mobility management on the helper. In this way, network deployment costs do not need to be increased, and a passive internet of things may evolve from private network deployment into integration with a network, for example, a 5G network or the like, into one network for deployment and maintenance. This reduces both construction costs and operation and maintenance costs.

In the embodiment of FIG. 3 a, an example in which the access network device included in the access network is an independent entity is used for description. In another feasible implementation, the access network device (or the access network) may include a plurality of independent entities, and the plurality of entities perform functions of the access network device. For example, the access network device (or the access network) may include but is not limited to one or more of a first unit, a second unit, and a third unit. When the RFID technology is integrated with the 5G network, the reader/writer may be divided into a radio frequency antenna part and a baseband processing part, and the first unit may be the radio frequency antenna part obtained through division of the reader/writer. The second unit may be configured to establish a control plane connection or a user plane channel for the tag, so that the core network can sense existence of the tag, and information about the tag may be transmitted through the established control plane connection or user plane channel. In embodiments of this application, after the control plane connection is established, the information may be transmitted via the corresponding control plane signaling. Transmitting the information through the control plane connection means transmitting the information via the control plane signaling. The third unit may be a baseband processing unit of the access network.

It should be noted that the first unit, the second unit, and the third unit may be separately deployed independently, or a part of units (or modules) in the first unit, the second unit, and the third unit may be integrated into one entity. The first unit, the second unit, or the third unit may alternatively be integrated into another module of the access network device. For example, when the access network device is in a distributed architecture, the first unit may be integrated into a distributed unit (distributed unit, DU) or a central unit (central unit, CU), and the second unit may be integrated into the CU. Alternatively, the first unit may have a function of a DU or a CU, and the second unit may have a function of the CU. Alternatively, the first unit may be a DU or a CU, and the second unit may be the CU. As a communication system changes, the first unit and the second unit may alternatively be integrated into a newly emerging unit or module in an access network in a future communication system. The first unit may also be referred to as an RFID-L module, and the second unit may also be referred to as a Uni-AGF module.

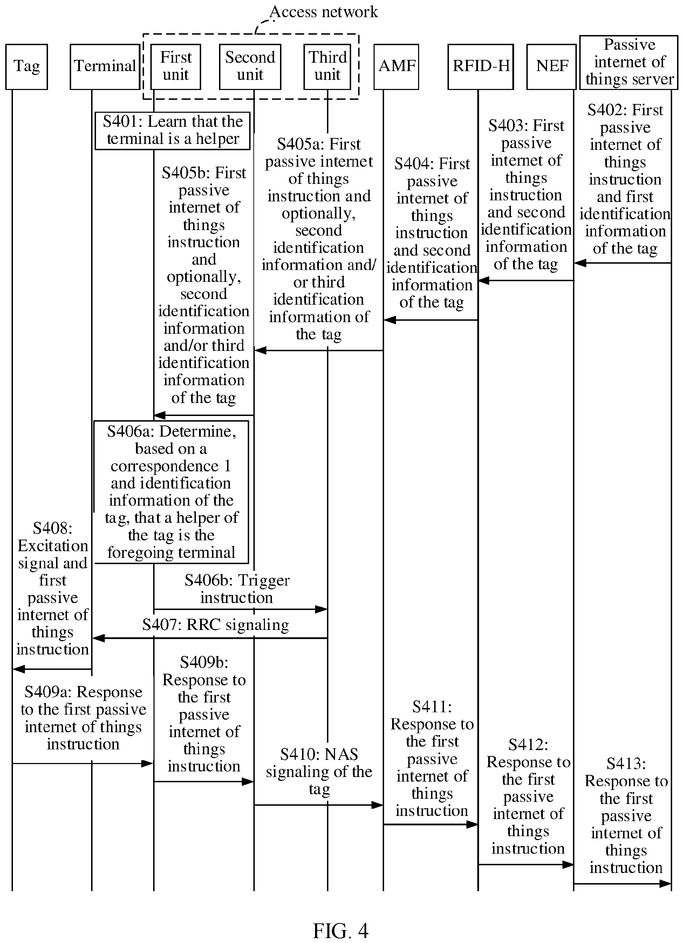

Next, FIG. 4 is a schematic flowchart of still another information transmission method according to an embodiment of this application. FIG. 4 uses an example in which an access network device (or an access network) includes a first unit, a second unit, and a third unit, to further describe steps related to the access network device in the embodiment shown in FIG. 3a. It should be noted that for a step in the embodiment in FIG. 4 that is the same as or similar to that in the embodiment in FIG. 3a, refer to specific descriptions in the embodiment in FIG. 3a. Details are not described in this embodiment again. As shown in FIG. 4, the method may include but is not limited to the following steps.

Step S401: The first unit learns that a terminal is a helper.

The first unit may learn, in the following manner, that the terminal is the helper: The first unit receives first indication information from the terminal, where the first indication information indicates that the terminal is the helper. The first unit learns, based on the first indication information, that the terminal is the helper. Alternatively, the second unit receives first indication information from a mobility management network element that serves the terminal, and sends the first indication information to the first unit, where the first indication information indicates that the terminal is the helper. The first unit receives the first indication information from the second unit, and learns, based on the first indication information, that the terminal is the helper.

It should be noted that for an execution process of step S401, refer to specific descriptions in step S301 in FIG. 3a. A difference lies in that, in the embodiment in FIG. 3a, the access network device learns that the terminal is the helper; in the embodiment in FIG. 4, the first unit specifically learns that the terminal is the helper. The first unit may be a DU or a CU, or may be integrated into the DU or the CU.

Step S402: A passive internet of things server sends a first passive internet of things instruction and first identification information of a tag to a NEF network element, where the first passive internet of things instruction is an instruction to be sent to the tag.

Step S403: The NEF network element sends the first passive internet of things instruction and second identification information of the tag to an RFID-H network element.

Step S404: The RFID-H network element sends the first passive internet of things instruction and the second identification information of the tag to an AMF network element.

It should be noted that for an execution process of steps S402 to S404, refer to specific descriptions in steps S302 to S304 in FIG. 3a. Details are not described herein again.

Step S405a: The AMF network element sends the first passive internet of things instruction to the second unit. Optionally, the second identification information of the tag and/or third identification information of the tag may be further sent.

Specifically, the AMF network element may send the first passive internet of things instruction to the second unit via NAS signaling of the access network device or NAS signaling of the tag. Optionally, the second identification information and/or the third identification information of the tag may be further sent. When the AMF network element sends the first passive internet of things instruction and identification information of the tag (for example, the second identification information and/or the third identification information of the tag) to the second unit, the first passive internet of things instruction and the identification information of the tag (for example, the second identification information and/or the third identification information of the tag) may be carried in a same message (for example, a first message). The NAS signaling of the access network device may be understood as that the NAS signaling is actually transmitted between the AMF network element and the access network, and does not need to be sent to the terminal or the tag. The NAS signaling of the access network device may also be referred to as NAS signaling of the access network. Similarly, the following NAS connection of the access network device may also be referred to as a NAS connection of the access network.

The NAS signaling of the access network device or the NAS signaling of the tag is established by the second unit. A process in which the second unit establishes a NAS connection for the access network device or the tag is similar to the process in which the access network device establishes the NAS connection for the access network device or the tag, and reference may be made to FIG. 3d. A difference lies in that, in the embodiment in FIG. 3a, the process of establishing the NAS connection is triggered by the access network device; in the embodiment in FIG. 4, the process of establishing the NAS connection is triggered by the second unit in the access network.

Step S405b: The second unit sends the first passive internet of things instruction to the first unit. Optionally, the second identification information and/or the third identification information of the tag may be further sent.

The second unit receives the first passive internet of things instruction. If the second unit identifies that the first passive internet of things instruction is related to a passive internet of things, the second unit may send the first passive internet of things instruction to the first unit. Optionally, the second identification information and/or the third identification information of the tag may be further sent.

Optionally, the second unit may receive the first passive internet of things instruction via the NAS signaling of the access network device or the NAS signaling of the tag, and NAS signaling (for example, the NAS signaling of the access network device or the NAS signaling of the tag) for transmitting the first passive internet of things instruction may include fourth indication information, where the fourth indication information indicates an access technology. If the access technology indicated by the fourth indication information is a passive internet of things technology, the second unit may determine that the first passive internet of things instruction is related to the passive internet of things.

The CU may include a CU-UP (user plane) and a CU-CP (control plane). User plane data is received by the CU-UP and sent to the DU, and then is sent by the DU to the terminal. Control plane signaling (for example, NAS signaling sent by the AMF to the terminal through the RAN) is received by the CU-CP and sent to the DU, and then is sent by the DU to the terminal. If the second unit is the CU or is integrated into the CU, the CU-CP may receive the control plane signaling from the AMF network element, or the CU-UP may receive user plane data from a UPF network element. For example, the CU-CP receives the NAS signaling from the AMF network element, where the NAS signaling includes the first passive internet of things instruction. The CU-UP receives, from the UPF network element, the first passive internet of things instruction and data to be written into the tag, where the first passive internet of things instruction is a write instruction.

Step S406a: The first unit determines, based on a correspondence 1 and the identification information of the tag, that a helper of the tag is the foregoing terminal.

The identification information of the tag may be the second identification information of the tag, the third identification information of the tag, and/or identification information of the tag included in the first passive internet of things instruction. Specifically, the first unit may determine the helper of the tag based on the correspondence 1 and at least one of the identification information of the tag included in the first passive internet of things instruction, the second identification information of the tag, and the third identification information of the tag. For a specific process, refer to step S306 in FIG. 3a.

Step S406b: The first unit sends a trigger instruction to the third unit, where the trigger instruction includes the first passive internet of things instruction and identification information of the terminal, and the terminal is the helper of the tag.

After determining the terminal that serves as the helper of the tag, the first unit may send the trigger instruction to the third unit, where the trigger instruction includes the first passive internet of things instruction and the identification information of the terminal. The trigger instruction triggers the third unit to send the first passive internet of things instruction to the terminal, to complete replacement. The trigger instruction includes the identification information of the terminal, so that the third unit learns of the terminal to which the first passive internet of things instruction needs to be sent.

It should be noted that that the trigger instruction includes the first passive internet of things instruction is used as an example. In another feasible implementation, the first unit may generate, according to the first passive internet of things instruction received from the second unit, an operation instruction that can be identified by the helper or the reader/writer. For example, when the first passive internet of things instruction is an inventory instruction, the trigger instruction may include the foregoing Select command, the foregoing Query command, and the identification information of the terminal. For another example, when the first passive internet of things instruction is a read/write instruction, the trigger instruction may include the foregoing Req_RN command and the identification information of the terminal.

If the first unit is the DU or is integrated into the DU, after determining the terminal that serves as the helper of the tag, the DU may send the first passive internet of things instruction to the terminal. To be specific, in this case, the first unit and the third unit are co-located. It may be understood that interaction between the first unit and the third unit becomes an internal operation of a co-located entity or may be omitted. If the first unit is the CU or is integrated into the CU, after determining the terminal that serves as the helper of the tag, the CU may send the trigger instruction to the DU, where the trigger instruction includes the first passive internet of things instruction and the identification information of the terminal. Alternatively, after determining the terminal that serves as the helper of the tag, the CU may send the identification information of the terminal to the DU, and the DU sends the trigger instruction to the third unit, where the trigger instruction includes the first passive internet of things instruction and the identification information of the terminal.

Step S407: The third unit sends the first passive internet of things instruction to the terminal via RRC signaling.

After receiving the trigger instruction, the third unit may send an instruction (for example, the first passive internet of things instruction, the Select command, the Query command, or the Req_RN command, or the like) in the trigger instruction to the terminal via control plane signaling of the terminal (indicated by the trigger instruction). Specifically, the instruction in the trigger instruction may be sent to the terminal via the RRC signaling (or enhanced RRC signaling) of the terminal.

Step S408: The terminal sends an excitation signal and the first passive internet of things instruction to the tag.

It should be noted that for an execution process of step S408, refer to specific descriptions in step S308 in FIG. 3a. Details are not described herein again.

Step S409a: The tag sends a response to the first passive internet of things instruction to the first unit, where the response includes fourth identification information of the tag and/or data stored in the tag.

It should be noted that for an execution process of step S409a, refer to specific descriptions in step S309 in FIG. 3a. A difference lies in that in step S409a, the tag specifically sends the response to the first passive internet of things instruction to the first unit in the access network device.

Step S409b: The first unit sends the response to the second unit, where the response includes the fourth identification information of the tag and/or the data stored in the tag.

After receiving the response to the first passive internet of things instruction from the tag, the first unit may send the response to the second unit. Further, the second unit may send the response to a core network, to transmit the response to the passive internet of things server.

Step S410: The second unit sends the response to the AMF network element via NAS signaling of the tag, where the response includes the fourth identification information of the tag and/or the data stored in the tag.

After receiving the response from the first unit, the second unit may send, via control plane signaling of the tag, the response to the mobility management network element (for example, the AMF) that serves the tag. If the tag is inventoried or scanned for the first time, the second unit may send a registration request message to the mobility management network element, where the registration request message requests to establish a NAS connection for the tag. The tag performs a security procedure with a network side, where the security procedure includes at least one of the following: mutual authentication, authentication, authorization, or the like. After the procedure, for example, the two-way authentication or the authorization, the second unit may receive a registration accept message from the mobility management network element, where the registration accept message indicates that the NAS connection is successfully established for the tag. If the tag is inventoried or scanned not for the first time, in other words, a NAS connection of the tag exists, the second unit may send the response to the mobility management network element via the created NAS signaling of the tag.

Step S411: The AMF network element sends the response to the RFID-H network element, where the response includes the fourth identification information of the tag and/or the data stored in the tag.

Step S412: The RFID-H network element sends the response to the NEF network element, where the response includes the fourth identification information of the tag and/or the data stored in the tag.

Step S413: The NEF network element sends the response to the passive internet of things server, where the response includes the fourth identification information of the tag and/or the data stored in the tag.

It should be noted that for an execution process of steps S411 to S413, refer to specific descriptions in steps S311 to S313 in FIG. 3a. Details are not described herein again.

In this embodiment of this application, the access network includes the first unit, the second unit, and the third unit. After determining the terminal that serves as the helper of the tag, the first unit sends the trigger instruction to the third unit, where the trigger instruction includes the first passive internet of things instruction and the identification information of the terminal. The trigger instruction triggers the third unit to send, to the terminal, the first passive internet of things instruction to be sent to the tag. Implementation of this embodiment of this application can produce at least the beneficial effects set forth in the foregoing embodiment in FIG. 3a. Details are not described herein again.

The case in which the replacement occurs in the access network is described in the embodiments in FIG. 3a and FIG. 4. The following describes a case in which the replacement occurs in the core network, to be specific, in the core network, information to be sent to a tag is replaced with information to be sent to a terminal, where the terminal is a helper of the tag. When the replacement occurs in the core network, a passive internet of things instruction may be transmitted to the terminal via control plane signaling of the terminal. Alternatively, a passive internet of things instruction may be transmitted to the terminal through a user plane channel of the terminal. A method for transmitting the passive internet of things instruction to the terminal via the control plane signaling of the terminal when the replacement occurs in the core network is first described.

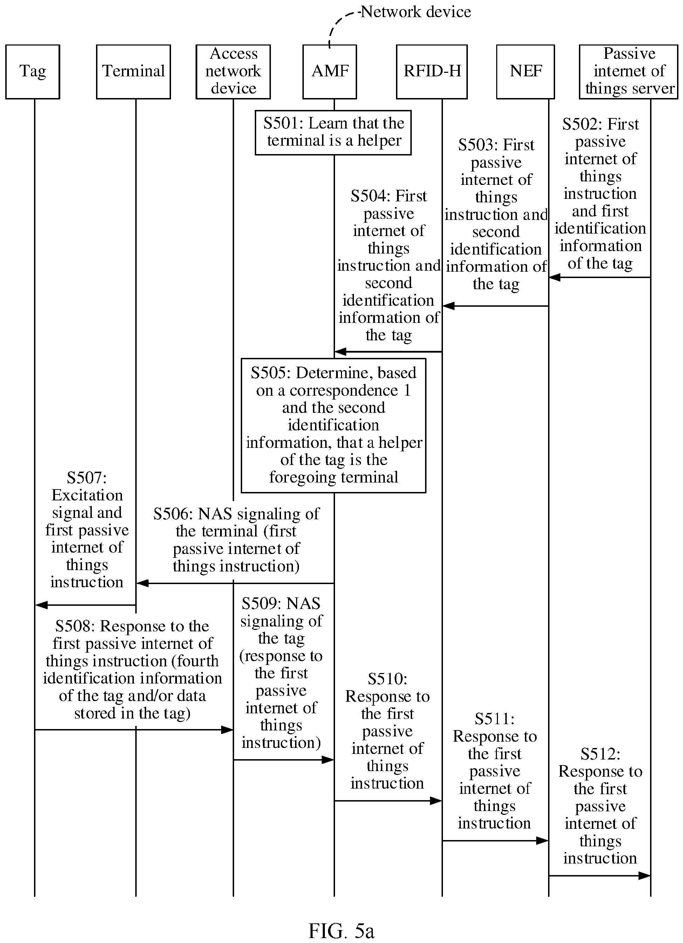

FIG. 5a is a schematic flowchart of still another information transmission method according to an embodiment of this application. The method describes in detail how an AMF network element that serves a terminal performs replacement in a first replacement manner when a network device and a replacement device are the same and are the AMF network element. As shown in FIG. 5a, the method may include but is not limited to the following steps.

Step S501: The AMF network element (namely, the network device) learns that the terminal is a helper.

In this embodiment of this application, when the network device is the AMF network element that serves the terminal, the network device may learn, in two manners, that the terminal is the helper. In a first manner, the network device receives second indication information from the terminal, where the second indication information indicates that the terminal is the helper. The second indication information may be included in a registration message or an N2 message. In a second manner, the AMF network element receives, from a UDM network element, information indicating that the terminal is the helper. For example, the AMF network element may receive the second indication information from the terminal in a registration process of the terminal, or receive subscription data of the terminal from the UDM network element, where the subscription data of the terminal includes the information indicating that the terminal is the helper.

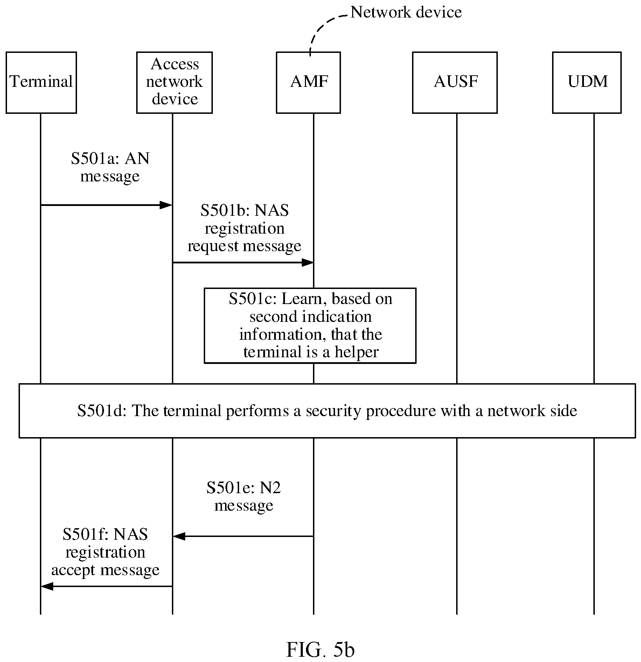

First manner in which the AMF network element learns, in the registration process of the terminal, that the terminal is the helper: For example, FIG. 5b is a schematic flowchart of the registration process of the terminal. The registration process includes but is not limited to steps S501a to S501f.

Step S501a: The terminal sends an AN message to an access network device, where the AN message includes a NAS message, and the NAS message includes the second indication information. In a possible implementation, the NAS message is a NAS registration request message (or referred to as a registration message), and the NAS registration request message includes the second indication information. The NAS registration request message is used by the terminal to request to access a core network, and the second indication information indicates that the terminal is the helper. In another possible implementation, the AN message includes the second indication information.

Step S501b: The access network device sends the NAS registration request message to the AMF network element.

Optionally, the access network device may send an N2 message to the AMF network element, where the N2 message includes the NAS registration request message. It should be noted that for an execution process of steps S501a and S501b, refer to specific descriptions in steps S301a and S301b in FIG. 3b. Details are not described herein again. Optionally, the N2 message includes the second indication information.

Step S501c: The AMF network element learns, based on the second indication information, that the terminal is the helper.

The AMF network element receives the second indication information, and may learn, based on the second indication information, that the terminal is the helper. Optionally, the second indication information may also be referred to as a helper indication.

Step S501d: The terminal performs a security procedure with a network side. The security procedure includes at least one of the following: mutual authentication, authentication, authorization, or the like.

Step S501e: The AMF network element sends an N2 message to the access network device, where the N2 message includes a NAS registration accept message, and the NAS registration accept message indicates that the terminal successfully accesses the core network.

Step S501f: The access network device sends the NAS registration accept message to the terminal.

It should be noted that for an execution process of steps S501d to S501f, refer to specific descriptions in steps S301d to S301f in FIG. 3b. Details are not described herein again.

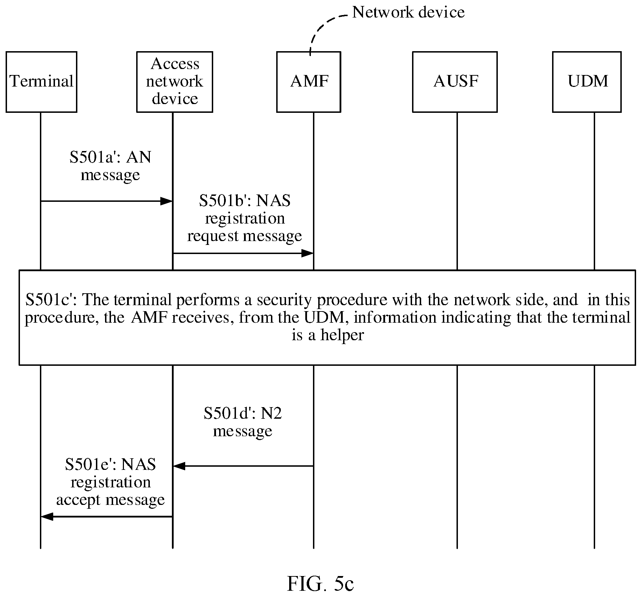

Second manner in which the AMF network element learns, in the registration process of the terminal, that the terminal is the helper: For example, FIG. 5c is a schematic flowchart of another registration process of the terminal. The registration process includes but is not limited to steps S501a' to S501f.

Step S501a': The terminal sends an AN message to an access network device, where the AN message includes a NAS registration request message, and the NAS registration request message is used by the terminal to request to access a core network.

Step S501b': The access network device sends the NAS registration request message to the AMF.

Step S501c': The terminal performs a security procedure with a network side. The security procedure includes at least one of the following: mutual authentication, authentication, authorization, or the like. In this procedure, the AMF receives, from the UDM, the information indicating that the terminal is the helper, and the AMF can learn, based on the information, that the terminal is the helper. For example, the AMF receives the subscription data of the terminal from the UDM, where the subscription data includes the information.

Step S501d': The AMF network element sends an N2 message to the access network device, where the N2 message includes a NAS registration accept message, and the NAS registration accept message indicates that the terminal successfully accesses the core network.

It should be noted that for an execution process of steps S501a' to S501d', refer to specific descriptions in steps S301a' to S301d' in FIG. 3c. Details are not described herein again.

Step S501e': The access network device sends the NAS registration accept message to the terminal.

Step S502: A passive internet of things server sends a first passive internet of things instruction and first identification information of a tag to a NEF network element, where the first passive internet of things instruction is an instruction to be sent to the tag.

Step S503: The NEF network element sends the first passive internet of things instruction and second identification information of the tag to an RFID-H network element.

Step S504: The RFID-H network element sends the first passive internet of things instruction and the second identification information of the tag to the AMF network element (namely, the network device).

The first passive internet of things instruction and the second identification information of the tag may be carried in a same message (for example, a first message). It should be noted that for an execution process of steps S502 to S504, refer to specific descriptions in steps S302 to S304 in FIG. 3a. Details are not described herein again.

Step S505: The AMF network element (namely, the network device) determines, based on a correspondence 1 and the second identification information of the tag, that a helper of the tag is the foregoing terminal.

After receiving the first passive internet of things instruction and the second identification information of the tag, the AMF network element may perform replacement in the first replacement manner. It may be understood that the AMF network element needs to learn of the correspondence 1, to perform replacement based on the correspondence 1 and the second identification information of the tag. Specifically, the AMF network element determines that a terminal that corresponds to the tag indicated by the second identification information and that is in the correspondence 1 is the helper of the tag.

The AMF network element may learn of the correspondence 1 in the following manner: The AMF network element receives first information from the access network device that serves the terminal, where the first information indicates that there is a correspondence between the terminal and the tag, and the correspondence is for determining that the terminal is the helper of the tag. The AMF network element learns of the correspondence 1 based on the first information. In other words, the access network device may notify the AMF network element of the correspondence 1. For a process in which the access network device learns of the correspondence 1, refer to step S306 in FIG. 3a. The first information may include identification information of the terminal and identification information of the tag. Optionally, the AMF network element may receive, via control plane signaling of the tag, the first information from the access network device that serves the terminal. It should be noted that the AMF network element may receive the correspondence 1 from the access network device; or the AMF network element receives, from the access network device, the identification information of the terminal and the identification information of the tag corresponding to the terminal, to construct or update the correspondence 1 based on the received information. The helper corresponding to the tag may change. In this manner, the AMF network element can learn of the correspondence between the tag and the helper in time. For example, the tag is pasted on goods. When the goods move, different helpers may scan and inventory the tag. Therefore, the correspondence between the tag and the helper may dynamically change, and a latest correspondence may be learned of through periodic inventory.

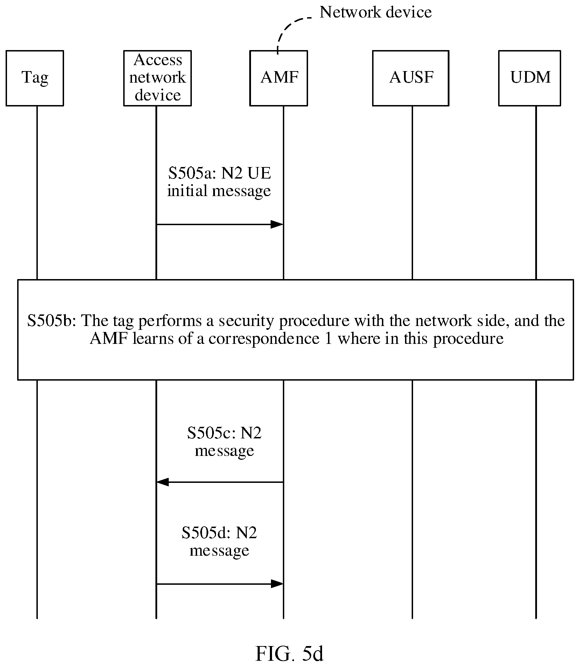

In a first possible implementation, the AMF network element may learn of the correspondence 1 through a process of establishing a NAS connection for the tag. To be specific, in the process of establishing the NAS connection for the tag, the access network device sends the first information (for example, the identification information of the terminal and the identification information of the tag corresponding to the terminal) to the AMF network element. For example, for the process in which the access network device establishes the NAS connection for the tag, refer to FIG. 5d. The process may include but is not limited to steps S505a to S505d.

Step S505a: The access network device sends an N2 UE initial message to the AMF network element, where the N2 UE initial message includes a NAS registration request message, and the NAS registration request message includes a SUCI of the tag. Optionally, the NAS registration request message further includes the identification information of the terminal corresponding to the tag, and requests to establish the NAS connection for the tag.

The SUCI of the tag is a SUCI constructed for the tag. The terminal corresponding to the tag is the helper for exciting the tag. Optionally, the NAS registration request message may further include third indication information, and the third indication information indicates that the NAS connection is requested to be established for the tag.

Step S505b: The tag performs a security procedure with the network side. The security procedure includes at least one of the following: mutual authentication, authentication, authorization, or the like. In this procedure, the AMF network element learns of the correspondence 1.

For the mutual authentication procedure, the authentication procedure, the authorization procedure, or the like performed between the tag and the network side, refer to descriptions in step S305b in FIG. 3d. After receiving the N2 UE initial message, the AMF network element may learn of the correspondence between the tag and the helper of the tag. Specifically, in the correspondence 1 learned of by the AMF network element, the identification information of the tag may be the SUCI, a SUPI, an EPC, or the like of the tag, and the identification information of the terminal (namely, the helper) may also be a SUCI, a SUPI, or the like. The AMF may learn of the SUCI of the tag from the NAS registration request message. The AMF may alternatively learn of the SUPI of the tag in the mutual authentication procedure, the authentication procedure, the authorization procedure, or the like performed between the tag and the network side. For example, in this procedure, the UDM network element obtains the corresponding SUPI (namely, the SUPI of the tag) based on the SUCI of the tag, and sends the SUPI to the AMF network element through an AUSF network element. It may be understood that the identification information of the terminal carried in the NAS registration request message may be the SUCI. The AMF network element may learn of a correspondence between the SUCI and the SUPI of the terminal in the registration process of the terminal. Therefore, the AMF network element may learn of the SUPI of the terminal.

Optionally, if the first passive internet of things instruction is an inventory instruction, the NAS registration request message may further include fourth identification information (for example, the EPC) of the tag. In other words, the access network device may report the fourth identification information (for example, the EPC) of the tag to the AMF network element in the process of establishing the NAS connection for the tag. Alternatively, after successfully establishing the NAS connection for the tag, the access network device may report the fourth identification information (for example, the EPC) of the tag to the AMF network element via NAS signaling of the tag.

Step S505c: The AMF network element sends an N2 message to the access network device, where the N2 message includes a NAS registration accept message, and the NAS registration accept message indicates that the NAS connection is successfully established for the tag.

Step S505d: The access network device sends an N2 message to the AMF network element, where the N2 message includes a NAS registration complete message.

Optionally, if the NAS registration request message does not include the identification information of the terminal corresponding to the tag, the N2 message may further include the identification information of the terminal corresponding to the tag. Because the NAS registration complete message included in the N2 message is a NAS registration complete message for the tag, after receiving the N2 message, the AMF network element may learn that the terminal is the helper of the tag, to learn of the correspondence 1. In other words, the AMF network element learns of the correspondence 1 based on the information obtained in step S505a or step S505d.

It should be noted that for an execution process of steps S505c and S505d, refer to specific descriptions in steps S305c and S305d in FIG. 3d. Details are not described herein again.

In a second possible implementation, after successfully establishing the NAS connection for the tag, the access network device may send the first information to the AMF network element via NAS signaling of the tag. Correspondingly, the AMF network element receives the information via the NAS signaling of the tag, to learn of or update the correspondence 1.

Step S506: The AMF network element (namely, the network device) sends the first passive internet of things instruction to the terminal via NAS signaling of the terminal.

After determining the terminal that serves as the helper of the tag, the AMF network element sends the first passive internet of things instruction to the terminal via control plane signaling (for example, the NAS signaling) of the terminal, to complete the replacement. The control plane signaling may indicate the terminal to send the first passive internet of things instruction to the tag.

In an implementation, the AMF network element may further determine an identifier of the terminal on a RAN side and an identifier of the terminal on an AMF side, to send the first passive internet of things instruction to the terminal via the NAS signaling of the terminal and the two identifiers. A manner in which the AMF network element sends the first passive internet of things instruction to the terminal via the NAS signaling of the terminal may be: The AMF network element sends an N2 message to the access network device that serves the terminal, where the N2 message includes the NAS signaling of the terminal, and the NAS signaling includes the first passive internet of things instruction. The N2 message includes the identifier of the terminal on the RAN side and the identifier of the terminal on the AMF side. After receiving the N2 message, the access network device learns, based on the identifier on the RAN side and the identifier on the AMF side in the N2 message, that NAS signaling in the N2 message is NAS signaling to be sent to the terminal, and then sends the NAS signaling to the terminal. For example, the identifier of the terminal on the RAN side is a RAN UE NGAP ID, and the identifier of the terminal on the AMF side is an AMF UE NGAP ID. Optionally, the AMF network element may store the correspondence 1 and the identifier of the terminal on the RAN side and the identifier of the terminal on the AMF side that are in the correspondence 1 in a same table or different tables. This is not limited in this embodiment of this application.

Step S507: The terminal sends an excitation signal and the first passive internet of things instruction to the tag.

Step S508: The tag sends a response to the first passive internet of things instruction to the access network device, where the response includes the fourth identification information of the tag and/or data stored in the tag.

Step S509: The access network device sends the response to the AMF network element (namely, the network device) via NAS signaling of the tag, where the response includes the fourth identification information of the tag and/or data stored in the tag.

Step S510: The AMF network element (namely, the network device) sends the response to the RFID-H network element, where the response includes the fourth identification information of the tag and/or the data stored in the tag.

Step S511: The RFID-H network element sends the response to the NEF network element, where the response includes the fourth identification information of the tag and/or the data stored in the tag.

Step S512: The NEF network element sends the response to the passive internet of things server, where the response includes the fourth identification information of the tag and/or the data stored in the tag.

It should be noted that steps S507 to S512 are optional. For an execution process thereof, refer to specific descriptions in steps S308 to S313 in FIG. 3a. Details are not described herein again.

In this embodiment of this application, the network device is the AMF network element, and the AMF network element may send, to the terminal via the NAS signaling, the first passive internet of things instruction to be sent to the tag. Implementation of this embodiment of this application can produce at least the beneficial effects set forth in the foregoing embodiment in FIG. 3a and the following beneficial effects:
1. The first passive internet of things instruction is delivered to the terminal via the NAS signaling of the terminal, so that a RAN does not need to parse the instruction.
2. The AMF network element in the core network performs replacement, and a dynamic pairing relationship between the helper and the tag may be centrally maintained in the core network.

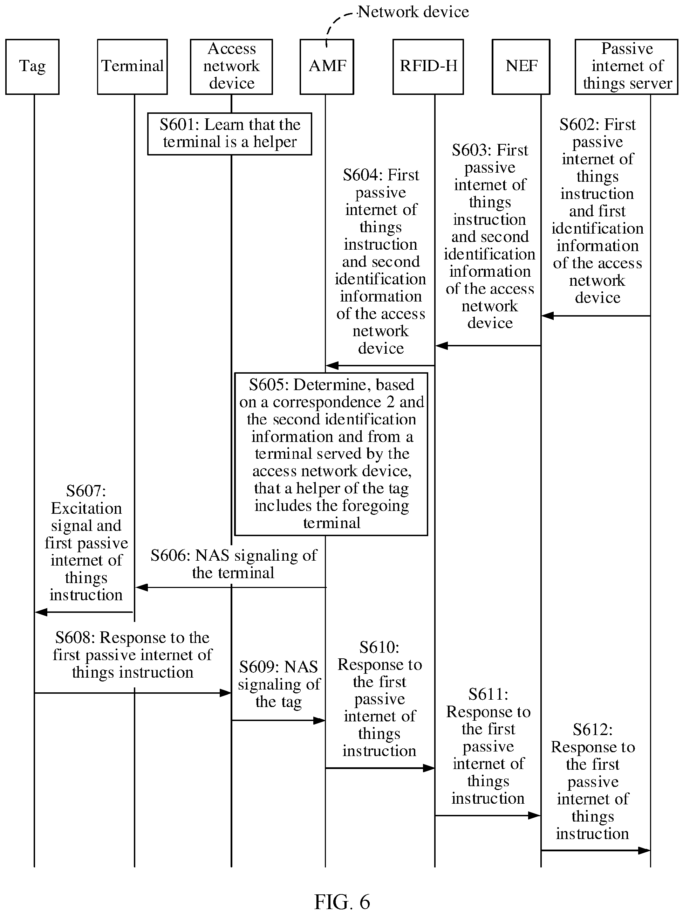

FIG. 6 is a schematic flowchart of still another information transmission method according to an embodiment of this application. The method describes in detail how an AMF network element that serves a terminal performs replacement in a second replacement manner when a network device and a replacement device are the same and are the AMF network element. It should be noted that for a step in the embodiment in FIG. 6 that is the same as or similar to that in the embodiment in FIG. 5a, refer to specific descriptions in the embodiment in FIG. 5a. Details are not described in this embodiment again. As shown in FIG. 6, the method may include but is not limited to the following steps.

Step S601: The AMF network element (namely, the network device) learns that the terminal is a helper.

It should be noted that for an execution process of step S601, refer to specific descriptions in step S501 in FIG. 5a. Details are not described herein again.

Step S602: A passive internet of things server sends a first passive internet of things instruction and first identification information of an access network device to a NEF network element, where the first passive internet of things instruction is an instruction to be sent to a tag.

It should be noted that for content of the first identification information of the access network device, refer to related descriptions in the embodiment in FIG. 3a. Details are not described herein again.

Step S603: The NEF network element sends the first passive internet of things instruction and second identification information of the access network device to an RFID-H network element.

It should be noted that for an execution process of step S603, refer to specific descriptions in step S303 in FIG. 3a. Details are not described herein again.

Step S604: The RFID-H network element sends the first passive internet of things instruction and the second identification information of the access network device to the AMF network element (namely, the network device).

The first passive internet of things instruction and the second identification information of the access network device may be included in a same message (for example, a first message). It should be noted that for an execution process of step S604, refer to specific descriptions in step S304 in FIG. 3a. Details are not described herein again.

Step S605: The AMF network element (namely, the network device) determines, based on a correspondence 2 and the second identification information of the access network device and from a terminal served by the access network device, that a helper of the tag includes the foregoing terminal.

There may be one or more tags, and correspondingly, there may be one or more helpers of the tag. The helper that is of the tag and that is determined by the AMF network element based on the correspondence 2 and the second identification information of the access network device is one or more of the terminals served by the access network device.

After receiving the first passive internet of things instruction and the second identification information of the access network device, the AMF network element may perform replacement in the second replacement manner. It may be understood that the AMF network element needs to learn of the correspondence 2, to perform replacement based on the correspondence 2 and the second identification information of the access network device. Specifically, the AMF network element determines that a terminal that is in the correspondence 2 and that corresponds to the access network device indicated by the second identification information is the helper of the tag, in other words, determines that the first passive internet of things instruction needs to be sent to all terminals in the correspondence 2 that correspond to the access network device indicated by the second identification information. To be specific, in this case, tags associated with the first passive internet of things instruction are all tags within coverage of all the terminals. For example, when the second identification information of the access network device is the identification information of the access network device 2 in Table 2, helpers determined based on Table 2 include the terminal 21 and the terminal 22.

It should be noted that that the AMF network element receives the second identification information of the access network device is used as an example. In another feasible implementation, the AMF network element may receive information indicating the access network device, where the information is not limited to the second identification information of the access network device.

The AMF network element may learn of the correspondence 2 in the following manner: The AMF network element receives second information from the access network device, where the second information indicates that the access network device serves the terminal. Specifically, the second information may include identification information of the terminal served by the access network. The AMF network element learns, based on the second information, that the access network device serves the terminal, to construct or update the correspondence 2. Optionally, the AMF network element may learn of a specific access network device through a registration procedure of the terminal, where the terminal is within coverage of the access network device. For example, in a registration procedure of a terminal 1, if the AMF receives a NAS registration request message from an access network device 1, and the NAS registration request message carries a SUCI of the terminal 1, the AMF learns that a terminal served by the access network device includes the terminal 1.

Step S606: The AMF network element (namely, the network device) sends the first passive internet of things instruction to the terminal via NAS signaling of the terminal.

Specifically, the AMF network element sends the first passive internet of things instruction to each of the terminals in the correspondence 2 that correspond to the access network device indicated by the second identification information, to complete the replacement. For example, when all the terminals include the terminal 21 and the terminal 22, the AMF network element sends the first passive internet of things instruction to the terminal 21 via NAS signaling of the terminal 21, and sends the first passive internet of things instruction to the terminal 22 via NAS signaling of the terminal 22.

Step S607: The terminal sends an excitation signal and the first passive internet of things instruction to the tag.

Step S608: The tag sends a response to the first passive internet of things instruction to the access network device, where the response includes fourth identification information of the tag and/or data stored in the tag.

Step S609: The access network device sends the response to the AMF network element (namely, the network device) via NAS signaling of the tag, where the response includes the fourth identification information of the tag and/or the data stored in the tag.

Step S610: The AMF network element (namely, the network device) sends the response to the RFID-H network element, where the response includes the fourth identification information of the tag and/or the data stored in the tag.

Step S611: The RFID-H network element sends the response to the NEF network element, where the response includes the fourth identification information of the tag and/or the data stored in the tag.

Step S612: The NEF network element sends the response to the passive internet of things server, where the response includes the fourth identification information of the tag and/or the data stored in the tag.

It should be noted that for an execution process of steps S606 to S612, refer to specific descriptions in steps S506 to S512 in FIG. 5a. Details are not described herein again.

Implementation of this embodiment of this application can produce at least the beneficial effects set forth in the foregoing embodiment in FIG. 5a. Details are not described herein again. The identification information of the access network device instead of the identification information of the tag is delivered, so that the first passive internet of things instruction is sent to multiple tags. For example, when the first passive internet of things instruction is an inventory instruction, a network side may inventory the multiple tags by delivering one first passive internet of things instruction. This helps improve inventory efficiency.

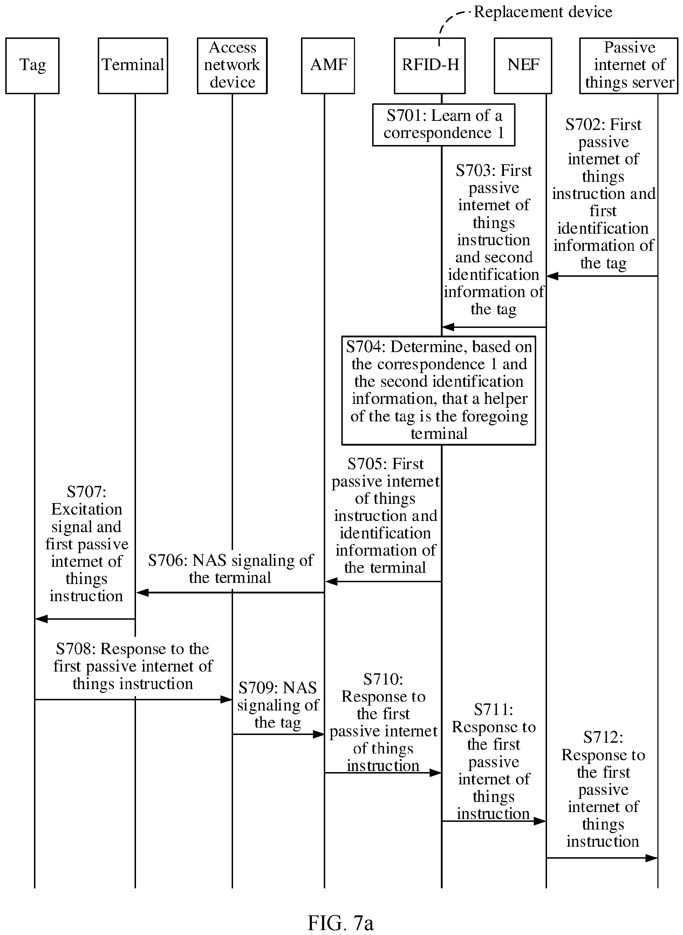

FIG. 7a is a schematic flowchart of still another information transmission method according to an embodiment of this application. The method describes in detail how an RFID-H network element learns of a correspondence 1 and then performs replacement in a first replacement manner when a replacement device is the RFID-H network element. It should be noted that in the embodiment in FIG. 7a, a network device may be understood as an AMF network element or the RFID-H network element. As shown in FIG. 7a, the method may include but is not limited to the following steps.

Step S701: The RFID-H network element learns of the correspondence 1.

The RFID-H network element may learn of the correspondence 1 in the following manner: The RFID-H network element receives first information (or referred to as third information) from the AMF network element that serves a terminal, where the first information indicates that there is a correspondence between the terminal and a tag, and the correspondence is for determining that the terminal is a helper of the tag. The AMF network element learns of the correspondence 1 based on the first information. Optionally, the first information may include identification information of the terminal and identification information (for example, second identification information) of the tag. In other words, after learning of the correspondence 1, the AMF network element may send the correspondence 1 to the RFID-H network element. In this case, the first information includes the correspondence 1. Optionally, the AMF network element may actively send the correspondence 1 to the RFID-H network element. Alternatively, the RFID-H network element may send a request to the AMF network element, where the request requests to obtain the correspondence 1 from the AMF network element. In this way, after learning of the correspondence 1, the AMF network element may send the correspondence 1 to the RFID-H network element, so that the RFID-H network element learns of the correspondence 1.

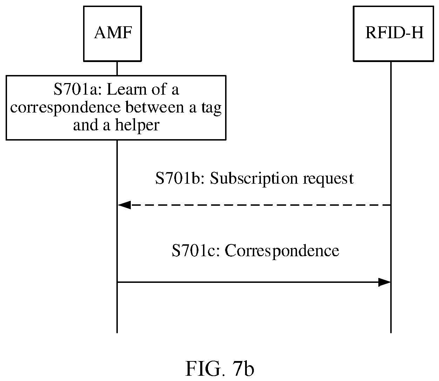

It should be noted that that the first information includes the correspondence 1, in other words, the AMF network element sends the complete correspondence 1 to the RFID-H network element, is used as an example. In another implementation, after discovering a correspondence between a helper and a tag (for example, one correspondence between a helper and a tag), the AMF network element may send the correspondence to the RFID-H network element, so that the RFID-H network element constructs or updates the correspondence 1. In this case, the first information includes a part of correspondences in the correspondence 1. The correspondence 1 includes a plurality of correspondences, and one correspondence may be understood as one row in Table 1. In this manner, the RFID-H network element can learn of a latest correspondence 1 in time. In addition, in this manner, the AMF network element may or may not store the correspondence 1. For example, FIG. 7b is a schematic flowchart of learning of the correspondence between the tag and the helper (namely, the terminal) by the RFID-H network element.

Step S701a: The AMF network element learns of the correspondence between the tag and the helper. For a process in which the AMF network element learns of the correspondence between the tag and the helper in step S701a, refer to step S505 in FIG. 5a.

Step S701b: The RFID-H network element sends a subscription request to the AMF network element, where the subscription request is for subscribing to a correspondence update event from the AMF network element, in other words, subscribing to a new correspondence between a tag and a helper from the AMF network element.

For example, after registration of a helper 1 is complete, the AMF network element learns of a tag 1 covered by the helper 1, and then may send a new correspondence (namely, a correspondence between the helper 1 and the tag 1) to the RFID-H network element, so that the RFID-H network element may include the new correspondence to the correspondence 1, to obtain the latest correspondence 1. Step S701b is optional.

Step S701c: After discovering the new correspondence, the AMF network element sends the correspondence to the RFID-H network element. For example, the AMF network element sends a subscription notification to the RFID-H network element, where the subscription notification includes the correspondence. After receiving the correspondence, the RFID-H network element may store or update the correspondence 1.

Step S702: A passive internet of things server sends a first passive internet of things instruction and first identification information of the tag to a NEF network element, where the first passive internet of things instruction is an instruction to be sent to the tag.

Step S703: The NEF network element sends the first passive internet of things instruction and the second identification information of the tag to the RFID-H network element.

The first passive internet of things instruction and the second identification information of the tag may be carried in a same message (for example, a first message). It should be noted that for an execution process of steps S702 and S703, refer to specific descriptions in steps S502 and S503 in FIG. 5a. Details are not described herein again.

Step S704: The RFID-H network element determines, based on the correspondence 1 and the second identification information of the tag, that the helper of the tag is the foregoing terminal.

After receiving the first passive internet of things instruction and the second identification information of the tag, the RFID-H network element may perform replacement in the first replacement manner. It may be understood that the RFID-H network element needs to learn of the correspondence 1, to perform replacement based on the correspondence 1 and the second identification information of the tag. Specifically, the RFID-H network element determines that a terminal that corresponds to the tag indicated by the second identification information and that is in the correspondence 1 is the helper of the tag. After determining the terminal that serves as the helper of the tag, the RFID-H network element sends the first passive internet of things instruction to the AMF network element that serves the determined terminal, to complete the replacement.

Step S705: The RFID-H network element sends the first passive internet of things instruction and identification information of the terminal to the AMF network element that serves the terminal.

After determining the terminal that serves as the helper of the tag, the RFID-H network element sends the first passive internet of things instruction and the identification information of the terminal to the AMF network element that serves the terminal, so that the AMF network element may determine, based on the identification information of the terminal, to send the first passive internet of things instruction to the terminal.

Step S706: The AMF network element sends the first passive internet of things instruction to the terminal via NAS signaling of the terminal.

After receiving the first passive internet of things instruction and the identification information of the terminal, the AMF network element sends the first passive internet of things instruction to the terminal via control plane signaling (for example, the NAS signaling) of the terminal.

In an implementation, when the network device is the AMF network element, the terminal indicated by the identification information of the terminal received from the RFID-H network element may be determined as the helper of the tag.

Step S707: The terminal sends an excitation signal and the first passive internet of things instruction to the tag.

Step S708: The tag sends a response to the first passive internet of things instruction to an access network device, where the response includes fourth identification information of the tag and/or data stored in the tag.

Step S709: The access network device sends the response to the AMF network element (namely, the network device) via NAS signaling of the tag, where the response includes the fourth identification information of the tag and/or the data stored in the tag.

Step S710: The AMF network element sends the response to the RFID-H network element, where the response includes the fourth identification information of the tag and/or the data stored in the tag.

Step S711: The RFID-H network element sends the response to the NEF network element, where the response includes the fourth identification information of the tag and/or the data stored in the tag.

Step S712: The NEF network element sends the response to the passive internet of things server, where the response includes the fourth identification information of the tag and/or the data stored in the tag.

It should be noted that for an execution process of steps S707 to S712, refer to specific descriptions in steps S507 to S512 in FIG. 5a. Details are not described herein again.

Implementation of this embodiment of this application can produce at least the beneficial effects set forth in the foregoing embodiment in FIG. 5a. Details are not described herein again.

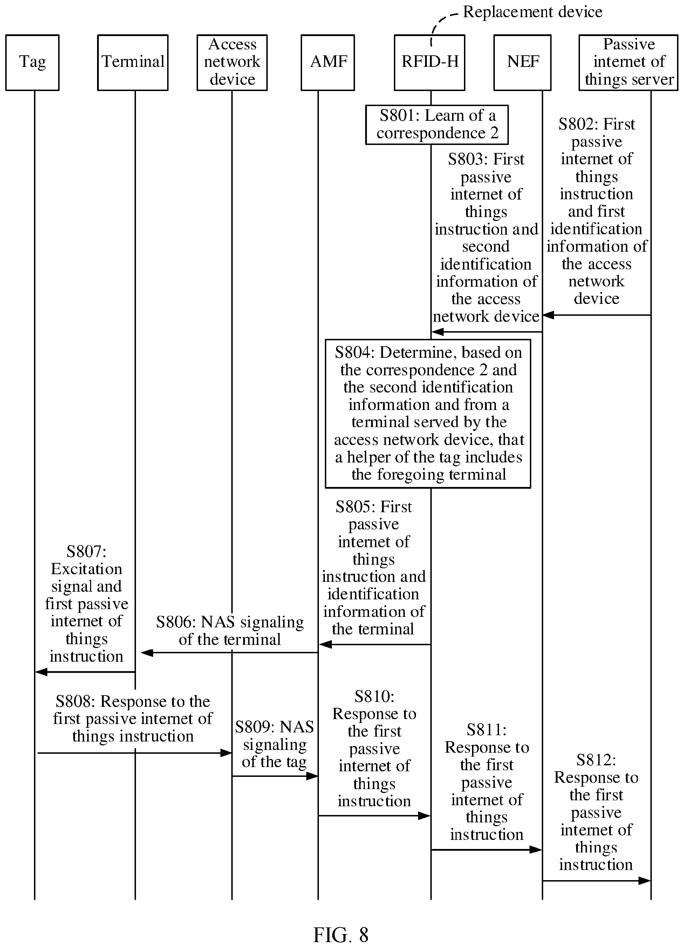

FIG. 8 is a schematic flowchart of still another information transmission method according to an embodiment of this application. The method describes in detail how an RFID-H network element learns of a correspondence 2 and then performs replacement in a second replacement manner when a replacement device is the RFID-H network element. It should be noted that for a step in the embodiment in FIG. 8 that is the same as or similar to that in the embodiment in FIG. 7a, refer to specific descriptions in the embodiment in FIG. 7a. Details are not described in this embodiment again. It should be further noted that, in the embodiment in FIG. 8, a network device may be understood as an AMF network element or the RFID-H network element. As shown in FIG. 8, the method may include but is not limited to the following steps.

Step S801: The RFID-H network element learns of the correspondence 2.

The RFID-H network element may learn of the correspondence 2 in the following manner: The RFID-H network element receives second information (or referred to as fourth information) from the AMF network element that serves a terminal, where the second information indicates an access network device that serves the terminal. Optionally, the second information may include identification information of the terminal and identification information (for example, second identification information) of the access network device that serves the terminal. In other words, after learning of the correspondence 2, the AMF network element may send the correspondence 2 to the RFID-H network element. In this case, the second information includes the correspondence 2. Optionally, the AMF network element may actively send the correspondence 2 to the RFID-H network element. Alternatively, the RFID-H network element may send a request to the AMF network element, where the request requests to obtain the correspondence 2 from the AMF network element. In this way, after learning of the correspondence 2, the AMF network element may send the correspondence 2 to the RFID-H network element, so that the RFID-H network element learns of the correspondence 2.

It should be noted that that the second information includes the correspondence 2, in other words, the AMF network element sends the complete correspondence 2 to the RFID-H network element, is used as an example. In another implementation, after discovering a correspondence between a helper (namely, a terminal) and an access network device that serves the helper (for example, one correspondence between a helper and an access network device), the AMF network element may send the correspondence to the RFID-H network element, so that the RFID-H network element constructs or updates the correspondence 2. In this case, the second information includes a part of correspondences in the correspondence 2. The correspondence 2 includes a plurality of correspondences, and one correspondence may be understood as one row in Table 2. In this manner, the RFID-H network element can learn of a latest correspondence 2 in time. In addition, in this manner, the AMF network element may or may not store the correspondence 2. For example, the subscription request shown in FIG. 7b may be for subscribing to a correspondence 2 update event from the AMF network element, in other words, subscribing to a new correspondence between a helper and an access network device from the AMF network element. Optionally, the second information may be sent by the AMF network element to the RFID-H network element after the terminal accesses a core network. For example, after registration of a helper 1 is complete, the AMF network element learns that the helper 1 is within coverage of an access network device 1, and then may send a new correspondence (namely, a correspondence between the helper 1 and the access network device 1) to the RFID-H network element, so that the RFID-H network element may include the new correspondence to the correspondence 2, to obtain the latest correspondence 2.

Step S802: A passive internet of things server sends a first passive internet of things instruction and first identification information of the access network device to a NEF network element, where the first passive internet of things instruction is an instruction to be sent to a tag.

It should be noted that for content of the first identification information of the access network device, refer to related descriptions in the embodiment in FIG. 3a. Details are not described herein again.

Step S803: The NEF network element sends the first passive internet of things instruction and the second identification information of the access network device to the RFID-H network element.

The first passive internet of things instruction and the second identification information of the access network device may be included in a same message (for example, a first message). It should be noted that for an execution process of step S803, refer to specific descriptions in step S303 in FIG. 3a. Details are not described herein again.

Step S804: The RFID-H network element determines, based on the correspondence 2 and the second identification information of the access network device and from a terminal served by the access network device, that a helper of the tag includes the foregoing terminal.

There may be one or more tags, and correspondingly, there may be one or more helpers of the tag. The helper that is of the tag and that is determined by the RFID-H network element based on the correspondence 2 and the second identification information of the access network device is one or more of the terminals served by the access network device.

It should be noted that a manner in which the RFID-H network element determines, based on the correspondence 2 and the second identification information of the access network device, the helper of the tag from the terminals served by the access network device is the same as the manner in which the AMF network element determines, based on the correspondence 2 and the second identification information of the access network device, the helper of the tag from the terminals served by the access network device. For details, refer to descriptions in step S605 in FIG. 6. Details are not described herein again. It should be further noted that, that the RFID-H network element receives the second identification information of the access network device is used as an example. In another feasible implementation, the RFID-H network element may receive information indicating the access network device.

Step S805: The RFID-H network element sends the first passive internet of things instruction and identification information of the terminal to the AMF network element that serves the terminal.

After determining, from the terminals served by the access network device, the terminal that serves as the helper of the tag, the RFID-H network element sends the first passive internet of things instruction and the identification information of the terminal to the AMF network element that serves the terminal, so that the AMF network element may determine, based on the identification information of the terminal, to send the first passive internet of things instruction to the terminal, to complete the replacement. It should be noted that in all embodiments of this application, one or more helpers of the tag may be determined from the terminals served by the access network device.

Step S806: The AMF network element sends the first passive internet of things instruction to the terminal via NAS signaling of the terminal.

Step S807: The terminal sends an excitation signal and the first passive internet of things instruction to the tag.

Step S808: The tag sends a response to the first passive internet of things instruction to the access network device, where the response includes fourth identification information of the tag and/or data stored in the tag.

Step S809: The access network device sends the response to the AMF network element via NAS signaling of the tag, where the response includes the fourth identification information of the tag and/or the data stored in the tag.

Step S810: The AMF network element sends the response to the RFID-H network element, where the response includes the fourth identification information of the tag and/or the data stored in the tag.

Step S811: The RFID-H network element sends the response to the NEF network element, where the response includes the fourth identification information of the tag and/or the data stored in the tag.

Step S812: The NEF network element sends the response to the passive internet of things server, where the response includes the fourth identification information of the tag and/or the data stored in the tag.

It should be noted that for an execution process of steps S806 to S812, refer to specific descriptions in steps S606 to S612 in FIG. 6. Details are not described herein again.

Implementation of this embodiment of this application can produce at least the beneficial effects set forth in the foregoing embodiment in FIG. 6. Details are not described herein again.

The embodiments in FIG. 5a to FIG. 8 describe the method for transmitting the passive internet of things instruction to the terminal via the control plane signaling of the terminal when the replacement occurs in the core network. The following describes a method for transmitting the passive internet of things instruction to the terminal through the user plane channel of the terminal when the replacement occurs in the core network.

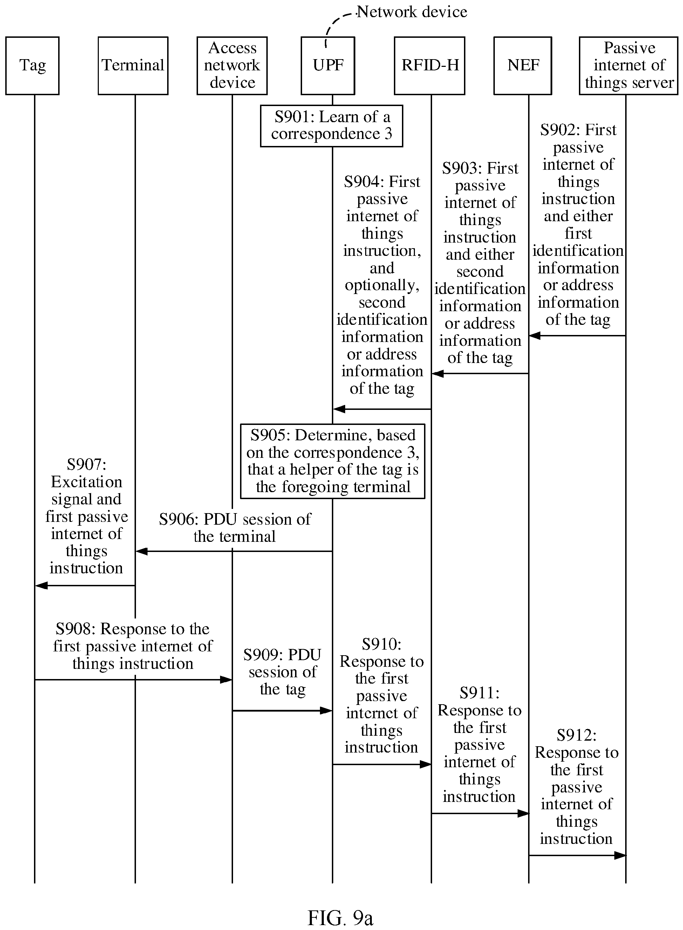

FIG. 9a is a schematic flowchart of still another information transmission method according to an embodiment of this application. The method describes in detail how a UPF network element learns of a correspondence 3 and then performs replacement in a third replacement manner when a network device and a replacement device are the same and are the UPF network element. As shown in FIG. 9a, the method may include but is not limited to the following steps.

Step S901: The UPF network element (namely, the network device) learns of the correspondence 3.

The UPF network element (namely, the network device) may learn of a first type of correspondence 3 or a second type of correspondence 3. The first type of correspondence 3 may be understood as a correspondence 1 plus address information of a terminal. In this embodiment of this application, the UPF network element may receive first information from an SMF network element, where the first information indicates a correspondence between the terminal and a tag. The UPF network element obtains the correspondence 3 based on the first information. The correspondence is for determining that the terminal is a helper of the tag. The first information may include identification information of the terminal, identification information of the tag, and the address information of the terminal. In this case, the first type of correspondence 3 may be learned of based on the first information. Alternatively, the first information includes the address information of the terminal and address information of the tag. In this case, the UPF network element may learn of the second type of correspondence 3 based on the first information.

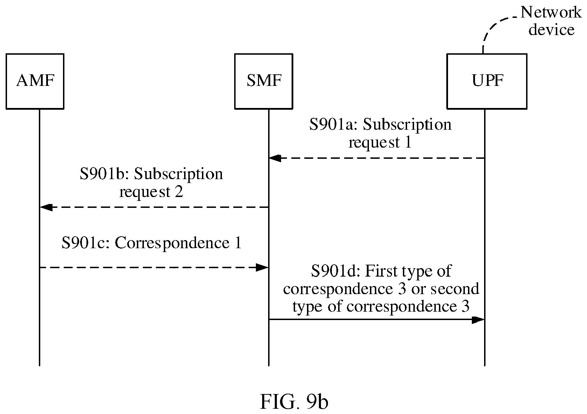

For example, the UPF network element may learn of the first type of correspondence 3 or the second type of correspondence 3 through a procedure shown in FIG. 9b.

Step S901a: The UPF network element sends a subscription request 1 to the SMF network element, where the subscription request 1 is for subscribing to the first type of correspondence 3 or the second type of correspondence 3 from the SMF network element.

Step S901b: If the subscription request 1 is for subscribing to the first type of correspondence 3 from the SMF network element, after receiving the subscription request 1, the SMF network element sends a subscription request 2 to an AMF network element, where the subscription request 2 is for subscribing to the first type of correspondence 1 from the AMF network element. Step S901a and step S901b are optional.

Step S901c: The AMF network element learns of the correspondence 1, and sends the correspondence 1 to the SMF network element after receiving the subscription request 2. For example, the AMF network element sends a subscription notification 2 to the SMF network element, where the subscription notification 2 includes the correspondence 1. It may be understood that, if the procedure shown in FIG. 9b does not include step S901b, step S901c may not be included.

Step S901d: If the subscription request 1 is for subscribing to the first type of correspondence 3 from the SMF network element, after receiving the correspondence 1, the SMF network element obtains address information that is of the terminal and that is included in the correspondence 1, and associates the obtained address information with the correspondence 1, to obtain the first type of correspondence 3. Then, the SMF network element sends the first type of correspondence 3 to the UPF network element. If the subscription request 1 is for subscribing to the second type of correspondence 3 from the SMF network element, the SMF network element sends the second type of correspondence 3 to the UPF network element. For example, the SMF network element sends a subscription notification 1 to the UPF network element, where the subscription notification 1 includes the first type of correspondence 3 or the second type of correspondence 3.

It should be noted that that in FIG. 9b, the subscription request 1 requests the complete correspondence 3 (for example, the first type of correspondence 3 or the second type of correspondence 3), and the subscription request 2 requests the complete correspondence 1 is used as an example. In another feasible implementation, the subscription request 1 may request a part of content in the correspondence 3 (for example, the first type of correspondence 3 or the second type of correspondence 3), and the UPF may construct or update the first type of correspondence 3 based on the received part of content in the first type of correspondence 3, or construct or update the second type of correspondence 3 based on the received part of content in the second type of correspondence 3. In addition, the subscription request 2 may request a part of content in the correspondence 1, and the SMF may construct or update the correspondence 1 based on the received part of content in the correspondence 1. It should be further noted that, the AMF may alternatively actively feed back a part or all of content in the correspondence 1 to the SMF, and the SMF may feed back a part or all of content in the correspondence 3 (for example, the first type of correspondence 3 or the second type of correspondence 3) to the UPF. In other words, S901a and S901b are optional.

Step S902: A passive internet of things server sends a first passive internet of things instruction and either first identification information of the tag or the address information of the tag to a NEF network element, where the first passive internet of things instruction is an instruction to be sent to the tag.

Step S903: The NEF network element sends the first passive internet of things instruction and either second identification information of the tag or the address information of the tag to an RFID-H network element.

It should be noted that for an execution process of steps S902 and S903, refer to specific descriptions in steps S502 and S503 in FIG. 5a. Details are not described herein again.

Step S904: The RFID-H network element sends the first passive internet of things instruction to the UPF network element (namely, the network device). Optionally, the second identification information of the tag or the address information of the tag is further sent.

After receiving the first passive internet of things instruction, the RFID-H network element may determine the UPF network element, and send the first passive internet of things instruction to the determined UPF network element. Specifically, an N6 connection about the tag may be established between the RFID-H network element and the UPF network element. The RFID-H network element may send the first passive internet of things instruction to the UPF network element through the N6 connection. Correspondingly, the UPF network element may learn of, through an N6 interface for receiving the first passive internet of things instruction, the tag to which the first passive internet of things instruction is to be sent. In other words, the RFID-H network element does not need to explicitly notify the UPF network element of the tag to which the first passive internet of things instruction is to be sent.

Optionally, the RFID-H network element may further send the second identification information of the tag or the address information of the tag to the determined UPF network element, in other words, the RFID-H network element sends the second identification information of the tag or the address information of the tag to the UPF network element, to explicitly notify the UPF network element of the tag to which the first passive internet of things instruction is to be sent. When the RFID-H network element sends the first passive internet of things instruction and either the identification information of the tag (for example, the second identification information of the tag) or the address information of the tag to the UPF network element, the first passive internet of things instruction and either the identification information of the tag (for example, the second identification information of the tag) or the address information of the tag may be carried in a same message (for example, a first message).

In a first possible implementation, the RFID-H network element may determine the UPF network element in the following manner: The RFID-H network element obtains, from the SMF network element, address information of the UPF network element corresponding to the tag, to determine the UPF network element to which the first passive internet of things instruction is to be sent.

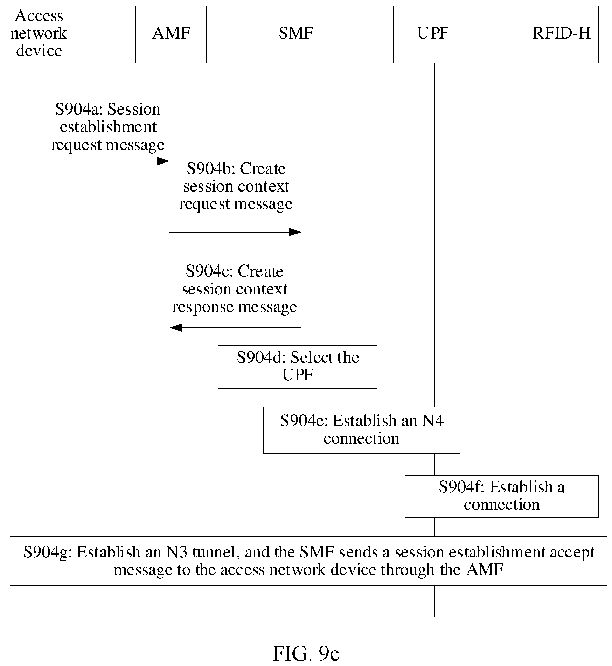

In a second possible implementation, the RFID-H network element may determine the UPF network element in the following manner: In a process in which an access network device establishes a user plane channel for the tag, the RFID-H network element may learn of the UPF network element corresponding to the tag. Therefore, after receiving the second identification information of the tag or the address information of the tag, the RFID-H network element may send the first passive internet of things instruction to the UPF network element corresponding to the tag. For example, the access network device may establish a PDU session for the tag through a procedure shown in FIG. 9c. The procedure may include but is not limited to steps S904a to S904g.

Step S904a: The access network device sends a session establishment request message to the AMF network element, where the session establishment request message includes a session identifier, a request type, and a data network name (data network name, DNN). The session establishment request message requests to establish the PDU session for the tag.

The session identifier identifies the session. Specifically, the session establishment request message sent by the access network device to the AMF network element is included in an N2 message. The AMF network element may learn of, through an interface for receiving the N2 message, the tag for which the session establishment request message requests to establish the PDU session. Optionally, the request type or the data network name may indicate that the PDU session is requested to be established between the access network device and the RFID-H network element.

Step S904b: After receiving the session establishment request message, the AMF network element sends a create session context request message to the SMF network element, where the create session context request message includes the session identifier, the request type, and the DNN.

Step S904c: The SMF network element receives the create session context request message, and sends a create session context response message to the AMF network element.

Step S904d: The SMF network element selects the UPF network element.

Step S904e: The SMF network element establishes an N4 connection to the UPF network element, and indicates to the UPF network element that a connection needs to be established to the RFID-H network element. In a possible implementation, the SMF network element sends address information (such as an IP address or the like) of the RFID-H network element to the UPF network element, and also indicates the UPF network element to establish the connection to the RFID-H network element.

Step S904f: The UPF network element establishes the connection to the RFID-H network element. In a possible implementation, the UPF network element establishes the N6 connection to the RFID-H network element.

Step S904g: The UPF network element allocates an N3 tunnel endpoint identifier that is on a core network side, and sends the N3 tunnel endpoint identifier to the SMF network element. The SMF network element sends the N3 tunnel endpoint identifier and a session establishment accept message to the access network device through the AMF network element. The access network device feeds back an N3 tunnel endpoint identifier that is on an access network side to the SMF network element through the AMF network element. The SMF network element sends the N3 tunnel endpoint identifier that is on the access network side to the UPF network element. Through interaction in step S904g, the access network device establishes an N3 tunnel with the UPF network element, and successfully establishes the PDU session for the tag.

Through the procedure shown in FIG. 9c, the RFID-H network element may learn of address information (for example, address information of the UPF network element) of the PDU session established by the access network device for the tag. Therefore, the RFID-H network element may determine the UPF network element.

In a third possible implementation, a connection between the UPF network element and the RFID-H network element may be established or configured in advance. The RFID-H network element determines the UPF network element based on configured or stored information about the UPF network element.

Step S905: The UPF network element (namely, the network device) determines, based on the correspondence 3, that the helper of the tag is the foregoing terminal.

After receiving the first passive internet of things instruction, the UPF network element may perform replacement in the third replacement manner, in other words, perform replacement based on the correspondence 3. If the UPF network element receives the second identification information of the tag or the address information of the tag, the UPF network element may determine, based on the correspondence 3 and either the second identification information of the tag or the address information of the tag, the address information of the terminal that serves as the helper of the tag. If the UPF network element does not receive the second identification information or the address information of the tag, the UPF network element may determine, through the N6 interface for receiving the first passive internet of things instruction, the tag corresponding to the first passive internet of things instruction, and determine, based on the first type of correspondence 3 and the identification information (for example, the second identification information) of the tag, the address information of the terminal that serves as the helper of the tag. If the UPF network element receives the second identification information of the tag, the UPF network element may determine, based on the first type of correspondence 3 and the second identification information of the tag, the address information of the terminal that serves as the helper of the tag. Specifically, the UPF network element determines that a terminal that is in the first type of correspondence 3 and that corresponds to the tag indicated by the second identification information is the helper of the tag, obtains the address information of the terminal, learns of a PDU session of the terminal, and sends the first passive internet of things instruction to the terminal through the PDU session of the terminal. If the UPF network element receives the address information of the tag, the UPF network element may determine, based on the second type of correspondence 3 and the address information of the tag, the address information of the terminal that serves as the helper of the tag. Specifically, the UPF network element determines that address information that is in the second type of correspondence 3 and that corresponds to the address information of the tag is the address information of the terminal that serves as the helper of the tag, and sends the first passive internet of things instruction to the terminal through a user plane channel (for example, a PDU session) of the terminal.

It should be noted that that in FIG. 9a, the passive internet of things server sends the first passive internet of things instruction and either the first identification information of the tag or the address information of the tag to the NEF network element, in other words, the UPF network element determines, based on the correspondence 3 and either the second identification information of the tag or the address information of the tag, the address information of the terminal that serves as the helper of the tag, is used as an example. In another feasible implementation, the passive internet of things server may send the first passive internet of things instruction and first identification information of the access network device to the NEF network element. Correspondingly, the UPF network element may receive the first passive internet of things instruction from the RFID-H network element, optionally, further receive second identification information of the access network device, and determine, based on a correspondence 4 (including a correspondence between identification information (for example, the second identification information) of the access network device and address information of a terminal served by the access network device, or including the correspondence 2 and the address information of the terminal) and from the address information of the terminal served by the access network device, the address information of the terminal that serves as the helper of the tag. Optionally, the UPF network element may receive second information from the AMF network element that serves the terminal, where the second information indicates the access network device that serves the terminal; and learn of the correspondence 2 based on the second information, and then obtain the address information of the terminal from the SMF network element, to obtain the correspondence 4. The second information may include the identification information of the terminal and the identification information of the access network device.

Step S906: The UPF network element (namely, the network device) sends the first passive internet of things instruction to the terminal through the PDU session of the terminal (or the user plane channel of the terminal).

After determining the address information of the terminal corresponding to the tag, the UPF network element may send the first passive internet of things instruction to the terminal through the user plane channel (for example, the PDU session, a user plane connection, a session tunnel, or the like) of the terminal (which is the helper), to complete the replacement. When the RFID-H network element sends the address information of the tag and the first passive internet of things instruction to the UPF network element, the address information of the tag and the first passive internet of things instruction may be carried in a first packet, and the UPF network element may send a second packet including the first passive internet of things instruction to the terminal. A destination address of the first packet is an address of the tag, and a destination address of the second packet is an address of the terminal.

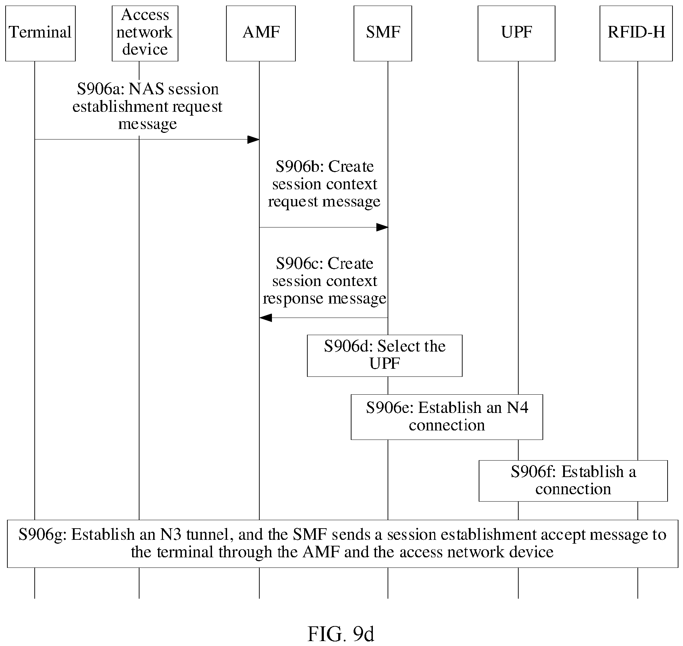

For example, a procedure for establishing the PDU session of the terminal is shown in FIG. 9d. The procedure may include but is not limited to steps S906a to S906g.

Step S906a: The terminal sends a NAS session establishment request message to the AMF network element, where the NAS session establishment request message includes a session identifier, a request type, and a DNN. The NAS session establishment request message requests to establish the PDU session for the terminal.

The session identifier identifies the session. Specifically, the terminal may send the NAS session establishment request message to the AMF network element through the access network device, where the NAS session establishment request message is included in an N2 message. The access network device may learn of, through a connection to the terminal, the terminal that requests to establish the PDU session, and then send the N2 message to the AMF network element. Correspondingly, the AMF network element may learn of, through an interface for receiving the N2 message, the tag for which the NAS session establishment request message requests to establish the PDU session. Optionally, the request type or the data network name may indicate that the PDU session is requested to be established between the access network device and the RFID-H network element.

Step S906b: After receiving the NAS session establishment request message, the AMF network element sends a create session context request message to the SMF network element, where the create session context request message includes the session identifier, the request type, and the DNN.

Step S906c: The SMF network element receives the create session context request message, and sends a create session context response message to the AMF network element.

Step S906d: The SMF network element selects the UPF network element.

Step S906e: The SMF network element establishes an N4 connection to the UPF network element, and indicates to the UPF network element that a connection needs to be established to the RFID-H network element. In a possible implementation, the SMF network element sends the address information (such as the IP address or the like) of the RFID-H network element to the UPF network element, and also indicates the UPF network element to establish the connection to the RFID-H network element.

Step S906f: The UPF network element establishes the connection to the RFID-H network element. In a possible implementation, the UPF network element establishes an N6 connection to the RFID-H network element. In another possible implementation, a connection between the UPF network element and the RFID-H network element may be established or configured in advance.

Step S906g: The UPF network element allocates an N3 tunnel endpoint identifier that is on the core network side, and sends the N3 tunnel endpoint identifier to the SMF network element. The SMF network element sends the N3 tunnel endpoint identifier to the access network device through the AMF network element, and sends a session establishment accept message to the terminal through the AMF network element and the access network device. The access network device establishes a corresponding AN resource (an access network resource) with the terminal, and feeds back an N3 tunnel endpoint identifier that is on the access network side to the SMF network element through the AMF network element. The SMF network element sends the N3 tunnel endpoint identifier that is on the access network side to the UPF network element. Through interaction in step S906g, the access network device establishes an N3 tunnel with the UPF network element, establishes the AN resource with the terminal, and successfully establishes the PDU session for the terminal.

Step S907: The terminal sends an excitation signal and the first passive internet of things instruction to the tag.

Step S908: The tag sends a response to the first passive internet of things instruction to the access network device, where the response includes fourth identification information of the tag and/or data stored in the tag.

It should be noted that for an execution process of steps S907 and S908, refer to specific descriptions in steps S507 to S508 in FIG. 5a. Details are not described herein again.

Step S909: The access network device sends the response to the UPF network element (namely, the network device) through the user plane channel of the tag, where the response includes the fourth identification information of the tag and/or the data stored in the tag.

Optionally, after receiving the response, the access network device may send the response to the UPF network element through the user plane channel (for example, the PDU session) of the tag. For the procedure for establishing the PDU session of the tag, refer to FIG. 9c. Through the interaction in step S904g, the access network device establishes the N3 tunnel with the UPF network element. Therefore, the access network device may send the response to the UPF network element through the PDU session of the tag.

Optionally, after receiving the response, the access network device may also send the response to the AMF network element through control plane signaling of the tag. For details, refer to the foregoing descriptions.

Step S910: The UPF network element (namely, the network device) sends the response to the RFID-H network element, where the response includes the fourth identification information of the tag and/or the data stored in the tag.

Step S911: The RFID-H network element sends the response to the NEF network element, where the response includes the fourth identification information of the tag and/or the data stored in the tag.

Step S912: The NEF network element sends the response to the passive internet of things server, where the response includes the fourth identification information of the tag and/or the data stored in the tag.

It should be noted that for an execution process of steps S911 and S912, refer to specific descriptions in steps S511 and S512 in FIG. 5a. Details are not described herein again.

In this embodiment of this application, the network device is the UPF network element, and the UPF network element may send, to the terminal through the PDU session, the first passive internet of things instruction to be sent to the tag. Implementation of this embodiment of this application can produce at least the beneficial effects set forth in the foregoing embodiment in FIG. 3a and the following beneficial effects:
1. The first passive internet of things instruction is delivered to the terminal through the PDU session of the terminal, so that a RAN does not need to parse the instruction.
2. The UPF network element in a core network performs replacement, and a dynamic pairing relationship between the helper and the tag may be centrally maintained in the core network.
3. The first passive internet of things instruction is transmitted through the PDU session, so that a transmission delay can be reduced, and data timeliness can be improved. Particularly, in a real-time positioning scenario, a delay requirement is high. Performing data transmission through the user plane channel can shorten a transmission time period, and improve positioning precision and real-time performance. In addition, transmission through the user plane channel can provide different QoS. In this way, different QoS may be used for different service flows, so that the different service flows do not affect each other in a transmission process.

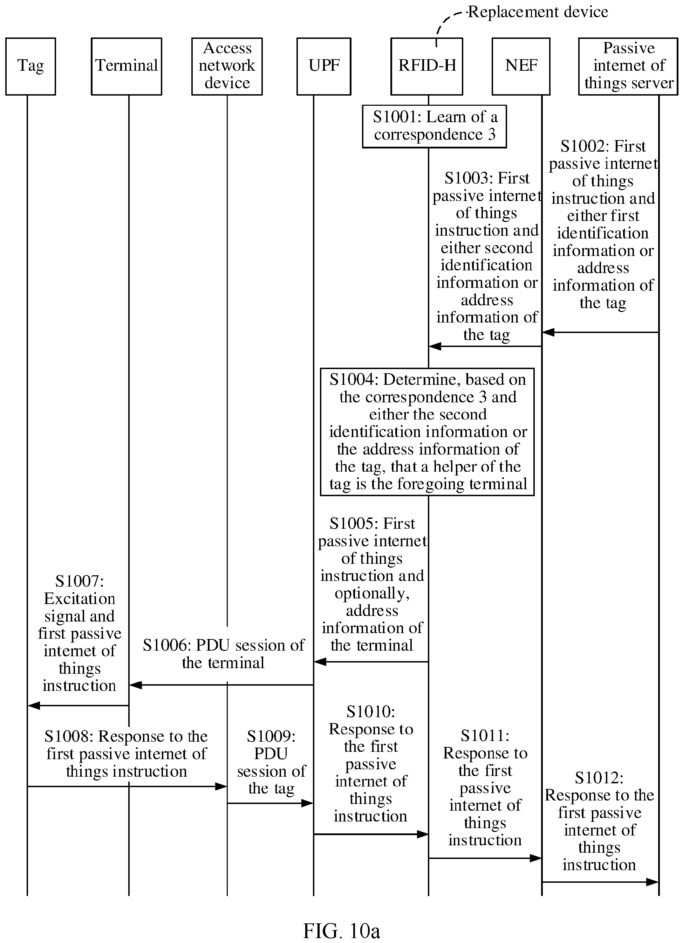

FIG. 10a is a schematic flowchart of still another information transmission method according to an embodiment of this application. The method describes in detail how an RFID-H network element learns of a correspondence 3 and performs replacement in a third replacement manner when a replacement device is the RFID-H network element, where a first passive internet of things instruction is transmitted to a terminal through a user plane channel of the terminal after the replacement. It should be noted that in the embodiment in FIG. 10a, a network device may be understood as a UPF network element or the RFID-H network element. It should be further noted that, for a step in the embodiment in FIG. 10a that is the same as or similar to that in the embodiment in FIG. 9a, refer to specific descriptions in the embodiment in FIG. 9a. Details are not described in this embodiment again. As shown in FIG. 10a, the method may include but is not limited to the following steps.

Step S1001: The RFID-H network element learns of the correspondence 3.

The RFID-H network element may learn of a first type of correspondence 3 or a second type of correspondence 3. The first type of correspondence 3 may be understood as a correspondence 1 plus address information of the terminal.

In this embodiment of this application, the RFID-H network element may receive first information from an SMF network element, where the first information indicates a correspondence between the terminal and a tag. The RFID-H network element obtains the correspondence 3 based on the first information. The correspondence is for determining that the terminal is a helper of the tag. The first information may include identification information of the terminal, identification information of the tag, and the address information of the terminal. In this case, the first type of correspondence 3 may be learned of based on the first information. Alternatively, the first information includes the address information of the terminal and address information of the tag. In this case, the second type of correspondence 3 may be learned of based on the first information.

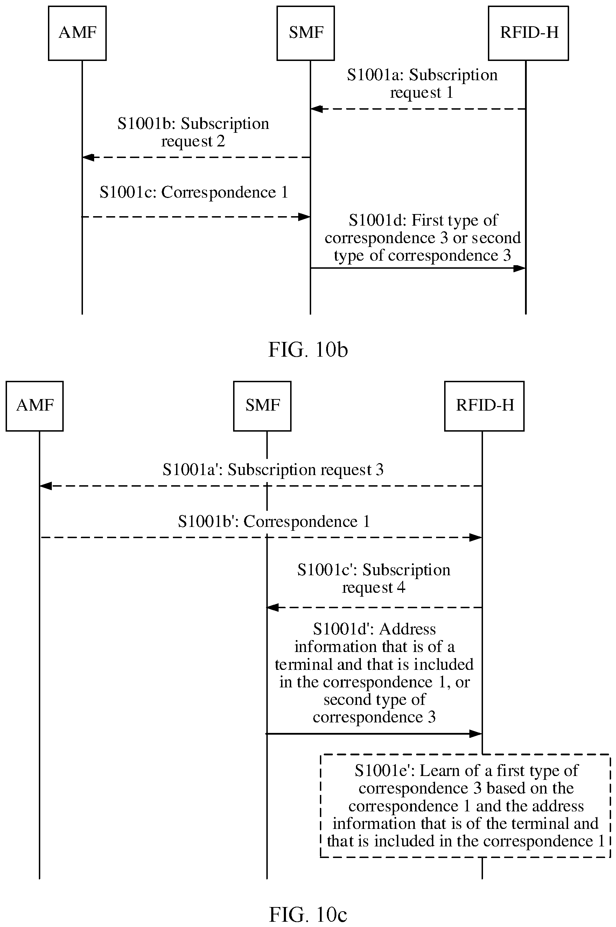

In a first possible implementation, the RFID-H network element may learn of the first type of correspondence 3 or the second type of correspondence 3 through a procedure shown in FIG. 10b.

Step S1001a: The RFID-H network element sends a subscription request 1 to the SMF network element, where the subscription request 1 is for subscribing to the first type of correspondence 3 or the second type of correspondence 3 from the SMF network element.

Step S1001b: If the subscription request 1 is for subscribing to the first type of correspondence 3 from the SMF network element, after receiving the subscription request 1, the SMF network element sends a subscription request 2 to an AMF network element, where the subscription request 2 is for subscribing to the first type of correspondence 1 from the AMF network element. Step S 1001a and step S1001b are optional.

Step S1001c: The AMF network element learns of the correspondence 1, and sends the correspondence 1 to the SMF network element after receiving the subscription request 2. For example, the AMF network element sends a subscription notification 2 to the SMF network element, where the subscription notification 2 includes the correspondence 1. It may be understood that, if the procedure shown in FIG. 10b does not include step S1001b, step S1001c may not be included.

Step S1001d: If the subscription request 1 is for subscribing to the first type of correspondence 3 from the SMF network element, after receiving the correspondence 1, the SMF network element obtains address information that is of the terminal and that is included in the correspondence 1, and associates the obtained address information with the correspondence 1, to obtain the first type of correspondence 3. Then, the SMF network element sends the first type of correspondence 3 to the RFID-H network element. If the subscription request 1 is for subscribing to the second type of correspondence 3 from the SMF network element, the SMF network element sends the second type of correspondence 3 to the UPF network element. For example, the SMF network element sends a subscription notification 1 to the UPF network element, where the subscription notification 1 includes the first type of correspondence 3 or the second type of correspondence 3.

In a second possible implementation, the RFID-H network element may learn of the first type of correspondence 3 or the second type of correspondence 3 through a procedure shown in FIG. 10c.

Step S1001a': If the RFID-H network element needs to learn of the first type of correspondence 3, the RFID-H network element may send a subscription request 3 to an AMF network element, where the subscription request 3 is for subscribing to the correspondence 1 from the AMF network element. Step S 1001a' is optional.

Step S1001b': The AMF network element sends the correspondence 1 to the RFID-H network element. For example, after receiving the subscription request 3, the AMF network element sends a subscription notification 3 to the RFID-H network element, where the subscription notification 3 includes the correspondence 1. It may be understood that, if the RFID-H network element needs to learn of the second type of correspondence 3, the procedure shown in FIG. 10c may not include step S 1 00 1 b'.

Step S1001c': If the RFID-H network element needs to learn of the first type of correspondence 3, the RFID-H network element may send a subscription request 4 to the SMF network element, where the subscription request 4 is for subscribing to, from the SMF network element, address information that is of the terminal and that is included in the correspondence 1. If the RFID-H network element needs to learn of the second type of correspondence 3, the subscription request 4 sent by the RFID-H network element to the SMF network element is for subscribing to the second type of correspondence 3 from the SMF network element. Step S1001c' is optional.

Step S 1001d': The SMF network element sends the address information that is of the terminal and that is included in the correspondence 1 to the RFID-H network element, or sends the second type of correspondence 3 to the RFID-H network element. For example, after receiving the subscription request 4, the SMF network element sends a subscription notification 4 to the RFID-H network element. If the subscription request 4 is for subscribing to, from the SMF network element, the address information that is of the terminal and that is included in the correspondence 1, the subscription notification 4 includes the address information that is of the terminal and that is included in the correspondence 1. If the subscription request 4 is for subscribing to the second type of correspondence 3 from the SMF network element, the subscription notification 4 includes the second type of correspondence 3.

Step S1001e': If the RFID-H network element receives the correspondence 1 and the address information that is of the terminal and that is included in the correspondence 1, the RFID-H network element learns of the first type of correspondence 3 based on the correspondence 1 and the address information that is of the terminal and that is included in the correspondence 1. It may be understood that if the RFID-H network element receives the second type of correspondence 3 from the AMF network element, the procedure shown in FIG. 10c may not include step S1001e'.

It should be noted that that in FIG. 10b and FIG. 10c, the complete first type of correspondence 3, the complete second type of correspondence 3, and the complete correspondence 1 are requested is used as an example. In another feasible implementation, the RFID-H network element may obtain a part of content in the first type of correspondence 3 (or the second type of correspondence 3 or the correspondence 1) through one time of receiving, and may construct or update the first type of correspondence 3 (or the second type of correspondence 3 or the correspondence 1) based on the received part of content in the first type of correspondence 3 (or the second type of correspondence 3 or the correspondence 1). It should be further noted that, the AMF may alternatively actively feed back a part or all of content in the correspondence 1 to the SMF (or the RFID-H network element), and the SMF may alternatively feed back a part or all of content in the first type of correspondence 3 or the second type of correspondence 3 to the RFID-H network element.

Step S1002: A passive internet of things server sends the first passive internet of things instruction and either first identification information of the tag or the address information of the tag to a NEF network element, where the first passive internet of things instruction is an instruction to be sent to the tag.

Step S1003: The NEF network element sends the first passive internet of things instruction and either second identification information of the tag or the address information of the tag to the RFID-H network element.

It should be noted that for an execution process of steps S1002 and S1003, refer to specific descriptions in steps S902 and S903 in FIG. 9a. Details are not described herein again.

Step S1004: The RFID-H network element determines, based on the correspondence 3 and either the second identification information or the address information of the tag, that the helper of the tag is the foregoing terminal.

After receiving the correspondence 3 and either the second identification information or the address information of the tag, the RFID-H network element may perform replacement in the third replacement manner. If the second identification information of the tag is received, the terminal that serves as the helper of the tag may be determined based on the first type of correspondence 3 and the second identification information of the tag, and optionally, address information of the terminal may be further determined. Specifically, the RFID-H network element determines that a terminal that corresponds to the tag indicated by the second identification information and that is in the first type of correspondence 3 is the helper of the tag. If the address information of the tag is received, the address information of the terminal that serves as the helper of the tag may be determined based on the second type of correspondence 3 and the address information of the tag. After determining the terminal that serves as the helper of the tag, the RFID-H network element may send the first passive internet of things instruction to the UPF network element, and optionally, further send the address information of the terminal, so that the UPF network element sends the first passive internet of things instruction to the terminal, to complete the replacement.

It should be noted that that in FIG. 10a, the passive internet of things server sends the first passive internet of things instruction and either the first identification information or the address information of the tag to the NEF network element, and the RFID-H network element determines the helper of the tag based on the correspondence 3 and either the second identification information or the address information of the tag is used as an example. In another feasible implementation, the passive internet of things server may send the first passive internet of things instruction and first identification information of the access network device to the NEF network element. Correspondingly, the RFID-H network element may receive the first passive internet of things instruction and second identification information of the access network device from the NEF network element, and determine, based on a correspondence 2 or the foregoing correspondence 4 (refer to step S905) and from a terminal served by the access network device, the terminal that serves as the helper of the tag. Alternatively, the RFID-H network element may determine, based on the correspondence 4 and from a terminal served by the access network device, the address information of the terminal that serves as the helper of the tag. Optionally, the RFID-H network element may receive second information from the AMF network element that serves the terminal, where the second information indicates the access network device that serves the terminal; and learn of a correspondence 2 based on the second information, and then obtain the address information of the terminal from the SMF network element, to obtain the correspondence 4. The second information may include the identification information of the terminal and identification information of the access network device.

Step S1005: The RFID-H network element sends the first passive internet of things instruction to the UPF network element. Optionally, the address information of the terminal is further sent.

After determining the terminal that serves as the helper of the tag, the RFID-H network element may further obtain the address information of the terminal, determine the UPF network element, and send the first passive internet of things instruction to the determined UPF network element. Optionally, the address information of the terminal is further sent to the determined UPF network element, so that the UPF network element may send the first passive internet of things instruction to the terminal through a user plane channel (for example, a PDU session, a user plane connection, a session tunnel, or the like) of the terminal based on an N6 connection or the address information of the terminal, to complete the replacement.

In a first possible implementation, the RFID-H network element may send the first passive internet of things instruction to the UPF network element corresponding to the terminal. Optionally, the address information of the terminal is further sent. The RFID-H network element may learn of, in the following manner, the UPF network element corresponding to the terminal: Manner 1: The RFID-H network element obtains, from the SMF network element, address information of the UPF network element corresponding to the terminal. Manner 2: The RFID-H network element may learn of, through a procedure for establishing the PDU session of the terminal, address information of the UPF network element corresponding to the terminal. For details of the procedure, refer to FIG. 9d.

In a second possible implementation, the RFID-H network element may send the first passive internet of things instruction and the address information of the terminal to the UPF network element corresponding to the tag. The RFID-H network element may learn of, in the following manner, the UPF network element corresponding to the tag: Manner 1: The RFID-H network element obtains, from the SMF network element, address information of the UPF network element corresponding to the tag. Manner 2: The RFID-H network element may learn of, through a procedure in which the access network device establishes a PDU session for the tag, the UPF network element corresponding to the tag. For details of the procedure, refer to FIG. 9c. Manner 3: The RFID-H network element determines, based on configured or stored information about the UPF network element, the UPF network element corresponding to the tag.

It should be noted that that in FIG. 10a, the RFID-H network element determines the helper of the tag based on the correspondence 3 is used as an example. In another feasible implementation, the RFID-H network element may alternatively determine, based on the correspondence 1, the terminal that serves as the helper of the tag, and then send the first passive internet of things instruction to the UPF network element through an N6 connection corresponding to the terminal (or send the first passive internet of things instruction and the identification information of the terminal to the UPF network element). After receiving the first passive internet of things instruction, the UPF network element obtains the address information of the terminal based on the N6 connection or the identification information of the terminal (where for example, the UPF network element obtains the address information of the terminal from the SMF network element), and then sends the first passive internet of things instruction to the terminal through the PDU session of the terminal.

Step S1006: The UPF network element sends the first passive internet of things instruction to the terminal through the PDU session of the terminal.

After receiving the first passive internet of things instruction, and optionally, further receiving the address information of the terminal, the UPF network element may send the first passive internet of things instruction to the terminal based on the N6 connection or the address information of the terminal through the user plane channel (for example, the PDU session, the user plane connection, the session tunnel, or the like) of the terminal (which is the helper).

Step S1007: The terminal sends an excitation signal and the first passive internet of things instruction to the tag.

Step S1008: The tag sends a response to the first passive internet of things instruction to the access network device, where the response includes fourth identification information of the tag and/or data stored in the tag.

Step S1009: The access network device sends the response to the UPF network element through a user plane channel of the tag, where the response includes the fourth identification information of the tag and/or the data stored in the tag.

Step S1010: The UPF network element sends the response to the RFID-H network element, where the response includes the fourth identification information of the tag and/or the data stored in the tag.

Step S1011: The RFID-H network element sends the response to the NEF network element, where the response includes the fourth identification information of the tag and/or the data stored in the tag.

Step S1012: The NEF network element sends the response to the passive internet of things server, where the response includes the fourth identification information of the tag and/or the data stored in the tag.

It should be noted that for an execution process of steps S1007 to S1012, refer to specific descriptions in steps S907 to S912 in FIG. 9a. Details are not described herein again.

Implementation of this embodiment of this application can produce at least the beneficial effects set forth in the foregoing embodiment in FIG. 9a. Details are not described herein again.

Corresponding to the methods provided in the foregoing method embodiments, corresponding apparatuses are further provided in embodiments of this application, and include corresponding modules configured to perform the foregoing embodiments. The module may be software, may be hardware, or may be a combination of software and hardware.

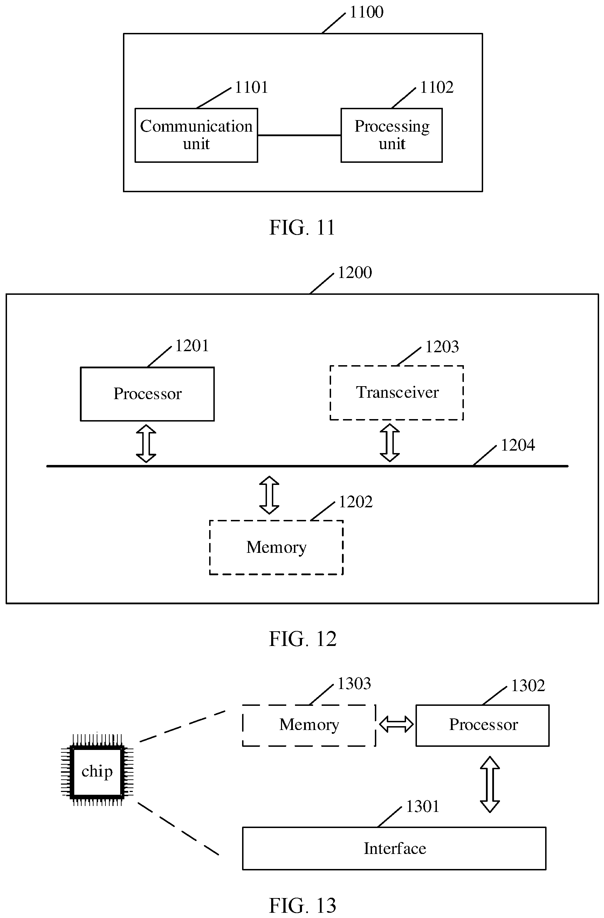

FIG. 11 is a schematic diagram of a structure of a communication apparatus according to this application. The communication apparatus 1100 shown in FIG. 11 includes a communication unit 1101 and a processing unit 1102.

In a design, the communication apparatus 1100 is a network device, and the network device may be the access network device, the mobility management network element, the passive internet of things network element, or the user plane function network element in the foregoing embodiments.

For example, the processing unit 1102 is configured to invoke the communication unit 1101 to receive a first passive internet of things instruction, and send the first passive internet of things instruction to a terminal. The first passive internet of things instruction is an instruction to be sent to a tag, and the terminal is a helper of the tag.

In an implementation, the processing unit 1102 is further configured to learn that the terminal is a helper.

In an implementation, the communication apparatus 1100 is an access network device that serves the terminal. When learning that the terminal is the helper, the processing unit 1102 is specifically configured to: invoke the communication unit 1101 to receive first indication information from the terminal or a mobility management network element that serves the terminal, where the first indication information indicates that the terminal is the helper.

In an implementation, the communication apparatus 1100 is a mobility management network element that serves the terminal. When learning that the terminal is the helper, the processing unit 1102 is specifically configured to: invoke the communication unit 1101 to receive, from a unified data management network element, information indicating that the terminal is the helper; or invoke the communication unit 1101 to receive second indication information from the terminal, where the second indication information indicates that the terminal is the helper.

In an implementation, the second indication information is included in a registration message or an N2 message.

In an implementation, the processing unit 1102 is further configured to determine that the helper of the tag is the terminal.

In an implementation, the first passive internet of things instruction received by the communication unit 1101 is included in a first message, and the first message further includes identification information or address information of the tag; and when determining that the helper of the tag is the terminal, the processing unit 1102 is specifically configured to: determine, based on the identification information or the address information of the tag, that the helper of the tag is the terminal.

In an implementation, the processing unit 1102 is further configured to invoke the communication unit 1101 to receive, via control plane signaling of the tag, first information from an access network device that serves the terminal, where the first information indicates that there is a correspondence between the terminal and the tag, the correspondence is for determining that the terminal is the helper of the tag, and the communication apparatus 1100 is a mobility management network element that serves the terminal. Alternatively, the processing unit 1102 is further configured to invoke the communication unit 1101 to receive first information from a mobility management network element or a session management function network element that serves the terminal, where the communication apparatus 1100 is a user plane function network element or a passive internet of things network element.

In an implementation, the first information includes identification information of the terminal and identification information of the tag; and/or the first information includes address information of the terminal and address information of the tag.

In an implementation, the communication apparatus 1100 is a mobility management network element that serves the terminal, a user plane function network element, or a passive internet of things network element. The first passive internet of things instruction received by the communication unit 1101 is included in a first message, and the first message further includes identification information of an access network device. The terminal is one or more of terminals served by the access network device.

In an implementation, the communication apparatus 1100 is the user plane function network element or the passive internet of things network element. The processing unit 1102 is further configured to invoke the communication unit 1101 to receive second information from the mobility management network element that serves the terminal, where the second information indicates that the access network device serves the terminal.

In an implementation, the communication apparatus 1100 is the access network device that serves the terminal. The processing unit 1102 is further configured to invoke the communication unit 1101 to: receive a response to the first passive internet of things instruction from the tag, where the response includes identification information of the tag; and send, via control plane signaling of the tag, the response to the mobility management network element that serves the terminal.

In an implementation, the control plane signaling of the tag includes non-access stratum signaling of the tag. If the tag is inventoried or scanned for the first time, the processing unit 1102 is further configured to invoke the communication unit 1101 to: send a registration request message to the mobility management network element, where the registration request message requests to establish a non-access stratum connection for the tag; and receive a registration accept message from the mobility management network element, where the registration accept message indicates that the non-access stratum connection is successfully established for the tag.

In an implementation, the communication apparatus 1100 is the access network device that serves the terminal or the mobility management network element that serves the terminal. When invoking the communication unit 1101 to send the first passive internet of things instruction to the terminal, the processing unit 1102 is specifically configured to: invoke the communication unit 1101 to send the first passive internet of things instruction to the terminal via control plane signaling of the terminal.

In an implementation, the control plane signaling of the terminal indicates the terminal to send the first passive internet of things instruction to the tag.

In an implementation, the communication apparatus 1100 is the user plane function network element or the passive internet of things network element. The first passive internet of things instruction received by the communication unit 1101 is included in a first packet, and a destination address of the first packet is an address of the tag. The first passive internet of things instruction sent by the communication unit 1101 to the terminal is included in a second packet, and a destination address of the second packet is an address of the terminal.

In an implementation, when the processing unit 1102 is configured to invoke the communication unit 1101 to send the first passive internet of things instruction to the terminal, the processing unit 1102 is specifically configured to: invoke the communication unit 1101 to send the first passive internet of things instruction to the terminal through a user plane channel of the terminal.

When the communication apparatus 1100 is the network device, the communication apparatus 1100 is configured to implement functions of the network device in the embodiments corresponding to FIG. 2 to FIG. 10a.

In a design, the communication apparatus 1100 is the terminal, the pole site, the small cell, the micro base station, or the base station in the foregoing embodiments.

For example, the processing unit 1102 is configured to invoke the communication unit 1101 to receive a first passive internet of things instruction from a network device, where the first passive internet of things instruction is an instruction to be sent to a tag. The processing unit 1102 is further configured to invoke the communication unit 1101 to send an excitation signal and the first passive internet of things instruction to the tag.

In an implementation, the communication unit 1101 is further configured to send indication information to an access network device that serves the communication apparatus 1100 or a mobility management network element that serves the communication apparatus 1100, where the indication information indicates that the communication apparatus 1100 is a helper.

In an implementation, the network device is the access network device that serves the communication apparatus 1100 or the mobility management network element that serves the communication apparatus 1100. When the processing unit 1102 is configured to invoke the communication unit 1101 to receive the first passive internet of things instruction from the network device, the processing unit 1102 is specifically configured to: invoke the communication unit 1101 to receive the first passive internet of things instruction from the network device via control plane signaling of the terminal.

In an implementation, the control plane signaling of the terminal indicates the terminal to send the first passive internet of things instruction to the tag.

In an implementation, the network device is a user plane function network element or a passive internet of things network element. When the processing unit 1102 is configured to invoke the communication unit 1101 to receive the first passive internet of things instruction from the network device, the processing unit 1102 is specifically configured to: invoke the communication unit 1101 to receive the first passive internet of things instruction from the network device through a user plane channel of the terminal.

When the communication apparatus 1100 is the terminal, the pole site, the small cell, the micro base station, or the base station, the communication apparatus 1100 is configured to implement functions of the terminal in the embodiments corresponding to FIG. 2 to FIG. 10a.

In a design, the communication apparatus 1100 is a first unit in an access network.

For example, the processing unit 1102 is configured to invoke the communication unit 1101 to receive a first passive internet of things instruction, where the first passive internet of things instruction is an instruction to be sent to a tag. The processing unit 1102 is further configured to invoke the communication unit 1101 to send a trigger instruction to a third unit in the access network, where the trigger instruction includes the first passive internet of things instruction and identification information of a terminal, and the terminal is a helper of the tag.

When the communication apparatus 1100 is the first unit in the access network, the communication apparatus 1100 is configured to implement a function of the first unit in the embodiment corresponding to FIG. 4.

In a design, the communication apparatus 1100 is a third unit in an access network.

For example, the processing unit 1102 is configured to invoke the communication unit 1101 to receive a trigger instruction, where the trigger instruction includes a first passive internet of things instruction and identification information of a terminal, and the terminal is a helper of a tag. The processing unit is further configured to invoke the communication unit to send the first passive internet of things instruction to the terminal.

When the communication apparatus 1100 is the third unit in the access network, the communication apparatus 1100 is configured to implement a function of the third unit in the embodiment corresponding to FIG. 4.

In a design, the communication apparatus 1100 is a second unit in an access network.

For example, the processing unit 1102 is configured to invoke the communication unit 1101 to receive a first passive internet of things instruction, where the first passive internet of things instruction is an instruction to be sent to a tag. The processing unit 1102 is further configured to invoke the communication unit 1101 to send the first passive internet of things instruction to a first unit in the access network.

When the communication apparatus 1100 is the second unit in the access network, the communication apparatus 1100 is configured to implement a function of the second unit in the embodiment corresponding to FIG. 4.

FIG. 12 is a schematic diagram of a structure of another communication apparatus according to this application. The communication apparatus 1200 shown in FIG. 12 includes at least one processor 1201, a memory 1202, and a transceiver 1203.

The memory 1202 may be a volatile memory, for example, a random access memory. Alternatively, the memory may be a non-volatile memory, for example, a read-only memory, a flash memory, a hard disk drive (hard disk drive, HDD), or a solid-state drive (solid-state drive, SSD). Alternatively, the memory 1202 is any other medium that can carry or store expected program code in a form of an instruction or a data structure and that can be accessed by a computer. However, the memory 1202 is not limited thereto. The memory 1202 may be a combination of the foregoing memories.

A specific connection medium between the processor 1201, the memory 1202, and the transceiver 1203 is not limited in this embodiment of this application. In this embodiment of this application, the transceiver 1203, the memory 1202, and the processor 1201 are connected via a bus 1204 in the figure, the bus 1204 is represented by a bold line in the figure, and a manner of connection between other components is merely an example for description, and is not limited thereto. The bus 1204 may be classified as an address bus, a data bus, a control bus, or the like. For ease of representation, only one bold line represents the bus in FIG. 12, but this does not mean that there is only one bus or only one type of bus.

The processor 1201 may have a data transceiver function, and can communicate with another device. In the apparatus shown in FIG. 12, an independent data communication unit, for example, the transceiver 1203, may be disposed, and is configured to receive and send data. When communicating with the another device, the processor 1201 may perform data transmission through the transceiver 1203.

It should be noted that dashed boxes in FIG. 12 indicate that the transceiver 1203 and the processor 1201 may be separately disposed, or the transceiver 1203 may be integrated into the processor 1201; and the memory 1202 and the processor 1201 may be separately disposed, or the memory 1202 may be integrated into the processor 1201.

In an example, when a network device (for example, an access network device, a mobility management network element, a passive internet of things network element, or a user plane function network element) uses the form shown in FIG. 12, the processor in FIG. 12 may invoke computer-executable instructions stored in the memory 1202, so that the network device (for example, the access network device, the mobility management network element, the passive internet of things network element, or the user plane function network element) performs the method performed by the network device in any one of the foregoing method embodiments.

In an example, when a terminal (or a pole site, a small cell, a micro base station, or a base station) uses the form shown in FIG. 12, the processor in FIG. 12 may invoke computer-executable instructions stored in the memory 1202, so that the terminal (or the pole site, the small cell, the micro base station, or the base station) performs the method performed by the terminal in any one of the foregoing method embodiments.

In an example, when a first unit in an access network uses the form shown in FIG. 12, the processor in FIG. 12 may invoke computer-executable instructions stored in the memory 1202, so that the first unit performs the method performed by the first unit in the method embodiment corresponding to FIG. 4.

In an example, when a second unit in an access network uses the form shown in FIG. 12, the processor in FIG. 12 may invoke computer-executable instructions stored in the memory 1202, so that the second unit performs the method performed by the second unit in the method embodiment corresponding to FIG. 4.

In an example, when a third unit in an access network uses the form shown in FIG. 12, the processor in FIG. 12 may invoke computer-executable instructions stored in the memory 1202, so that the third unit performs the method performed by the third unit in the method embodiment corresponding to FIG. 4.

Specifically, functions/implementation processes of both the processing unit and the communication unit in FIG. 11 may be implemented by the processor 1201 in FIG. 12 by invoking the computer-executable instructions stored in the memory 1202. Alternatively, a function/an implementation process of the processing unit in FIG. 11 may be implemented by the processor 1201 in FIG. 12 by invoking the computer-executable instructions stored in the memory 1202, and a function/an implementation process of the communication unit in FIG. 11 may be implemented by the transceiver 1203 in FIG. 12.

In an implementation, the communication apparatus 1200 may include a circuit, and the circuit may implement the sending, receiving, or communication function in the foregoing method embodiments. The processor described in this application may be implemented in the following manner: an integrated circuit (integrated circuit, IC), an analog IC, a radio frequency integrated circuit (RFIC), a mixed-signal IC, an application-specific integrated circuit (application-specific integrated circuit, ASIC), a printed circuit board (printed circuit board, PCB), an electronic device, or the like. The processor may alternatively be manufactured by using the following IC process technology, for example, a complementary metal oxide semiconductor (complementary metal oxide semiconductor, CMOS), an N-channel metal oxide semiconductor (N-channel Metal-oxide-semiconductor, NMOS), a P-channel metal oxide semiconductor (positive channel metal oxide semiconductor, PMOS), a bipolar junction transistor (bipolar junction transistor, BJT), a bipolar CMOS (BiCMOS), silicon germanium (SiGe), gallium arsenide (GaAs), and the like.

The communication apparatus described in the foregoing embodiments may be the access network device, the mobility management network element, the passive internet of things network element, the user plane function network element, the terminal, the pole site, the small cell, the micro base station, the base station, or the like. However, a range of the communication apparatus described in this application is not limited thereto, and a structure of the communication apparatus may not be limited by FIG. 12. The communication apparatus may be an independent device or may be a part of a large device. For example, the communication apparatus may be:
(1) an independent integrated circuit IC, a chip, or a chip system or subsystem;
(2) a set having one or more ICs, where optionally, the IC set may also include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

When the communication apparatus may be the chip or the chip system, refer to a schematic diagram of a structure of a chip, namely, FIG. 13. The chip shown in FIG. 13 includes an interface 1301 and a processor 1302. There may be one or more interfaces 1301, and there may be a plurality of processors 1302.

When the chip is configured to implement a function of the network device (the access network device, the mobility management network element, the passive internet of things network element, or the user plane function network element) in embodiments of this application, the processor 1302 is configured to invoke the interface 1301 to receive a first passive internet of things instruction, and send the first passive internet of things instruction to a terminal, where the first passive internet of things instruction is an instruction to be sent to a tag, and the terminal is a helper of the tag.

Specifically, in this case, for operations performed by the interface 1301 and the processor 1302, refer to descriptions related to the network device in the embodiments corresponding to FIG. 2 to FIG. 10a.

When the chip is configured to implement a function of the terminal (or the pole site, the small cell, the micro base station, or the base station) in embodiments of this application, the processor 1302 is configured to invoke the interface 1301 to receive a first passive internet of things instruction from a network device, where the first passive internet of things instruction is an instruction to be sent to a tag; and the processor 1302 is further configured to invoke the interface 1301 to send an excitation signal and the first passive internet of things instruction to the tag.

Specifically, in this case, for operations performed by the interface 1301 and the processor 1302, refer to descriptions related to the terminal in the embodiments corresponding to FIG. 2 to FIG. 10a.

When the chip is configured to implement a function of the first unit in the access network in embodiments of this application, the processor 1302 is configured to invoke the interface 1301 to receive a first passive internet of things instruction, where the first passive internet of things instruction is an instruction to be sent to a tag; and the processor 1302 is further configured to invoke the interface 1301 to send a trigger instruction to a third unit in the access network, where the trigger instruction includes the first passive internet of things instruction and identification information of a terminal, and the terminal is a helper of the tag.

Specifically, in this case, for operations performed by the interface 1301 and the processor 1302, refer to descriptions related to the first unit in the embodiment corresponding to FIG. 4.

When the chip is configured to implement a function of the third unit in the access network in embodiments of this application, the processor 1302 is configured to invoke the interface 1301 to receive a trigger instruction, where the trigger instruction includes a first passive internet of things instruction and identification information of a terminal, and the terminal is a helper of a tag; and the processor 1302 is further configured to invoke the interface 1301 to send the first passive internet of things instruction to the terminal.

Specifically, in this case, for operations performed by the interface 1301 and the processor 1302, refer to descriptions related to the third unit in the embodiment corresponding to FIG. 4.

When the chip is configured to implement a function of the second unit in the access network in embodiments of this application, the processor 1302 is configured to invoke the interface 1301 to receive a first passive internet of things instruction, where the first passive internet of things instruction is an instruction to be sent to a tag; and the processor 1302 is further configured to invoke the interface 1301 to send the first passive internet of things instruction to a first unit in the access network.

Specifically, in this case, for operations performed by the interface 1301 and the processor 1302, refer to descriptions related to the second unit in the embodiment corresponding to FIG. 4.

Optionally, the chip further includes a memory 1303, and the memory 1303 is configured to store a necessary computer program and necessary data. The memory 1303 may be separately disposed, or may be integrated with the processor 1302, as shown in a dashed box 1303 in FIG. 13.

A person skilled in the art may further understand that various illustrative logical blocks (illustrative logic blocks) and steps (steps) that are enumerated in embodiments of this application may be implemented by using electronic hardware, computer software, or a combination thereof. Whether the functions are implemented by using hardware or software depends on particular applications and a design requirement of the entire system. A person skilled in the art may use various methods to implement the described function for each particular application, but it should not be considered that the implementation goes beyond the protection scope of embodiments of this application.

An embodiment of this application further provides an information transmission system. The system may include one or more of the access network device, the mobility management network element, the passive internet of things network element, the user plane function network element, the first unit, the second unit, and the third unit in the embodiments corresponding to FIG. 2 to FIG. 10a. Optionally, the passive internet of things server in the embodiments corresponding to FIG. 2 to FIG. 10a is further included. Optionally, the session management function network element in the embodiments corresponding to FIG. 9a to FIG. 10a is further included. Optionally, the terminal in the embodiments corresponding to FIG. 2 to FIG. 10a is further included. Optionally, the tag in the embodiments corresponding to FIG. 2 to FIG. 10a is further included.

This application further provides a computer-readable storage medium, where the computer-readable storage medium stores a computer program, and the computer program includes program instructions. When the program instructions are executed by a computer, a function in any one of the foregoing method embodiments is implemented.

The computer-readable storage medium includes but is not limited to a flash memory, a hard disk, and a solid-state drive.

This application further provides a computer program product. When the computer program product is executed by a computer, a function in any one of the foregoing method embodiments is implemented.

It may be understood that, some optional features in embodiments of this application may be independently implemented in some scenarios without depending on another feature, for example, a solution that the optional feature is currently based on, to resolve a corresponding technical problem and achieve a corresponding effect; or may be combined with another feature based on a requirement in some scenarios. Correspondingly, the apparatuses provided in embodiments of this application may also correspondingly implement these features or functions. Details are not described herein again.

A person skilled in the art may further understand that various illustrative logical blocks (illustrative logic blocks) and steps (steps) that are enumerated in embodiments of this application may be implemented by using electronic hardware, computer software, or a combination thereof. Whether the functions are implemented by using hardware or software depends on particular applications and a design requirement of the entire system. A person skilled in the art may use various methods to implement the described function for a corresponding application, but it should not be considered that the implementation goes beyond the protection scope of embodiments of this application.

The solutions described in this application may be implemented in various manners. For example, these technologies may be implemented by using hardware, software, or a combination thereof. For implementation by using the hardware, a processing unit configured to execute these technologies in a communication apparatus (for example, a base station, a terminal, a network entity, a core network element, or a chip) may be implemented in one or more general-purpose processors, digital signal processors (digital signal processors, DSPs), digital signal processing components, application-specific integrated circuits (application-specific integrated circuits, ASICs), programmable logic devices, field programmable gate arrays (field programmable gate arrays, FPGAs) or other programmable logic apparatuses, discrete gates or transistor logic, discrete hardware components, or any combination thereof. The general-purpose processor may be a microprocessor. Optionally, the general-purpose processor may alternatively be any conventional processor, controller, microcontroller, or state machine. The processor may alternatively be achieved through a combination of computing apparatuses, such as a digital signal processor and a microprocessor, multiple microprocessors, one or more microprocessors and one digital signal processor core, or any other similar configurations.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example rather than limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these memories and any other memory of an appropriate type.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave, or the like) manner. The computer-readable storage medium may be any usable medium accessible by the computer, or a data storage device, such as a server, a data center, or the like, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid-state drive (solid-state drive, SSD)), or the like.

It may be understood that the "embodiment" mentioned in the entire specification means that particular features, structures, or characteristics related to embodiments are included in at least one embodiment of this application. Therefore, embodiments in the entire specification do not necessarily refer to a same embodiment. In addition, these particular features, structures, or characteristics may be combined in one or more embodiments in any suitable manner. It may be understood that sequence numbers of the foregoing processes do not mean execution sequences in various embodiments of this application. The execution sequences of the processes should be determined according to functions and internal logic of the processes, and should not be construed as any limitation on implementation processes of embodiments of this application.

It may be understood that, in this application, "when" and "if" both mean that the apparatus performs corresponding processing in an objective case instead of limited time, do not require a determining action during an implementation performed by apparatus, and do not mean that there is another limitation.

In this application, an element in a singular form is intended to indicate "one or more" instead of "one and only one", unless otherwise specified. In this application, unless otherwise specified, "at least one" indicates "one or more", and "a plurality of" indicates "two or more".

In addition, the terms "system" and "network" may be used interchangeably in this specification. The term "and/or" in this specification describes only an association relationship between associated objects and represents that three relationships may exist. For example, A and/or B may represent the following three cases: Only A exists, both A and B exist, and only B exists. A may be singular or plural, and B may be singular or plural.

Pre-definition in this application may be understood as definition, pre-definition, storage, pre-storage, pre-negotiation, pre-configuration, solidification, or pre-burning.

A person of ordinary skill in the art may understand that, for the purpose of convenient and brief description, for a detailed working process of the foregoing system, apparatus, and unit, refer to a corresponding process in the foregoing method embodiments, and details are not described herein again.

For same or similar parts in embodiments of this application, reference may be made to each other. In embodiments of this application and the implementations/implementation methods in embodiments, unless otherwise specified and a logical conflict occurs, terms and/or descriptions in different embodiments and in the implementations/implementation methods in embodiments are consistent and may be mutually referenced, and technical features in different embodiments and implementations/implementation methods in embodiments may be combined to form a new embodiment, implementation, or implementation method according to an internal logical relationship thereof. The foregoing implementations of this application do not limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. An information transmission method, wherein the method comprises:
receiving, by a network device, a first passive internet of things instruction, wherein the first passive internet of things instruction is an instruction to be sent to a tag; and
sending, by the network device, the first passive internet of things instruction to a terminal, wherein the terminal is a helper of the tag.

2. The method according to claim 1, wherein the method further comprises:
learning, by the network device, that the terminal is a helper.

3. The method according to claim 2, wherein the network device is an access network device that serves the terminal; and
the learning, by the network device, that the terminal is a helper comprises:
receiving, by the network device, first indication information from the terminal or a mobility management network element that serves the terminal, wherein the first indication information indicates that the terminal is the helper.

4. The method according to claim 2, wherein the network device is a mobility management network element that serves the terminal; and
the learning, by the network device, that the terminal is a helper comprises:
receiving, by the network device from a unified data management network element, information indicating that the terminal is the helper; or
receiving, by the network device, second indication information from the terminal, wherein the second indication information indicates that the terminal is the helper.

5. The method according to claim 4, wherein the second indication information is comprised in a registration message or an N2 message.

6. The method according to claim 1 or 2, wherein the method further comprises:
determining, by the network device, that the helper of the tag is the terminal.

7. The method according to claim 6, wherein the first passive internet of things instruction received by the network device is comprised in a first message, and the first message further comprises identification information or address information of the tag; and the determining, by the network device, that the helper of the tag is the terminal comprises:
determining, by the network device based on the identification information or the address information of the tag, that the helper of the tag is the terminal.

8. The method according to claim 7, wherein the method further comprises:
receiving, by the network device via control plane signaling of the tag, first information from an access network device that serves the terminal, wherein the first information indicates that there is a correspondence between the terminal and the tag, the correspondence is for determining that the terminal is the helper of the tag, and the network device is a mobility management network element that serves the terminal; or
receiving, by the network device, the first information from a mobility management network element or a session management function network element that serves the terminal, wherein the network device is a user plane function network element or a passive internet of things network element.

9. The method according to claim 8, wherein
the first information comprises identification information of the terminal and identification information of the tag; and/or the first information comprises address information of the terminal and address information of the tag.

10. The method according to claim 6, wherein the network device is a mobility management network element that serves the terminal, a user plane function network element, or a passive internet of things network element; the first passive internet of things instruction received by the network device is comprised in a first message, and the first message further comprises identification information of an access network device; and the terminal is one or more of terminals served by the access network device.

11. The method according to claim 10, wherein the network device is the user plane function network element or the passive internet of things network element; and the method further comprises:
receiving, by the network device, second information from the mobility management network element that serves the terminal, wherein the second information indicates that the access network device serves the terminal.

12. The method according to any one of claims 1 to 3 or claim 6 or 7, wherein the network device is the access network device that serves the terminal; and the method further comprises:
receiving, by the network device, a response to the first passive internet of things instruction from the tag, wherein the response comprises identification information of the tag; and
sending, by the network device via control plane signaling of the tag, the response to the mobility management network element that serves the terminal.

13. The method according to claim 12, wherein the control plane signaling of the tag comprises non-access stratum signaling of the tag; and the method further comprises:
if the tag is inventoried or scanned for the first time, sending, by the network device, a registration request message to the mobility management network element, wherein the registration request message requests to establish a non-access stratum connection for the tag; and
receiving, by the network device, a registration accept message from the mobility management network element, wherein the registration accept message indicates that the non-access stratum connection is successfully established for the tag.

14. The method according to any one of claims 1 to 10 or claim 12 or 13, wherein the network device is the access network device that serves the terminal or the mobility management network element that serves the terminal; and the sending, by the network device, the first passive internet of things instruction to a terminal comprises:
sending, by the network device, the first passive internet of things instruction to the terminal via control plane signaling of the terminal.

15. The method according to claim 14, wherein the control plane signaling of the terminal indicates the terminal to send the first passive internet of things instruction to the tag.

16. The method according to claim 1 or 2 or any one of claims 6 to 9, wherein the network device is the user plane function network element or the passive internet of things network element; the first passive internet of things instruction received by the network device is comprised in a first packet, and a destination address of the first packet is an address of the tag; and the first passive internet of things instruction sent by the network device to the terminal is comprised in a second packet, and a destination address of the second packet is an address of the terminal.

17. The method according to claim 16, wherein the sending, by the network device, the first passive internet of things instruction to a terminal comprises:
sending, by the network device, the first passive internet of things instruction to the terminal through a user plane channel of the terminal.

18. An information transmission method, wherein the method comprises:
receiving, by a communication apparatus, a first passive internet of things instruction from a network device, wherein the first passive internet of things instruction is an instruction to be sent to a tag; and
sending, by the communication apparatus, an excitation signal and the first passive internet of things instruction to the tag.

19. The method according to claim 18, wherein the method further comprises:
sending, by the communication apparatus, indication information to an access network device that serves the communication apparatus or a mobility management network element that serves the communication apparatus, wherein the indication information indicates that the communication apparatus is a helper.

20. The method according to claim 18 or 19, wherein the network device is the access network device that serves the communication apparatus or the mobility management network element that serves the communication apparatus; and the receiving, by a communication apparatus, a first passive internet of things instruction from a network device comprises:
receiving, by the communication apparatus, the first passive internet of things instruction from the network device via control plane signaling of the communication apparatus.

21. The method according to claim 20, wherein the control plane signaling of the communication apparatus indicates the communication apparatus to send the first passive internet of things instruction to the tag.

22. The method according to claim 18 or 19, wherein the network device is a user plane function network element or a passive internet of things network element; and the receiving, by a communication apparatus, a first passive internet of things instruction from a network device comprises:
receiving, by the communication apparatus, the first passive internet of things instruction from the network device through a user plane channel of the communication apparatus.

23. An information transmission system, wherein the system comprises the network device according to any one of claims 1 to 17.

24. The system according to claim 23, wherein the system further comprises a passive internet of things network element, and the network device is a mobility management network element that serves a terminal, wherein
the passive internet of things network element is configured to determine that the terminal is a helper of a tag, and send identification information of the terminal to the network device; and
the network device is configured to receive the identification information of the terminal from the passive internet of things network element.

25. The system according to claim 24, wherein
the network device is further configured to send third information to the passive internet of things network element, wherein the third information indicates that there is a correspondence between the terminal and the tag; and
the passive internet of things network element is specifically configured to determine, based on the correspondence, that the terminal is the helper of the tag.

26. The system according to claim 24, wherein
the network device is further configured to send fourth information to the passive internet of things network element, wherein the fourth information indicates an access network device that serves the terminal;
the passive internet of things network element is further configured to receive the fourth information; and
the passive internet of things network element is further configured to receive identification information of the access network device, and determine, based on the identification information of the access network device and the fourth information, that the terminal is the helper of the tag, wherein the terminal is one or more of terminals served by the access network device.

27. The system according to claim 23, wherein the system further comprises a session management function network element, and the network device is a user plane function network element or a passive internet of things network element, wherein
the session management function network element is configured to request, from a mobility management network element that serves a terminal, identification information of the terminal and identification information of a tag corresponding to the terminal, and send the identification information of the terminal and the identification information of the tag corresponding to the terminal to the network device; and
the network device is configured to receive, from the session management function network element, the identification information of the terminal and the identification information of the tag corresponding to the terminal, and determine, based on the identification information of the terminal and the identification information of the tag corresponding to the terminal, that the terminal is a helper of the tag.

28. A network device, comprising a unit configured to perform the method according to any one of claims 1 to 17.

29. A communication apparatus, comprising a unit configured to perform the method according to any one of claims 18 to 22.

30. A network device, wherein the network device comprises a processor and a memory, the memory stores program instructions, and the processor executes the program instructions stored in the memory, to enable the network device to perform the method according to any one of claims 1 to 17.

31. A communication apparatus, wherein the apparatus comprises a processor and a memory, the memory stores program instructions, and the processor executes the program instructions stored in the memory, to enable the apparatus to perform the method according to any one of claims 18 to 22.

32. A computer-readable storage medium, wherein the computer-readable storage medium stores a computer program, and the computer program comprises program instructions; and when the program instructions are executed, the method according to any one of claims 1 to 17 or claims 18 to 22 is performed.
